(19) Europäisches Patentamt
European Patent Office
Office européen des brevets

(11) **EP 4 716 324 A1**

(12) **EUROPEAN PATENT APPLICATION**
published in accordance with Art. 153(4) EPC

(43) Date of publication:
**25.03.2026 Bulletin 2026/13**

(21) Application number: **24835388.0**

(22) Date of filing: **04.07.2024**

(51) International Patent Classification (IPC):
*H04W 64/00* (2009.01)

(52) Cooperative Patent Classification (CPC):
**H04L 5/00; H04W 64/00; H04W 72/0446;**
**H04W 72/0453; H04W 72/25**

(86) International application number:
**PCT/CN2024/103501**

(87) International publication number:
**WO 2025/007908 (09.01.2025 Gazette 2025/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 04.07.2023  CN 202310816526
04.08.2023  CN 202310986421
26.09.2023  CN 202311258445

(71) Applicant: **Huawei Technologies Co., Ltd.**
**Shenzhen, Guangdong 518129 (CN)**

(72) Inventors:
• **LI, Chao**
**Shenzhen, Guangdong 518129 (CN)**
• **YAO, Chuting**
**Shenzhen, Guangdong 518129 (CN)**
• **LI, Jun**
**Shenzhen, Guangdong 518129 (CN)**
• **HUANG, Su**
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **COMMUNICATION METHOD AND COMMUNICATION APPARATUS**

(57) This application provides a communication method and a communication apparatus. The method includes: A first communication apparatus obtains an identifier of a first resource, where the first resource is used for transmission of a reference signal, for example, a sidelink positioning reference signal, and the identifier of the first resource is determined based on at least one of the following: a length of a time domain resource available for transmission of the sidelink positioning reference signal, a start position of a time domain resource for transmission of the sidelink positioning reference signal, and a length of the time domain resource for transmission of the sidelink positioning reference signal; and the first communication apparatus sends the sidelink positioning reference signal on the first resource. In view of this, a unified manner of generating an identifier of a resource of a sidelink positioning reference signal can be designed, so that the resource of the sidelink positioning reference signal can be flexibly indicated.

FIG. 7

**Description**

This application claims priorities to Chinese Patent Application No. 202310816526.6, filed with the China National Intellectual Property Administration on July 4, 2023 and entitled "RESOURCE INDICATION METHOD AND DEVICE", to Chinese Patent Application No. 202310986421.5, filed with the China National Intellectual Property Administration on August 4, 2023 and entitled "COMMUNICATION METHOD AND COMMUNICATION APPARATUS", and to Chinese Patent Application No. 202311258445.5, filed with the China National Intellectual Property Administration on September 26, 2023 and entitled "COMMUNICATION METHOD AND COMMUNICATION APPARATUS", all of which are incorporated herein by reference in their entireties.

**TECHNICAL FIELD**

This application relates to the communication field, and more specifically, to a communication method and a communication apparatus.

**BACKGROUND**

In daily life and applications, location information has become increasingly important basic information. Applications such as a navigation service and a location based service (location based service, LBS) need to provide corresponding services for users based on location information of the users.

Currently, a global navigation satellite system (global navigation satellite system, GNSS) is a common solution for determining location information. Positioning precision of the GNSS may not satisfy requirements of some applications that have high precision requirements.

To resolve this problem, a sidelink positioning technology is proposed in the industry. However, how to determine a resource used for transmission of a sidelink positioning reference signal is a problem of concern in the industry.

**SUMMARY**

This application provides a communication method and a communication apparatus, to flexibly indicate a resource of a sidelink positioning reference signal.

According to a first aspect, a communication method is provided. The method may be performed by a communication apparatus. The communication apparatus may be a communication device (for example, a terminal device), or may be a component (for example, a chip or a circuit) of the communication device. This is not limited. For ease of description, the following uses an example in which the method is performed by a first communication apparatus for description.

The method may include: The first communication apparatus obtains an identifier of a first resource, where the first resource is used for transmission of a sidelink positioning reference signal, and the identifier of the first resource is determined based on at least one of the following: a length of a time domain resource available for transmission of the sidelink positioning reference signal, a start position of a time domain resource used for transmission of the sidelink positioning reference signal, and a length of the time domain resource used for transmission of the sidelink positioning reference signal; and the first communication apparatus sends the sidelink positioning reference signal on the first resource.

According to the foregoing technical solution, the first communication apparatus may obtain the identifier of the first resource, determine the first resource based on the identifier of the first resource, and send the reference signal on the first resource. The identifier of the first resource may be determined based on one or more of the length of the time domain resource available for transmission of the reference signal, the start position of the time domain resource used for transmission of the reference signal, and the length of the time domain resource used for transmission of the reference signal. In this way, for example, an association between an identifier of a resource used for transmission of a reference signal and a start position and a length of the resource may be established, or a relationship between an identifier of a resource used for transmission of a reference signal and a length of a time domain resource available for transmission of the reference signal may be established. Therefore, the resource of the reference signal can be determined and indicated, and the resource of the reference signal can be flexibly indicated. In addition, this manner may be applied to various communication scenarios.

With reference to the first aspect, in some implementations of the first aspect, that the first communication apparatus obtains the identifier of the first resource includes: The first communication apparatus receives first indication information, where the first indication information indicates the identifier of the first resource; and the first communication apparatus determines the identifier of the first resource.

According to the foregoing technical solution, the first communication apparatus may receive the identifier of the

first resource from another apparatus, or may determine the identifier of the first resource. This manner is flexible.

With reference to the first aspect, in some implementations of the first aspect, the length of the time domain resource available for transmission of the sidelink positioning reference signal is determined based on at least one of the following: a length of a time domain resource used for transmission of a physical sidelink shared channel PSSCH, a length of a time domain resource used for transmission of a physical sidelink control channel PSCCH, a length of a time domain resource used for transmission of a physical sidelink feedback channel PSFCH, and a length of a time domain resource used for transmission of a demodulation reference signal DMRS.

According to the foregoing technical solution, for example, a time domain resource available for transmission of a sidelink positioning reference signal in one slot may be a time domain resource in the slot other than a time domain resource used for transmission of a PSCCH, a time domain resource used for transmission of a PSFCH, a time domain resource used for transmission of a DMRS, and the like. For another example, a time domain resource available for transmission of a sidelink positioning reference signal in one slot may be a time domain resource other than a time domain resource used for transmission of another signal in a time domain resource used for transmission of a PSSCH in the slot. The another signal may include but is not limited to a PSFCH, a reference signal other than the sidelink positioning reference signal, a GAP, and the like.

With reference to the first aspect, in some implementations of the first aspect, the length of the time domain resource available for transmission of the sidelink positioning reference signal satisfies any one of the following:

$$Ma = l_d - l_{PSCCH} - X1;$$

$$Ma = l_d - l_{PSCCH} - l_{DMRS} - X2;$$

or

$$Ma = l_d - X3.$$

Ma represents the length of the time domain resource available for transmission of the sidelink positioning reference signal, $l_d$ represents the length of the time domain resource used for transmission of the PSSCH, $l_{PSCCH}$ represents the length of the time domain resource used for transmission of the PSCCH, $l_{DMRS}$ represents the length of the time domain resource used for transmission of the demodulation reference signal DMRS, and X1, X2, and X3 are constants.

With reference to the first aspect, in some implementations of the first aspect, $l_d = l_{SL} - l_{PSFCH}$, where $l_{SL}$ represents a length of a time domain resource used for sidelink transmission, and $l_{PSFCH}$ represents the length of the time domain resource used for transmission of the PSFCH.

With reference to the first aspect, in some implementations of the first aspect, a value of $l_{PSFCH}$ is any one of the following: 0, 1, 2, or 3.

With reference to the first aspect, in some implementations of the first aspect, a value of X1 is any one of the following: 0, 1, 2, or 3.

With reference to the first aspect, in some implementations of the first aspect, a value of X2 is 0 or 1.

With reference to the first aspect, in some implementations of the first aspect, a value of X3 is 0 or 1.

With reference to the first aspect, in some implementations of the first aspect, the method further includes: The first communication apparatus receives second indication information, where the second indication information indicates at least one of the following: the start position of the time domain resource used for transmission of the sidelink positioning reference signal and the length of the time domain resource used for transmission of the sidelink positioning reference signal; or the first communication apparatus determines at least one of the following: the start position of the time domain resource used for transmission of the sidelink positioning reference signal and the length of the time domain resource used for transmission of the sidelink positioning reference signal.

According to the foregoing technical solution, the first communication apparatus may receive, from another apparatus, the start position of the time domain resource used for transmission of the sidelink positioning reference signal and the length of the time domain resource used for transmission of the sidelink positioning reference signal; or may determine the start position of the time domain resource used for transmission of the sidelink positioning reference signal and the length of the time domain resource used for transmission of the sidelink positioning reference signal. This manner is flexible.

With reference to the first aspect, in some implementations of the first aspect, that the first communication apparatus receives the second indication information includes: The first communication apparatus receives first sidelink control information, where the first sidelink control information includes the second indication information.

With reference to the first aspect, in some implementations of the first aspect, the identifier of the first resource is obtained by encoding the length of the time domain resource available for transmission of the sidelink positioning reference signal.

With reference to the first aspect, in some implementations of the first aspect, the identifier of the first resource satisfies any one of the following:

$$n_{id}=S_{start};$$

$$n_{id}=S_{start}+Ma;$$

or

$$n_{id}=S_{start}+2Ma-1.$$

$n_{id}$ represents the identifier of the first resource, $S_{start}$ represents the start position of the time domain resource used for transmission of the sidelink positioning reference signal, and Ma represents the length of the time domain resource available for transmission of the sidelink positioning reference signal.

With reference to the first aspect, in some implementations of the first aspect, the first resource is further determined based on at least one of the following: a time domain resource used for transmission of a sidelink reference signal, a time domain resource used for transmission of sidelink feedback information, and a time domain resource used for transmission of a PSSCH.

The sidelink reference signal indicates a sidelink reference signal other than the sidelink positioning reference signal. In an example, the sidelink reference signal includes at least one of the following: a PT-RS, a CSI-RS, a BM-RS, or a DMRS.

According to the foregoing technical solution, when the first resource is determined, an invalid resource may be further excluded, for example, the time domain resource used for transmission of the sidelink reference signal, the time domain resource used for transmission of the sidelink feedback information, and the time domain resource used for transmission of the PSSCH.

With reference to the first aspect, in some implementations of the first aspect, that the first communication apparatus obtains the identifier of the first resource includes: The first communication apparatus obtains identifiers of N resources by encoding the length of the time domain resource available for transmission of the sidelink positioning reference signal, where N is an integer greater than 1; and the first communication apparatus determines the identifier of the first resource based on the identifiers of the N resources and a preset rule, where the preset rule indicates that the first resource is a continuous resource, and/or the first resource does not include at least one of the following: the time domain resource used for transmission of the sidelink reference signal, the time domain resource used for transmission of the sidelink feedback information, and the time domain resource used for transmission of the PSSCH.

According to the foregoing technical solution, when the identifier of the first resource is determined, invalid encoding may be further excluded according to the preset rule, so that signaling overheads caused by the resource identifier indication can be reduced.

With reference to the first aspect, in some implementations of the first aspect, a value of the identifier of the first resource is W bits, the W bits include a first bit and a second bit, W is an integer greater than 1, and the identifier of the first resource satisfies any one of the following: the first bit of the identifier of the first resource is related to the start position of the time domain resource used for transmission of the sidelink positioning reference signal, and the second bit of the identifier of the first resource is related to the length of the time domain resource used for transmission of the sidelink positioning reference signal; the second bit of the identifier of the first resource is related to the start position of the time domain resource used for transmission of the sidelink positioning reference signal, and the first bit of the identifier of the first resource is related to the length of the time domain resource used for transmission of the sidelink positioning reference signal; or the identifier of the first resource is obtained by jointly encoding the length of the time domain resource used for transmission of the sidelink positioning reference signal and the start position of the time domain resource used for transmission of the sidelink positioning reference signal.

According to the foregoing technical solution, the identifier of the resource of the sidelink positioning reference signal may be determined based on the length of the time domain resource used for transmission of the sidelink positioning reference signal and the start position of the time domain resource used for transmission of the sidelink positioning reference signal.

With reference to the first aspect, in some implementations of the first aspect, the first bit is a most significant bit of the identifier of the first resource, and the second bit is a least significant bit of the identifier of the first resource.

With reference to the first aspect, in some implementations of the first aspect, the method further includes: The first communication apparatus sends third indication information, where the third indication information indicates the first resource or the identifier of the first resource.

With reference to the first aspect, in some implementations of the first aspect, that the first communication apparatus sends the third indication information includes: The first communication apparatus sends second sidelink control information, where the second sidelink control information includes the third indication information.

With reference to the first aspect, in some implementations of the first aspect, the third indication information includes at least one of the following: the identifier of the first resource, a start position of the first resource in time domain, a length of the first resource in time domain, an end position of the first resource in time domain, an offset of the first resource in frequency domain, and a comb size of the first resource in frequency domain.

With reference to the first aspect, in some implementations of the first aspect, the first resource includes a first transmission resource and a second transmission resource, the first transmission resource and the second transmission resource are inconsecutive in time domain, and the third indication information includes the offset of the first resource in frequency domain, where the offset of the first resource in frequency domain includes an offset of the first transmission resource in frequency domain and/or an offset of the second transmission resource in frequency domain.

According to the foregoing technical solution, when there are a plurality of transmission resources of the sidelink positioning reference signal, the first communication apparatus may indicate offsets of some or all of the plurality of transmission resources in frequency domain.

With reference to the first aspect, in some implementations of the first aspect, the method further includes: The first communication apparatus receives fourth indication information, where the fourth indication information indicates a second resource; and that the first communication apparatus obtains the identifier of the first resource includes: The first communication apparatus determines the first resource based on the second resource and a resource available by the first communication apparatus, where a length of the first resource on a time domain resource is less than a length of the second resource on a time domain resource.

According to the foregoing technical solution, when an indicated resource (for example, a configured resource) is inconsistent with a resource that can be actually used by the first communication apparatus, the first communication apparatus may select an appropriate resource for transmission of the sidelink positioning reference signal.

With reference to the first aspect, in some implementations of the first aspect, that the first communication apparatus sends the sidelink positioning reference signal on the first resource includes: The first communication apparatus transmits the sidelink positioning reference signal in a fully staggered manner based on the length of the first resource on the time domain resource; or the first communication apparatus transmits the sidelink positioning reference signal on the first resource in a partially staggered manner based on the length of the second resource on the time domain resource.

According to the foregoing technical solution, when an indicated resource (for example, a configured resource) is inconsistent with a resource that can be actually used by the first communication apparatus, the first communication apparatus may select an appropriate resource for transmission of the sidelink positioning reference signal, and may send the sidelink positioning reference signal in the fully staggered manner based on a small quantity of symbols in an allowed quantity of symbols; or send the sidelink positioning reference signal in the partially staggered manner based on a configured quantity of symbols and a corresponding Comb size.

With reference to the first aspect, in some implementations of the first aspect, the method further includes: The first communication apparatus receives fifth indication information, where the fifth indication information indicates that the first communication apparatus transmits the sidelink positioning reference signal in the fully staggered manner or the partially staggered manner.

With reference to the first aspect, in some implementations of the first aspect, the method further includes: The first communication apparatus determines to transmit the sidelink positioning reference signal in the fully staggered manner or the partially staggered manner.

With reference to the first aspect, in some implementations of the first aspect, the method further includes: The first communication apparatus receives sixth indication information, where the sixth indication information indicates a minimum length of the time domain resource used for transmission of the sidelink positioning reference signal.

According to the foregoing technical solution, the minimum length (for example, a minimum quantity of symbols) of the time domain resource used for transmission of the sidelink positioning reference signal may be limited. In this way, when a quantity of symbols actually used by the first communication apparatus to transmit the sidelink positioning reference signal is less than the minimum quantity of symbols, the first communication apparatus does not send the sidelink positioning reference signal in a current slot. In this manner, transmission performance of the sidelink positioning reference signal can be ensured.

With reference to the first aspect, in some implementations of the first aspect, the method further includes: The first communication apparatus sends reservation information in a first slot in which the first resource is located, where the reservation information indicates at least one second slot, the second slot is a slot in which a data packet is retransmitted, and the first slot and/or the second slot further include/includes the second resource used for transmission of the sidelink positioning reference signal.

With reference to the first aspect, in some implementations of the first aspect, the first resource is a part of resources in one slot.

With reference to the first aspect, in some implementations of the first aspect, the method further includes: The first communication apparatus sends, in the first slot in which the first resource is located, at least one of the following: the PSCCH, the PSSCH, and automatic gain control AGC.

With reference to the first aspect, in some implementations of the first aspect, a time domain resource of the sidelink positioning reference signal in the first slot is after a time domain resource of the PSCCH in the first slot; and/or a time domain resource of the AGC in the first slot is before the time domain resource of the PSCCH in the first slot, a time domain resource of the PSSCH in the first slot, and the time domain resource of the sidelink positioning reference signal in the first slot.

With reference to the first aspect, in some implementations of the first aspect, the length of the time domain resource is a time domain resource length in one slot.

For example, the length of the time domain resource available for transmission of the sidelink positioning reference signal may be a quantity of symbols that is available for transmission of the sidelink positioning reference signal in one slot; the length of the time domain resource used for transmission of the PSSCH may be a quantity of symbols used for transmission of the PSSCH in the slot; the length of the time domain resource used for transmission of the PSCCH may be a quantity of symbols used for transmission of the PSCCH in the slot; the length of the time domain resource used for transmission of the PSFCH may be a quantity of symbols used for transmission of the PSFCH in the slot; and the length of the time domain resource used for transmission of the DMRS may be a quantity of symbols used for transmission of the DMRS in the slot.

With reference to the first aspect, in some implementations of the first aspect, the first resource is continuous in time domain.

With reference to the first aspect, in some implementations of the first aspect, the first resource overlaps a third resource, the third resource is used for transmission of a sidelink reference signal, and the method further includes: sending the sidelink reference signal on a resource that is in the third resource and that does not overlap the first resource.

With reference to the first aspect, in some implementations of the first aspect, the first resource is a candidate resource in k candidate resources, k is an integer greater than 1, the first resource does not overlap the third resource, and the third resource is used for transmission of a sidelink reference signal.

With reference to the first aspect, in some implementations of the first aspect, obtaining the identifier of the first resource includes: receiving configuration information of the third resource and configuration information of the k candidate resources; and determining the identifier of the first resource based on the configuration information of the third resource and the configuration information of the k candidate resources.

With reference to the first aspect, in some implementations of the first aspect, the k candidate resources include the first resource and a second candidate resource, the second candidate resource is a candidate resource that overlaps the third resource, and the first resource is adjacent to the second candidate resource.

With reference to the first aspect, in some implementations of the first aspect, the method further includes: receiving seventh indication information, where the seventh indication information indicates a value of k.

With reference to the first aspect, in some implementations of the first aspect, obtaining the identifier of the first resource includes: receiving eighth indication information, where the eighth indication information indicates at least one of the following: the length of the time domain resource used for transmission of the PSSCH, the length of the time domain resource used for transmission of the PSCCH, and a DMRS pattern; and determining the identifier of the first resource based on the eighth indication information.

With reference to the first aspect, in some implementations of the first aspect, the identifier of the first resource is associated with at least one of the following: the length of the time domain resource used for transmission of the sidelink positioning reference signal, the offset of the first resource in frequency domain, and the comb size of the first resource in frequency domain.

With reference to the first aspect, in some implementations of the first aspect, the sidelink reference signal is a phase tracking reference signal.

According to a second aspect, a communication method is provided. The method may be performed by a communication apparatus. The communication apparatus may be a communication device (for example, a terminal device), or may be a component (for example, a chip or a circuit) of the communication device. This is not limited. For ease of description, the following uses an example in which the method is performed by a second communication apparatus for description.

The method may include: The second communication apparatus receives a first resource or an identifier of the first resource, where the identifier of the first resource is determined based on at least one of the following: a length of a time domain resource available for transmission of a sidelink positioning reference signal, a start position of a time domain resource used for transmission of the sidelink positioning reference signal, and a length of the time domain resource used for transmission of the sidelink positioning reference signal; and the second communication apparatus receives the sidelink positioning reference signal on the first resource.

With reference to the second aspect, in some implementations of the second aspect, the method further includes: The second communication apparatus determines the first resource based on the identifier of the first resource and at least one of the following: a length of a time domain resource of a physical sidelink control channel PSCCH, a demodulation reference signal DMRS pattern, and a length of a time domain resource of a physical sidelink feedback channel PSFCH.

For example, the length of the time domain resource of the PSCCH, for example, a quantity of symbols occupied by the PSCCH, may be indicated by configuration information.

For example, the DMRS pattern may be indicated by the first communication apparatus.

For example, the length of the time domain resource of the PSFCH may be a quantity of symbols occupied by the PSFCH in a current time domain unit (for example, a current slot). For example, the second communication apparatus may determine the first resource based on the identifier of the first resource and whether a PSFCH resource exists in a current time domain unit.

According to the foregoing technical solution, after receiving the identifier of the first resource, the second communication apparatus further determines, based on at least one of the following information, a physical resource actually occupied by the sidelink positioning reference signal corresponding to the identifier of the first resource: a quantity of symbols occupied by the PSCCH, the DMRS pattern, and whether a PSFCH resource exists in a current receiving slot. After the second communication apparatus obtains the foregoing information, the second communication apparatus has the same understanding as the first communication apparatus on a quantity and positions of symbols that can be used for transmission of the sidelink positioning reference signal in the current slot. Then, the second communication apparatus may uniquely determine, based on the received indication information of an identifier of the resource of the sidelink positioning reference signal, a corresponding position (for example, a position of a start symbol and a position of an end symbol) of the resource of the sidelink positioning reference signal in the slot. Therefore, under a condition that indication signaling of SCI is reduced, the second communication apparatus and the first communication apparatus accurately indicate the resource of the sidelink positioning reference signal, to avoid a resource indication error.

With reference to the second aspect, in some implementations of the second aspect, the method further includes: The second communication apparatus obtains positioning-related information based on the sidelink positioning reference signal.

With reference to the second aspect, in some implementations of the second aspect, the length of the time domain resource available for transmission of the sidelink positioning reference signal is determined based on at least one of the following: a length of a time domain resource used for transmission of a physical sidelink shared channel PSSCH, the length of the time domain resource used for transmission of the physical sidelink control channel PSCCH, the length of the time domain resource used for transmission of a physical sidelink feedback channel PSFCH, and a length of a time domain resource used for transmission of a demodulation reference signal DMRS.

With reference to the second aspect, in some implementations of the second aspect, the length of the time domain resource available for transmission of the sidelink positioning reference signal satisfies any one of the following:

$$Ma = l_{d} - l_{PSCCH} - X1;$$

$$Ma = l_{d} - l_{PSCCH} - l_{DMRS} - X2;$$

or

$$Ma = l_{d} - X3.$$

Ma represents the length of the time domain resource available for transmission of the sidelink positioning reference signal, $l_{d}$ represents the length of the time domain resource used for transmission of the PSSCH, $l_{PSCCH}$ represents the length of the time domain resource used for transmission of the PSCCH, $l_{DMRS}$ represents the length of the time domain resource used for transmission of the demodulation reference signal DMRS, and X1, X2, and X3 are constants.

With reference to the second aspect, in some implementations of the second aspect, $l_{d} = l_{SL} - l_{PSFCH}$, where $l_{SL}$ represents a length of a time domain resource used for sidelink transmission, and $l_{PSFCH}$ represents the length of the time domain resource used for transmission of the PSFCH.

With reference to the second aspect, in some implementations of the second aspect, a value of $l_{PSFCH}$ is any one of the following: 0, 1, 2, or 3.

With reference to the second aspect, in some implementations of the second aspect, a value of X1 is any one of the following: 0, 1, 2, or 3.

With reference to the second aspect, in some implementations of the second aspect, a value of X2 is 0 or 1.

With reference to the second aspect, in some implementations of the second aspect, a value of X3 is 0 or 1.

With reference to the second aspect, in some implementations of the second aspect, the method further includes: The second communication apparatus receives second indication information, where the second indication information indicates at least one of the following: the start position of the time domain resource used for transmission of the sidelink positioning reference signal and the length of the time domain resource used for transmission of the sidelink positioning reference signal.

With reference to the second aspect, in some implementations of the second aspect, that the second communication apparatus receives the second indication information includes: The second communication apparatus receives first sidelink control information, where the first sidelink control information includes the second indication information.

With reference to the second aspect, in some implementations of the second aspect, the identifier of the first resource is obtained by encoding the length of the time domain resource available for transmission of the sidelink positioning reference signal.

With reference to the second aspect, in some implementations of the second aspect, the identifier of the first resource satisfies any one of the following:

$$n_{id}=S_{start};$$

$$n_{id}=S_{start}+Ma;$$

or

$$n_{id}=S_{start}+2Ma-1.$$

$n_{id}$ represents the identifier of the first resource, $S_{start}$ represents the start position of the time domain resource used for transmission of the sidelink positioning reference signal, and Ma represents the length of the time domain resource available for transmission of the sidelink positioning reference signal.

With reference to the second aspect, in some implementations of the second aspect, a value of the identifier of the first resource is W bits, the W bits include a first bit and a second bit, W is an integer greater than 1, and the identifier of the first resource satisfies any one of the following: the first bit of the identifier of the first resource is related to the start position of the time domain resource used for transmission of the sidelink positioning reference signal, and the second bit of the identifier of the first resource is related to the length of the time domain resource used for transmission of the sidelink positioning reference signal; the second bit of the identifier of the first resource is related to the start position of the time domain resource used for transmission of the sidelink positioning reference signal, and the first bit of the identifier of the first resource is related to the length of the time domain resource used for transmission of the sidelink positioning reference signal; or the identifier of the first resource is obtained by jointly encoding the length of the time domain resource used for transmission of the sidelink positioning reference signal and the start position of the time domain resource used for transmission of the sidelink positioning reference signal.

With reference to the second aspect, in some implementations of the second aspect, the first bit is a most significant bit of the identifier of the first resource, and the second bit is a least significant bit of the identifier of the first resource.

With reference to the second aspect, in some implementations of the second aspect, that the second communication apparatus receives the identifier of the first resource includes: The second communication apparatus receives third indication information, where the third indication information indicates the identifier of the first resource.

With reference to the second aspect, in some implementations of the second aspect, that the second communication apparatus receives the third indication information includes: The second communication apparatus receives second sidelink control information, where the second sidelink control information includes the third indication information.

With reference to the second aspect, in some implementations of the second aspect, the third indication information includes at least one of the following: the identifier of the first resource, a start position of the first resource in time domain, a length of the first resource in time domain, an end position of the first resource in time domain, an offset of the first resource in frequency domain, and a comb size of the first resource in frequency domain.

With reference to the second aspect, in some implementations of the second aspect, the first resource includes a first transmission resource and a second transmission resource, the first transmission resource and the second transmission resource are inconsecutive in time domain, and the third indication information includes the offset of the first resource in frequency domain, where the offset of the first resource in frequency domain includes an offset of the first transmission resource in frequency domain and/or an offset of the second transmission resource in frequency domain.

With reference to the second aspect, in some implementations of the second aspect, the first resource is a part of resources in one slot.

With reference to the second aspect, in some implementations of the second aspect, the method further includes: The second communication apparatus receives, in a first slot in which the first resource is located, at least one of the following: the PSCCH, the PSSCH, and automatic gain control AGC.

With reference to the second aspect, in some implementations of the second aspect, a time domain resource of the sidelink positioning reference signal in the first slot is after a time domain resource of the PSCCH in the first slot; and/or a time domain resource of the AGC in the first slot is before the time domain resource of the PSCCH in the first slot, a time domain resource of the PSSCH in the first slot, and the time domain resource of the sidelink positioning reference signal in the first slot.

With reference to the second aspect, in some implementations of the second aspect, the length of the time domain resource is a time domain resource length in one slot.

With reference to the second aspect, in some implementations of the second aspect, the first resource is continuous in time domain.

With reference to the second aspect, in some implementations of the second aspect, the first resource overlaps a third resource, the third resource is used for transmission of a sidelink reference signal, and the method further includes: receiving the sidelink reference signal on a resource that is in the third resource and that does not overlap the first resource.

With reference to the second aspect, in some implementations of the second aspect, the first resource is a candidate resource in k candidate resources, k is an integer greater than 1, the first resource does not overlap the third resource, and the third resource is used for transmission of a sidelink reference signal.

With reference to the second aspect, in some implementations of the second aspect, that the second communication apparatus receives the identifier of the first resource includes: The second communication apparatus receives configuration information of the third resource and configuration information of the k candidate resources; and the second communication apparatus determines the identifier of the first resource based on the configuration information of the third resource and the configuration information of the k candidate resources.

With reference to the second aspect, in some implementations of the second aspect, the k candidate resources include the first resource and a second candidate resource, the second candidate resource is a candidate resource that overlaps the third resource, and the first resource is adjacent to the second candidate resource.

With reference to the second aspect, in some implementations of the second aspect, the method further includes: receiving seventh indication information, where the seventh indication information indicates a value of k.

With reference to the second aspect, in some implementations of the second aspect, that the second communication apparatus receives the identifier of the first resource includes: The second communication apparatus receives eighth indication information, where the eighth indication information indicates at least one of the following: the length of the time domain resource used for transmission of the PSSCH, the length of the time domain resource used for transmission of the PSCCH, and the DMRS pattern; and the second communication apparatus determines the identifier of the first resource based on the eighth indication information.

With reference to the second aspect, in some implementations of the second aspect, the identifier of the first resource is associated with at least one of the following: the length of the time domain resource used for transmission of the sidelink positioning reference signal, the offset of the first resource in frequency domain, and the comb size of the first resource in frequency domain.

With reference to the second aspect, in some implementations of the second aspect, the sidelink reference signal is a phase tracking reference signal.

For beneficial effects of the second aspect, refer to related descriptions in the first aspect. Details are not described herein again.

According to a third aspect, a communication method is provided. The method may be performed by a communication apparatus. The communication apparatus may be a communication device (for example, a terminal device), or may be a component (for example, a chip or a circuit) of the communication device. This is not limited. For ease of description, the following uses an example in which the method is performed by a first communication apparatus for description.

The method may include: The first communication apparatus obtains a first resource, where the first resource is used for transmission of a sidelink positioning reference signal, the first resource includes T transmission resources, at least two of the T transmission resources are inconsecutive in time domain, and T is an integer greater than 1; and the first communication apparatus sends indication information, where the indication information indicates at least one transmission resource in the first resource, and the at least one transmission resource in the first resource is used for transmission of the sidelink positioning reference signal.

According to the foregoing technical solution, there may be a plurality of transmission resources in one slot for transmission of the sidelink positioning reference signal. When there are a plurality of transmission resources of the sidelink positioning reference signal, the first communication apparatus may indicate offsets of some or all of the plurality of transmission resources in frequency domain.

With reference to the third aspect, in some implementations of the third aspect, the T transmission resources include a first transmission resource and a second transmission resource, and that the indication information indicates the at least one transmission resource in the first resource includes: The indication information indicates at least one of the following: a position of the first transmission resource in time domain, an offset or a comb size of the first transmission resource in frequency domain, a position of the second transmission resource in time domain, or a offset or a comb size of the second transmission resource in frequency domain.

With reference to the third aspect, in some implementations of the third aspect, the indication information is an identifier of the first resource, and the identifier of the first resource is determined based on at least one of the following: an offset of the sidelink positioning reference signal in frequency domain; a comb size for transmitting the sidelink positioning reference signal for an $i^{th}$ time, where i is an integer greater than 1 or equal to 1; and indication information for transmission of the sidelink positioning reference signal on an $i^{th}$ transmission resource.

With reference to the third aspect, in some implementations of the third aspect, the identifier of the first resource satisfies any one of the following:

$$n_{ID}=n_{RE}+m_s*N_{1,\,comb};$$

$$n_{ID}=n_{RE}+N_{1,\,comb}+(m_s-1)*N_{2,\,comb};$$

or

$$n_{ID}=n_{RE}+N_{1,\,comb}+N_{2,\,comb}+(m_s-2)*N_{3,\,comb}.$$

$n_{ID}$ represents the identifier of the first resource; $N_{i,\,comb}$ represents the comb size for transmitting the sidelink positioning reference signal for the $i^{th}$ time; $n_{RE}$ represents the offset of the sidelink positioning reference signal in frequency domain; and $m_s=i-1$, representing the indication information for transmission of the sidelink positioning reference signal on the $i^{th}$ transmission resource, where i=1, 2, or 3.

With reference to the third aspect, in some implementations of the third aspect, that the first communication apparatus sends the indication information includes: The first communication apparatus sends sidelink control information, where the sidelink control information includes the indication information.

With reference to the third aspect, in some implementations of the third aspect, the first resource is a part of resources in one slot.

With reference to the third aspect, in some implementations of the third aspect, the method further includes: The first communication apparatus sends, in a first slot in which the first resource is located, at least one of the following: the PSCCH, the PSSCH, and automatic gain control AGC.

With reference to the third aspect, in some implementations of the third aspect, a time domain resource of the sidelink positioning reference signal in the first slot is after a time domain resource of the PSCCH in the first slot; and/or a time domain resource of the AGC in the first slot is before the time domain resource of the PSCCH in the first slot, a time domain resource of the PSSCH in the first slot, and the time domain resource of the sidelink positioning reference signal in the first slot.

With reference to the third aspect, in some implementations of the third aspect, the length of the time domain resource is a time domain resource length in one slot.

With reference to the third aspect, in some implementations of the third aspect, all of the T transmission resources are consecutive in time domain.

According to a fourth aspect, a communication method is provided. The method may be performed by a communication apparatus. The communication apparatus may be a communication device (for example, a terminal device), or may be a component (for example, a chip or a circuit) of the communication device. This is not limited. For ease of description, the following uses an example in which the method is performed by a second communication apparatus for description.

The method may include: The second communication apparatus receives indication information, where the indication information indicates at least one transmission resource in a first resource, the first resource is used for transmission of a sidelink positioning reference signal, the first resource includes T transmission resources, at least two of the T transmission resources are inconsecutive in time domain, and T is an integer greater than 1; and the second communication apparatus receives the sidelink positioning reference signal based on the indication information.

With reference to the fourth aspect, in some implementations of the fourth aspect, the T transmission resources include a first transmission resource and a second transmission resource, and that the indication information indicates the at least one transmission resource in the first resource includes: The indication information indicates at least one of the following: a position of the first transmission resource in time domain, an offset or a comb size of the first transmission resource in frequency domain, a position of the second transmission resource in time domain, or an offset or a comb size of the second transmission resource in frequency domain.

With reference to the fourth aspect, in some implementations of the fourth aspect, the indication information is an identifier of the first resource, and the identifier of the first resource is determined based on at least one of the following: an offset of the sidelink positioning reference signal in frequency domain; a comb size for transmitting the sidelink positioning reference signal for an $i^{th}$ time, where i is an integer greater than 1 or equal to 1; and indication information for transmission of the sidelink positioning reference signal on an $i^{th}$ transmission resource.

With reference to the fourth aspect, in some implementations of the fourth aspect, the identifier of the first resource satisfies any one of the following:

$$n_{ID}=n_{RE}+m_s*N_{1,\,comb};$$

$$n_{ID}=n_{RE}+N_{1,\,comb}+(m_s-1)*N_{2,\,comb};$$

or

$$n_{ID}=n_{RE}+N_{1,\,comb}+N_{2,\,comb}+(m_s-2)*N_{3,\,comb}.$$

$n_{ID}$ represents the identifier of the first resource; $N_{i,\,comb}$ represents the comb size for transmitting the sidelink positioning reference signal for the $i^{th}$ time; $n_{RE}$ represents the offset of the sidelink positioning reference signal in frequency domain; and $m_s=i-1$, representing the indication information for transmission of the sidelink positioning reference signal on the $i^{th}$ transmission resource, where i=1, 2, or 3.

With reference to the fourth aspect, in some implementations of the fourth aspect, that the second communication apparatus receives the indication information includes: The second communication apparatus receives sidelink control information, where the sidelink control information includes the indication information.

With reference to the fourth aspect, in some implementations of the fourth aspect, the first resource is a part of resources in one slot.

With reference to the fourth aspect, in some implementations of the fourth aspect, the method further includes: The second communication apparatus receives, in a first slot in which the first resource is located, at least one of the following: a PSCCH, a PSSCH, and automatic gain control AGC.

With reference to the fourth aspect, in some implementations of the fourth aspect, a time domain resource of the sidelink positioning reference signal in the first slot is after a time domain resource of the PSCCH in the first slot; and/or a time domain resource of the AGC in the first slot is before the time domain resource of the PSCCH in the first slot, a time domain resource of the PSSCH in the first slot, and the time domain resource of the sidelink positioning reference signal in the first slot.

With reference to the fourth aspect, in some implementations of the fourth aspect, the length of the time domain resource is a time domain resource length in one slot.

With reference to the fourth aspect, in some implementations of the fourth aspect, all of the T transmission resources are consecutive in time domain.

For beneficial effects of the fourth aspect, refer to related descriptions in the third aspect. Details are not described herein again.

According to a fifth aspect, a communication method is provided. The method may be performed by a communication apparatus. The communication apparatus may be a communication device (for example, a terminal device), or may be a component (for example, a chip or a circuit) of the communication device. This is not limited.

The method may include: obtaining information about a third resource, where the third resource is used for transmission of a first reference signal; obtaining information about a fourth resource, where the fourth resource is used for transmission of a second reference signal; and transmitting the first reference signal on a resource other than a fifth resource in the third resource, and transmitting the second reference signal on the fourth resource, where the fifth resource is a resource that is in the third resource and that overlaps the fourth resource; and the first reference signal is a sidelink positioning reference signal, and the second reference signal is a phase tracking reference signal or a CSI-RS; or the first reference signal is a phase tracking reference signal or a CSI-RS, and the second reference signal is a sidelink positioning reference signal.

With reference to the fifth aspect, in some implementations of the fifth aspect, the third resource includes a first candidate resource and a second candidate resource, the fifth resource includes the first candidate resource, and the transmitting the first reference signal on the resource other than the fifth resource in the third resource includes:

transmitting the first reference signal on the second candidate resource.

With reference to the fifth aspect, in some implementations of the fifth aspect, the first candidate resource and the second candidate resource are two consecutive candidate resources.

With reference to the fifth aspect, in some implementations of the fifth aspect, the first reference signal is a sidelink positioning reference signal, the second reference signal is a phase tracking reference signal, and the third resource is continuous on time domain resources, or the third resource is continuous in one time domain unit.

According to a sixth aspect, a communication method is provided. The method may be performed by a communication apparatus. The communication apparatus may be a communication device (for example, a terminal device), or may be a component (for example, a chip or a circuit) of the communication device. This is not limited.

The method may include: obtaining configuration information, where the configuration information includes a length of a time domain resource used for transmission of a physical sidelink shared channel PSSCH, a length of a time domain resource used for transmission of a physical sidelink control channel PSCCH, and a demodulation reference signal DMRS pattern; and determining a third resource based on the configuration information, where the third resource is used for transmission of a sidelink positioning reference signal.

With reference to the sixth aspect, in some implementations of the sixth aspect, the configuration information includes at least one of the following: the length of the time domain resource used for transmission of the PSSCH, the length of the time domain resource used for transmission of the PSCCH, and the DMRS pattern.

With reference to the sixth aspect, in some implementations of the sixth aspect, an identifier of the third resource is related to at least one of the following: a length of the third resource in time domain, a comb size of the third resource in frequency domain, and an offset of the third resource in frequency domain.

With reference to the sixth aspect, in some implementations of the sixth aspect, the method further includes: sending the identifier of the third resource.

According to a seventh aspect, a communication apparatus is provided. The apparatus is configured to perform the method in any one of the possible implementations of the first aspect to the sixth aspect. Specifically, the apparatus may include a unit and/or a module configured to perform the method in any one of the possible implementations of the first aspect to the sixth aspect, for example, a processing unit and/or a communication unit.

In an implementation, the apparatus is a communication device (for example, a terminal device). When the apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the terminal device). When the apparatus is the chip, the chip system, or the circuit used in the communication device, the communication unit may be an input/output interface, an interface circuit, an output circuit, an input circuit, a pin, a related circuit, or the like of the chip, the chip system, or the circuit; and the processing unit may be at least one processor, a processing circuit, a logic circuit, or the like.

According to an eighth aspect, a communication apparatus is provided. The apparatus includes at least one processor, configured to execute a computer program or instructions stored in a memory, to perform the method in any one of the possible implementations of the first aspect to the sixth aspect.

Optionally, the apparatus further includes the memory, configured to store the computer program or the instructions.

Optionally, the apparatus further includes a communication interface, and the processor reads, through the communication interface, the computer program or the instructions stored in the memory.

In an implementation, the apparatus is a communication device (for example, a terminal device).

In another implementation, the apparatus is a chip, a chip system, or a circuit used in the communication device (for example, the terminal device).

According to a ninth aspect, this application provides a processor, configured to perform the methods provided in the first aspect to the sixth aspect.

Unless otherwise specified, or if the operations such as sending and obtaining/receiving related to the processor do not conflict with actual functions or internal logic of the processor in related descriptions, the operations may be understood as operations such as outputting, receiving, and inputting of the processor, or may be understood as sending and receiving operations performed by a radio frequency circuit and an antenna. This is not limited in this application.

According to a tenth aspect, a computer-readable storage medium is provided. The computer-readable medium stores program code to be executed by a device, and the program code is used to perform the method in any one of the possible implementations of the first aspect to the sixth aspect.

According to an eleventh aspect, a computer program product including instructions is provided. When the computer program product runs on a computer, the computer is enabled to perform the method in any one of the possible implementations of the first aspect to the sixth aspect.

According to a twelfth aspect, a communication system is provided. The communication system includes the foregoing first communication apparatus and second communication apparatus.

**BRIEF DESCRIPTION OF DRAWINGS**

FIG. 1 is a diagram of an application scenario 100 according to this application;
FIG. 2 is a diagram of an application scenario 200 according to this application;
FIG. 3 is a diagram of a resource occupied by a downlink positioning reference signal;
FIG. 4 is a diagram of a resource occupied by an uplink positioning reference signal;
FIG. 5 and FIG. 6 are diagrams of two slot structures on an SL;
FIG. 7 is a diagram of a method 700 according to an embodiment of this application;
FIG. 8 is a diagram of a slot structure applicable to an embodiment of this application;
FIG. 9 is a diagram of PSSCH and SL-PRS transmission applicable to an embodiment of this application;
FIG. 10 is a diagram of sending an SL-PRS in a partially staggered manner applicable to an embodiment of this application;
FIG. 11 is a diagram of SL-PRS transmission applicable to an embodiment of this application;
FIG. 12 is a diagram of slot structures of a DMRS, a PSCCH, and a PT-RS when $l_d$=13;
FIG. 13 is a block diagram of a communication apparatus 1300 according to an embodiment of this application;
FIG. 14 is a block diagram of a communication apparatus 1400 according to an embodiment of this application; and
FIG. 15 is a block diagram of a chip system 1500 according to an embodiment of this application.

**DESCRIPTION OF EMBODIMENTS**

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), and an internet of things (internet of things, IoT) communication system. The technical solutions provided in this application may be further applied to non-terrestrial network (non-terrestrial network, NTN) systems such as an inter-satellite communication system and a satellite communication system.

In an example, the satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low earth orbit satellite, a medium earth orbit satellite, a high earth orbit satellite, or the like. The satellite may alternatively be a non-terrestrial base station, a non-terrestrial device, or the like.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V refers to communication between vehicles. V2P refers to communication between a vehicle and a person (including a pedestrian, a bicyclist, a driver, a passenger, or the like). V2I refers to communication between a vehicle and an infrastructure. The infrastructure is, for example, a road side unit (road side unit, RSU) or a network device. The RSU includes two types: a terminal-type RSU and a base station-type RSU. The terminal-type RSU is deployed on a roadside and is in a non-moving state, and therefore mobility does not need to be considered. The base station-type RSU can provide timing synchronization and resource scheduling for a vehicle that communicates with the base station-type RSU. V2N refers to communication between a vehicle and a network device. It may be understood that the foregoing descriptions are example descriptions, and embodiments of this application are not limited thereto. For example, V2X may further include NR system-based V2X communication in current 3GPP Rel-16 and later releases.

The terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus only on one type of application function and need to work with other devices such as smartphones, for example, various smart bands or smart jewelry for monitoring physical signs.

In embodiments of this application, an apparatus configured to implement a function of the terminal device, namely, a terminal apparatus, may be a terminal device; or may be an apparatus, for example, a chip system or a chip, that can support the terminal device in implementing the function. The apparatus may be mounted in the terminal device. In embodiments of this application, the chip system may include a chip; or may include a chip and another discrete device.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point, a main station, a secondary station, a motor slide retainer (motor slide retainer, MSR) node, a home base station, a network controller, an access node, a wireless node, an access point (access point, AP), a transmission node, a transmission/reception node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU-control plane (central unit-control plane (central unit-control plane, CU-CP)) node, a CU-user plane (a central unit-user plane (central unit-user plane, CU-UP)) node, and a DU node.

In embodiments of this application, an apparatus configured to implement a function of the network device may be a network device; or may be an apparatus, for example, a chip system or a chip, that can support the network device in implementing the function. The apparatus may be mounted in the network device. In embodiments of this application, the chip system may include a chip; or may include a chip and another discrete device.

The network device and the terminal device may be deployed on land, where the deployment includes indoor or outdoor, or handheld or vehicle-mounted deployment, may be deployed on water, or may be deployed on an aerocraft, a balloon, and a satellite in air. A scenario in which the network device and the terminal device are located is not limited in embodiments of this application.

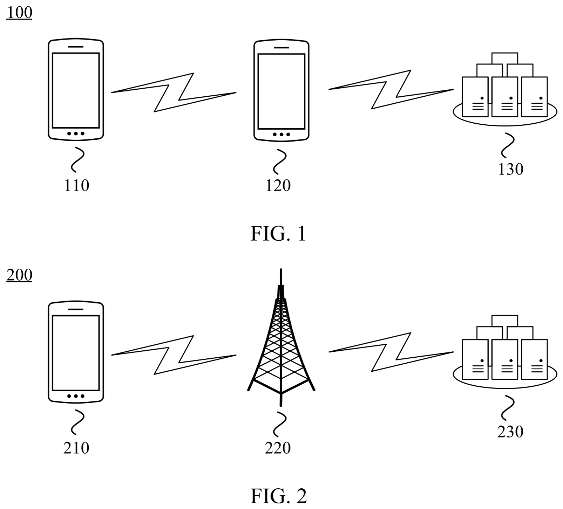

For ease of understanding of embodiments of this application, FIG. 1 and FIG. 2 are first used as examples to describe application scenarios to which embodiments of this application are applicable.

FIG. 1 is a diagram of an application scenario 100 according to this application. In an example, the application scenario 100 is a sidelink (sidelink, SL) positioning scenario. The sidelink may also be referred to as a side link, a secondary link, or the like. It may be understood that the sidelink represents a connection relationship between terminal devices, and is a logical concept rather than a physical entity. The sidelink is merely named for differentiation, and a specific name of the sidelink does not limit the protection scope of this application.

In an example, in the scenario shown in FIG. 1, a terminal device 110, a terminal device 120, and a location management device 130 may be included. The terminal device 110 may be a to-be-positioned terminal device, and the terminal device 120 may be another terminal device or a road side unit. It should be understood that, in the positioning scenario, positioning may be performed between the terminal device 110 and the terminal device 120 through a direct communication interface (namely, a PC5 interface).

In a first possible implementation, the terminal device 110 has at least two antennas, and the terminal device 120 also has at least two antennas. The terminal device 120 sends reference signals to the terminal device 110 on the at least two antennas. The terminal device 110 receives the reference signals on the at least two antennas and performs measurement on the reference signals.

For example, the terminal device 110 determines a position and/or an attitude of the terminal device 110 based on measurement information.

For another example, the terminal device 110 sends information obtained through measurement to the terminal device 120, and the terminal device 120 determines a position and/or an attitude of the terminal device 110 based on the received measurement information.

For another example, the terminal device 110 sends information obtained through measurement to the location management device 130, and the location management device 130 determines a position and/or an attitude of the terminal device 110 based on the received measurement information.

In a second possible implementation, the terminal device 110 has at least two antennas, and the terminal device 120 may include at least two terminal devices. The at least two terminal devices included in the terminal device 120 each send a reference signal to the terminal device 110 on a same antenna of the terminal device. The terminal device 110 may receive reference signals on different antennas and perform measurement on the reference signals.

For example, the terminal device 110 determines a position and/or an attitude of the terminal device 110 based on measurement information.

For another example, the terminal device 110 sends information obtained through measurement to the terminal device 120, and the terminal device 120 determines a position and/or an attitude of the terminal device 110 based on the received measurement information.

For another example, the terminal device 110 sends information obtained through measurement to the location management device 130, and the location management device 130 determines a position and/or an attitude of the terminal device 110 based on the received measurement information.

In a third possible implementation, the terminal device 110 has at least two antennas, and the terminal device 120 also has at least two antennas. The terminal device 110 sends reference signals to the terminal device 120 on the at least two antennas. The terminal device 120 receives the reference signals on the at least two antennas and performs measurement on the reference signals.

For example, the terminal device 120 determines a position and/or an attitude of the terminal device 110 based on measurement information.

For another example, the terminal device 120 sends information obtained through measurement to the terminal device 110, and the terminal device 110 determines a position and/or an attitude of the terminal device 110 based on the received measurement information.

For another example, the terminal device 120 sends information obtained through measurement to the location management device 130, and the location management device 130 determines a position and/or an attitude of the terminal device 110 based on the received measurement information.

In a fourth possible implementation, the terminal device 110 has at least two antennas, and the terminal device 120 may include at least two terminal devices. The terminal device 110 sends reference signals to the terminal device 120 on the at least two antennas. The at least two terminal devices included in the terminal device 120 each receive the reference signal on a same antenna and perform measurement on the reference signal.

For example, any device included in the terminal device 120 or the at least two devices included in the terminal device 120 may determine a position and/or an attitude of the terminal device 110 based on measurement information.

For another example, the at least two terminal devices of the terminal device 120 may send information obtained through measurement to the terminal device 110, and the terminal device 110 determines a position and/or an attitude of the terminal device 110 based on the received measurement information.

For another example, the at least two terminal devices of the terminal device 120 may send information obtained through measurement to the location management device 130, and the location management device 130 determines a position and/or an attitude of the terminal device 110 based on the received measurement information.

In a fifth possible implementation, the terminal device 110 has at least two antennas, and the terminal device 120 has only one antenna. The terminal device 110 sends reference signals to the terminal device 120 on the at least two antennas. The terminal device 120 receives the reference signals on a same antenna and performs measurement on the reference signals.

For example, the terminal device 120 determines a position and/or an attitude of the terminal device 110 based on measurement information.

For another example, the terminal device 120 sends information obtained through measurement to the terminal device 110, and the terminal device 110 determines a position and/or an attitude of the terminal device 110 based on the received measurement information.

For another example, the terminal device 120 sends information obtained through measurement to the location management device 130, and the location management device 130 determines a position and/or an attitude of the terminal device 110 based on the received measurement information.

FIG. 2 is a diagram of an application scenario 200 according to this application. As shown in FIG. 2, the application scenario 200 mainly relates to a cellular positioning scenario. The application scenario 200 may include a terminal device 210, a network device 220, and a location management device 230. The terminal device 210 may be a to-be-positioned terminal device. The network device 220 may serve as an anchor device (to be specific, a position of the network device 220 is known). In this positioning scenario, positioning may be performed between the terminal device 210 and the network device 220 through a cellular communication interface (namely, a Uu interface).

In a possible implementation, the terminal device 210 has at least two antennas, and the network device 220 also has at least two antennas. The network device 220 sends reference signals to the terminal device 210 on the at least two antennas. The terminal device 210 receives the reference signals on the at least two antennas and performs measurement on the reference signals. The terminal device 210 may send information obtained through measurement to the location management device 230, and the location management device 230 determines a position and/or an attitude of the terminal device 210 based on the received measurement information. Alternatively, the terminal device 210 may determine a position and/or an attitude of the terminal device 210 based on information obtained through measurement. Alternatively, the terminal device 210 may send information obtained through measurement to the network device 220, and the network device 220 may determine a position and/or an attitude of the terminal device 210 based on the received measurement information.

In a possible implementation, the terminal device 210 has at least two antennas, and the network device 220 may include at least two network devices. The at least two network devices included in the network device 220 each send a reference signal to the terminal device 210 on a same antenna of the network device. The terminal device 210 may receive reference signals on different antennas and perform measurement on the reference signals. The terminal device 210 may send information obtained through measurement to the location management device 230, and the location management device 230 determines a position and/or an attitude of the terminal device 210 based on the received measurement information. Alternatively, the terminal device 210 may determine a position and/or an attitude of the terminal device 210 based on information obtained through measurement. Alternatively, the terminal device 210 may send information obtained through measurement to the network device 220, and the network device 220 may determine a position and/or an attitude of the terminal device 210 based on the received measurement information.

In a possible implementation, the terminal device 210 has at least two antennas, and the network device 220 also has at least two antennas. The terminal device 210 sends reference signals to the network device 220 on the at least two antennas. The network device 220 receives the reference signals on the at least two antennas and performs measurement on the reference signals. The network device 220 may send information obtained through measurement to the location management device 230, and the location management device 230 determines a position and/or an attitude of the terminal device 210 based on the received measurement information. Alternatively, the network device 220 may determine a position and/or an attitude of the terminal device 210 based on information obtained through measurement. Alternatively, the network device 220 may send information obtained through measurement to the terminal device 210, and the network device 220 may determine a position and/or an attitude of the terminal device 210 based on the received measurement information.

In a possible implementation, the terminal device 210 has at least two antennas, and the network device 220 may include at least two network devices. The terminal device 210 sends reference signals to the network device 220 on the at least two antennas. The at least two network devices included in the network device 220 each receive the reference signal on a same antenna and perform measurement on the reference signal. The network device 220 may send information obtained through measurement to the location management device 230, and the location management device 230 determines a position and/or an attitude of the terminal device 210 based on the received measurement information.

Alternatively, the network device 220 may determine a position and/or an attitude of the terminal device 210 based on information obtained through measurement. Alternatively, the network device 220 may send information obtained through measurement to the terminal device 210, and the network device 220 may determine a position and/or an attitude of the terminal device 210 based on the received measurement information.

In a possible implementation, the terminal device 210 has at least two antennas, and the network device 220 has only one antenna. The terminal device 210 sends reference signals to the network device 220 on the at least two antennas. The network device 220 receives the reference signals on a same antenna and performs measurement on the reference signals. The network device 220 may send information obtained through measurement to the location management device 230, and the location management device 230 determines a position and/or an attitude of the terminal device 210 based on the received measurement information. Alternatively, the network device 220 may determine a position and/or an attitude of the terminal device 210 based on information obtained through measurement. Alternatively, the network device 220 may send information obtained through measurement to the terminal device 210, and the network device 220 may determine a position and/or an attitude of the terminal device 210 based on the received measurement information.

It should be understood that the plurality of antennas related to each device in FIG. 1 and FIG. 2 may be physical antennas at a plurality of different positions on the device, or may be virtual antennas formed by motion of an antenna on the device, or a combination of a physical antenna and a virtual antenna. This is not limited in this application.

In addition, the application scenarios shown in FIG. 1 and FIG. 2 are merely examples for description, and shall not constitute any limitation on this application. Embodiments of this application are applicable to any communication scenario in which a transmit-end device communicates with a receive-end device.

For ease of understanding of the technical solutions of this application, some related technologies in the technical solutions of this application are described.

1. Reference signal

A reference signal is a physical signal that carries a sequence and that is sent for implementing a specific function. This application relates to a reference signal (reference signal, RS), for example, a positioning reference signal (positioning reference signal, PRS), or a sidelink positioning reference signal (sidelink positioning reference signal, SL-PRS, SLPRS, or SL PRS). The RS is a physical signal generated by mapping a specific sequence to a corresponding time-frequency resource in a preset resource mapping mode.

2. Quantity of transmissions and quantity of reservations

A quantity of transmissions is a quantity of times of sending a same signal (for example, a reference signal), namely, a quantity of times of repeated sending.

Reserved: In a time domain unit (for example, a slot, referred to as a time domain unit #1 for differentiation), indication information of a resource that is of a reference signal and that is in the time domain unit #1 is sent, and the indication information may further indicate a position of a time domain resource and/or a position of a frequency domain resource of a resource that is reserved for the reference signal and that is in at least one time domain unit (for example, a slot, referred to as a time domain unit #2 for differentiation). Optionally, the time domain unit #2 is after the time domain unit #1. Optionally, a total quantity of transmissions and reservations in the time domain unit #1 and the at least one time domain unit #2 may be indicated by using a maximum quantity of reservations (MaxNumPerReserve).

In an example, a relationship between transmission (or retransmission) and reservation is as follows:

Optionally, transmission in the time domain unit #1 and retransmission in a subsequent time domain unit (for example, a slot) mean that a same reference signal is determined to be continuously sent for a plurality of times.

The reservation, in the at least one time domain unit #2, indicated in the time domain unit #1 is a resource reserved for future transmission. A sending apparatus may perform transmission in the time domain unit #2, or may not perform transmission in the time domain unit #2. However, the indication information may be used at least for resource exclusion when a receiving device performs resource selection.

Optionally, transmission in the time domain unit #1 may be initial transmission or retransmission of the reference signal. This is not limited in this application.

3. Time-frequency resource

In this application, data or information may be carried by using a time-frequency resource. The time-frequency resource may also be referred to as a transmission resource.

In time domain, the time-frequency resource may include one or more time domain units (which may also be referred to as time units). A time domain unit may be a symbol, a mini-slot (mini-slot), a slot (slot), a partial slot (partial slot), a subframe (subframe), a radio frame (frame), or the like.

In frequency domain, the time-frequency resource may include one or more frequency domain units. A frequency domain unit may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like.

In this application, in an example, a slot is a most basic time domain resource unit for one time of transmission. Optionally, the slot includes a complete slot, a mini-slot, a partial slot, or a subslot including one or more OFDM symbols. Optionally, the slot may alternatively be a set of one or more symbols. For example, one slot may alternatively include a set including one or more OFDM symbols. For example, a quantity of the one or more OFDM symbols is 1, 2, 3, 4, 6, 7, 12, or 14.

In addition, duration of the slot may be related to a subcarrier spacing. For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it may be deduced that when the subcarrier spacing is $15*2^u$, duration of one slot is $2^{-u}$ ms, where u is an integer such as 0, 1, or 2.

For ease of description, the slot in this application may include any one of a slot, a mini-slot, a partial slot, or a complete slot.

4. Comb (comb)

When a signal is mapped to a corresponding symbol, on a corresponding frequency domain resource, one reference signal is mapped to every N resources, and no reference signal is mapped to the other N-1 resources. This frequency domain resource mapping mode is referred to as a comb. A value of N in the comb is referred to as a comb size. In this application, the comb size may also be referred to as Comb-N.

Optionally, in a frequency domain bandwidth with a specific size, the comb may be further described as follows: A resource in each symbol is Y REs among Y*N REs, there is one reference signal in every N REs, Y is a digit greater than 0, and N is a positive integer. In this way, the N REs can be separately used by different communication devices.

Optionally, assuming that the frequency domain bandwidth includes K PRBs, a value of Y is Nre_rb*K/N, where Nre_rb indicates a quantity of REs in one PRB, for example, Nre_rb=12. In an example, a value of K is determined based on a bandwidth of a frequency domain resource on which the reference signal is located, for example, a bandwidth of a resource pool, a bandwidth of a carrier, or a bandwidth of a BWP.

Optionally, for a reference signal in a comb state, a total of N orthogonal frequency domain resources in frequency domain are used for the reference signal. The N orthogonal frequency domain resources may also be referred to as a comb offset (Comb offset). In this application, the comb offset may also be referred to as a frequency domain comb resource element offset (comb RE offset), a resource element offset value (RE offset), an offset value, or the like. A value corresponding to the comb offset may be [0, 1, ..., N-1] or [1, 2, ..., N]. When the reference signal is mapped to one of the N REs, there may be N different mapping positions of frequency domain resources of the reference signal, namely, N different comb offsets.

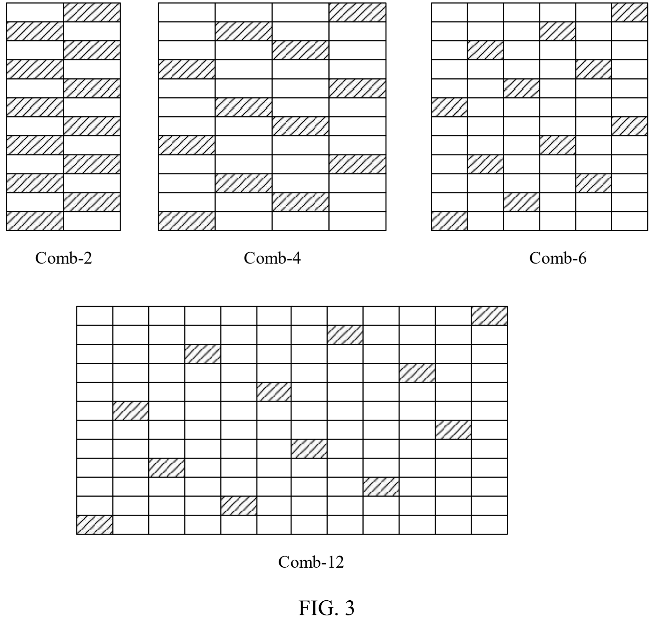

FIG. 3 is a diagram of a resource occupied by a downlink positioning reference signal. As shown in FIG. 3, time-frequency resources occupied by the downlink positioning reference signal are in comb-like mapping. FIG. 3 separately shows time-frequency mapping patterns (patterns) for the downlink positioning reference signal when comb sizes (comb sizes) are respectively 2, 4, 6, and 12. In the figure, one grid represents one RE, and a shadow part represents an RE occupied by an SL-PRS. For example, when the comb size is 2 (Comb-2), on each symbol, one device may map one downlink positioning reference signal to every two REs. In other words, when the comb size is 2, a mapping interval of the downlink positioning reference signal in frequency domain is 2. Similarly, when the comb size is 4 (Comb-4), on each symbol, one downlink positioning reference signal is mapped to every four REs, and a mapping interval of the downlink positioning reference signal in frequency domain is 4. When the comb size is 6 (Comb-6), on each symbol, one downlink positioning reference signal is mapped to every six REs, and a mapping interval of the downlink positioning reference signal in frequency domain is 6. When the comb size is 12 (Comb-12), on each symbol, one downlink positioning reference signal is mapped to every 12 REs, and a mapping interval of the downlink positioning reference signal in frequency domain is 12.

Optionally, when the frequency domain bandwidth includes 106 PRBs, for Comb-2, Y=2*106; and for Comb-3, Y=3*106.

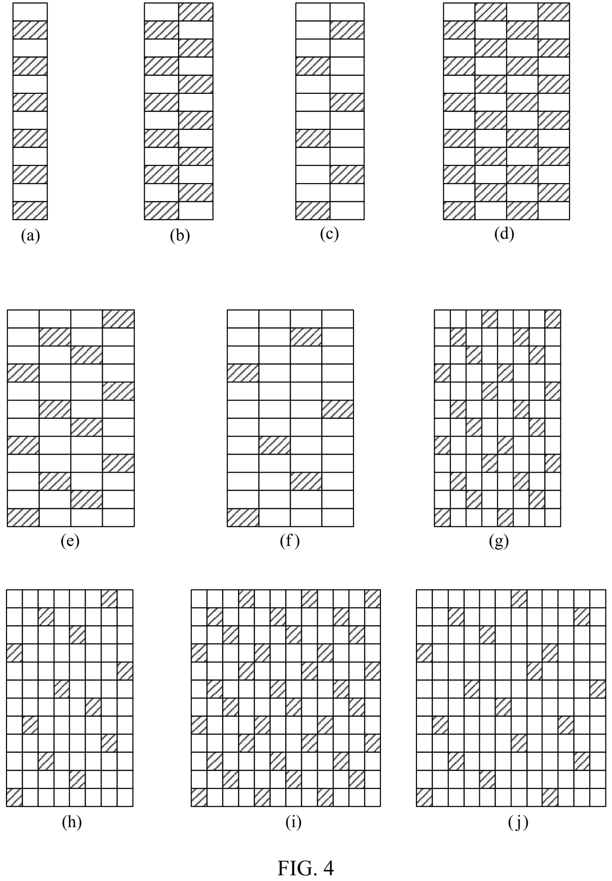

FIG. 4 is a diagram of a resource occupied by an uplink positioning reference signal, in other words, a diagram of time-frequency patterns (patterns) for an SL-PRS. In the figure, one grid represents one RE, a shadow part represents an RE occupied by the SL-PRS, a horizontal direction represents a time domain (for example, a symbol), and a vertical direction represents a frequency domain (for example, an RE).

(a) in FIG. 4 shows a time-frequency mapping pattern for the SL-PRS when a comb size is 2 (or a frequency domain interval is 2) and one symbol is occupied.

(b) in FIG. 4 shows a time-frequency mapping pattern for the SL-PRS when a comb size is 2 and two symbols are occupied.

(c) in FIG. 4 shows a time-frequency mapping pattern for the SL-PRS when a comb size is 4 and two symbols are occupied.

(d) in FIG. 4 shows a time-frequency mapping pattern for the SL-PRS when a comb size is 2 and four symbols are occupied.

(e) in FIG. 4 shows a time-frequency mapping pattern for the SL-PRS when a comb size is 4 and four symbols are occupied.

(f) in FIG. 4 shows a time-frequency mapping pattern for the SL-PRS when a comb size is 8 and four symbols are occupied.

(g) in FIG. 4 shows a time-frequency mapping pattern for the SL-PRS when a comb size is 4 and eight symbols are occupied.

(h) in FIG. 4 shows a time-frequency mapping pattern for the SL-PRS when a comb size is 8 and eight symbols are occupied.

(i) in FIG. 4 shows a time-frequency mapping pattern for the SL-PRS when a comb size is 4 and 12 symbols are occupied.

(j) in FIG. 4 shows a time-frequency mapping pattern for the SL-PRS when a comb size is 8 and 12 symbols are occupied.

A frequency domain interval value $N_{comb}$ for sending the SL-PRS means that one SL-PRS is placed on every N REs in frequency domain, and no signal is placed in the other N-1 REs. For example, in (a), (b), and (d) in FIG. 4, one SL-PRS is placed on every two REs in frequency domain, and therefore a frequency domain interval is 2. For another example, in (c), (e), (g), and (i) in FIG. 4, one SL-PRS is placed on every four REs in frequency domain, and therefore a frequency domain interval is 4. For another example, in (f), (h), and (j) in FIG. 4, one SL-PRS is placed on every eight REs in frequency domain, and therefore a frequency domain interval is 8. It should be understood that, in this application, the frequency domain interval value $N_{comb}$ for sending the SL-PRS may also be understood as a comb, a comb size, or the like, and is denoted by $K_{TC}$ or N.

In addition, if resources occupied by a message are consecutive in frequency domain, it may be considered that a frequency domain interval value for the message is 1. For example, resources of a PSSCH are consecutive in frequency domain. Therefore, a frequency domain interval value for the PSSCH is 1.

5. SL slot structure

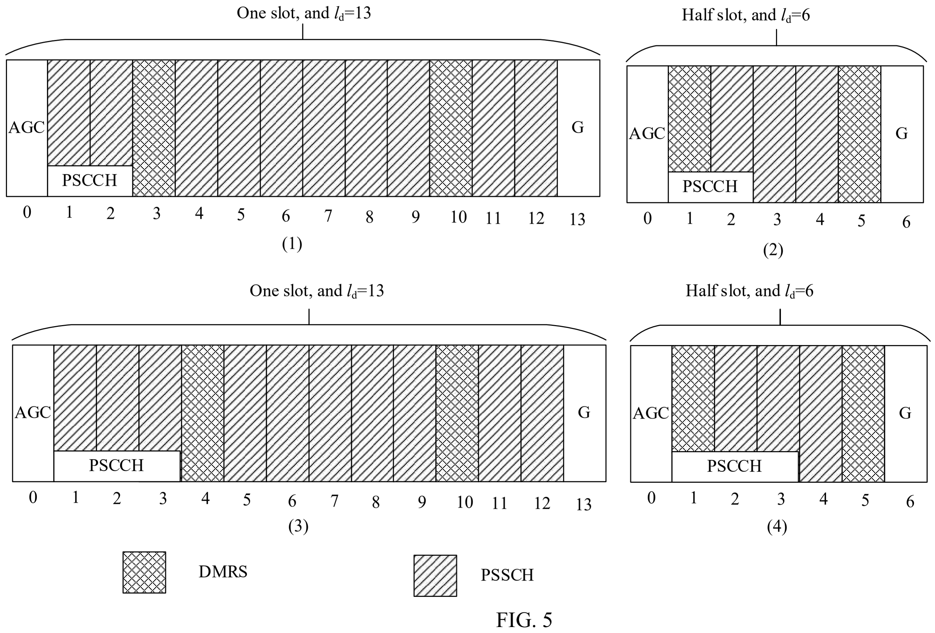

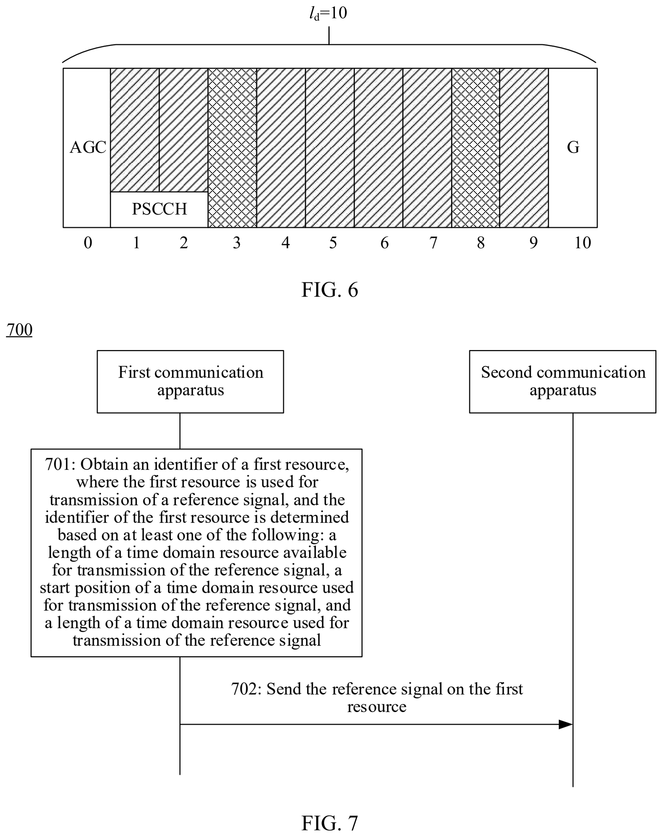

FIG. 5 and FIG. 6 show two slot structures on an SL. As shown in FIG. 5 and FIG. 6, the slot structure may include: a time domain resource occupied by a channel carrying a demodulation reference signal (demodulation reference signal, DMRS), a time domain resource occupied by a physical sidelink control channel (physical sidelink control channel, PSCCH), a time domain resource occupied by a physical sidelink shared channel (physical sidelink shared channel, PSSCH), a physical sidelink feedback channel (physical sidelink feedback channel, PSFCH), and a time domain resource and an empty symbol (G) for automatic gain control (automatic gain control, AGC) processing.

The empty symbol refers to a guard period (guard period, GP) or a guard symbol (guard symbol). The empty symbol may be used for transmit/receive switching, beam sweeping, radio frequency or antenna switching, and the like. The empty symbol may be located in the middle of a slot, or may be located in a last symbol of the slot. This is not limited in this application.

In this application, an example in which the last symbol of the slot is an empty symbol is used for description. It may be understood that the slot may alternatively not include the last empty symbol.

In FIG. 5 and FIG. 6, $l_d$ represents a total quantity of symbols used for transmission of the PSCCH and the related PSSCH. As shown in FIG. 5, $l_d$ represents a total quantity of symbols in the slot other than the G symbol, in other words, $l_d$= (a quantity of symbols of AGC+a quantity of symbols of the DMRS+a quantity of symbols of the PSSCH+a quantity of symbols of the PSCCH). In FIG. 6, $l_d$ represents a total quantity of symbols in the slot other than the G symbol and symbols of the PSFCH, in other words, $l_d$=(a quantity of symbols of AGC+a quantity of symbols of the DMRS+a quantity of symbols of the PSSCH+a quantity of symbols of the PSCCH). Digits 0 to 13 indicate numbers of symbols in the slot.

Optionally, in this application, the AGC symbol is a symbol used by a receiver to perform automatic gain control. From the perspective of a transmit device, a reference signal or a duplicate on a symbol that is adjacent to and that is after the AGC symbol may be transmitted on the AGC symbol.

It may be learned from FIG. 5 and FIG. 6 that a quantity of actually available symbols of the PSSCH varies in different scenarios. During transmission of an SL-PRS, a quantity of available symbols of the SL-PRS is usually a subset of a quantity of available symbols of the PSSCH. Therefore, the quantity of available symbols of the SL-PRS also varies in different scenarios.

In view of this, this application provides a solution, to establish a relationship between an SL-PRS resource and an identifier of the SL-PRS resource, so that the SL-PRS resource can be determined and indicated. The solution is applicable to various scenarios.

It should be noted that in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

It should be further noted that in this application, "configuration" may be configuration performed by a network device, may be pre-configuration, or may be pre-definition, for example, pre-definition in a standard.

The following describes in detail a method provided in embodiments of this application with reference to the accompanying drawings. Embodiments provided in this application may be applied to the scenario shown in FIG. 1 or FIG. 2. This is not limited.

FIG. 7 is a diagram of a method 700 according to an embodiment of this application. The method 700 shown in FIG. 7 may include the following steps.

701: A first communication apparatus obtains an identifier of a first resource, where the first resource is used for transmission of a reference signal, and the identifier of the first resource is determined based on at least one of the following: a length of a time domain resource available for transmission of the reference signal, a start position of a time domain resource used for transmission of a reference signal, and a length of a time domain resource used for transmission of the reference signal.

The reference signal may be, for example, a sidelink reference signal. In an example, the reference signal may be a sidelink positioning reference signal (SL-PRS), or the reference signal may be a sidelink beam management reference signal.

The identifier of the first resource may identify (or indicate or be used to determine) the first resource. In other words, a position of the first resource may be learned of based on the identifier of the first resource.

The first resource may be a part of resources in one slot, for example, some symbols in one slot.

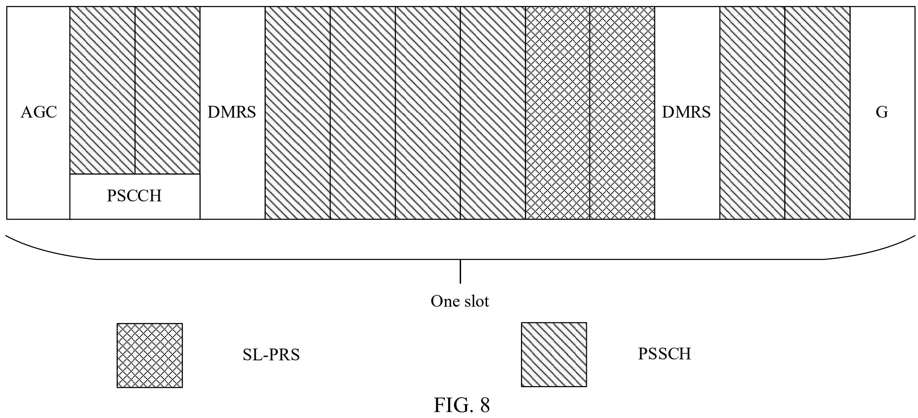

FIG. 8 is a diagram of a slot structure applicable to an embodiment of this application. As shown in FIG. 8, it is assumed that the reference signal is an SL-PRS, and a time domain resource (for example, a symbol) used for transmission of the SL-PRS is a part of time domain resources (for example, two symbols) in one slot.

Optionally, the first resource may be a continuous resource. For example, the first resource may be several consecutive symbols in one slot. FIG. 8 is used as an example. Time domain resources of a resource (namely, the first resource) used for transmission of the SL-PRS in one slot may be consecutive, for example, two consecutive symbols.

Optionally, the first communication apparatus sends, in the slot in which the first resource is located, at least one of the following: PSCCH, PSSCH, and AGC. FIG. 8 is used as an example. In one slot, the first communication apparatus may send an SL-PRS, a PSSCH, a PSCCH, AGC, and a DMRS.

Further, optionally, the time domain resource of the SL-PRS is located after a time domain resource of the PSCCH, as shown in FIG. 8. The PSCCH may carry control information, for example, SCI. The SCI may indicate a transmission parameter of the SL-PRS. For example, the transmission parameter may include one or more of the following information: time domain resource indication information of the SL-PRS, frequency domain resource indication information of the SL-PRS, a priority of the SL-PRS, reservation periodicity indication information of the SL-PRS, source identifier indication information corresponding to the SL-PRS, and destination identifier indication information corresponding to the SL-PRS. In this way, a receive end may learn of SL-PRS related information based on the SCI received on a preceding symbol, to accurately receive the SL-PRS.

Further, optionally, a time domain resource of the AGC is located before the time domain resource of the PSCCH, a time domain resource of the PSSCH, and the time domain resource of the SL-PRS. As shown in FIG. 8, an AGC symbol is located before a symbol of another signal or other information.

The AGC symbol is located before a symbol of another signal or other information, so that the receive end (for example, a second communication apparatus) can perform AGC processing as soon as possible. The AGC processing may be understood as that the receive end adjusts a receive gain. For example, when performing reception detection, the receive end needs to adjust a receive gain for information that enters a baseband from a radio frequency front-end, so that an amplitude of a signal input into an analog to digital converter (analog to digital converter, ADC) module is exactly within a quantization range of the ADC. In this way, a signal-to-noise ratio of a received signal in the baseband can be maximized, and optimal receiving performance can be achieved.

A specific manner of determining the identifier of the first resource is described in detail below.

702: The first communication apparatus sends the reference signal on the first resource.

The first communication apparatus may be a terminal device or a component (for example, a chip or a circuit) of the terminal device, or the first communication apparatus may be a network device or a component (for example, a chip or a circuit) of the network device. The second communication apparatus may be a terminal device or a component (for example, a chip or a circuit) of the terminal device, or the second communication apparatus may be a network device or a component (for example, a chip or a circuit) of the network device. In a possible implementation, the first communication apparatus and the second communication apparatus are terminal devices, and correspondingly, the reference signal may be a sidelink reference signal.

According to the foregoing technical solution, the first communication apparatus may obtain the identifier of the first resource, determine the first resource based on the identifier of the first resource, and send the reference signal on the first resource. The identifier of the first resource may be determined based on one or more of the length of the time domain resource available for transmission of the reference signal, the start position of the time domain resource used for transmission of the reference signal, and the length of the time domain resource used for transmission of the reference signal. In this way, for example, an association between an identifier of a resource used for transmission of a reference signal and a start position and a length of the resource may be established, or a relationship between an identifier of a resource used for transmission of a reference signal and a length of a time domain resource available for transmission of the reference signal may be established. Therefore, the resource of the reference signal can be determined and indicated. This manner may be applied to various communication scenarios.

For ease of description, the following describes the solutions in embodiments of this application by using an example in which the reference signal is an SL-PRS. Correspondingly, the first resource is used for transmission of the SL-PRS.

Optionally, that the first communication apparatus obtains the identifier of the first resource in step 701 includes but is not limited to any one of the following implementations.

In a first possible implementation, the first communication apparatus determines the identifier of the first resource.

Based on this manner, the first communication apparatus may determine the identifier of the first resource. In this way, an appropriate resource may be selected based on an actual communication situation for transmission of the SL-PRS. This is flexible.

In a second possible implementation, the first communication apparatus receives indication information #1, where the indication information #1 indicates the identifier of the first resource.

For example, the first communication apparatus receives the indication information #1 from a network device.

The indication information #1 may directly indicate the identifier of the first resource, or may indicate identifiers of a plurality of resources, where the identifiers of the plurality of resources include the identifier of the first resource. The following describes two examples by using an example in which the network device sends the indication information #1 to the first communication apparatus.

Example 1: The first communication apparatus receives the indication information #1 from the network device, where the indication information #1 directly indicates the identifier of the first resource. For example, the indication information #1 includes the identifier of the first resource.

Based on this manner, the network device may determine the identifier of the first resource, and indicate the identifier of the first resource to the first communication apparatus. The first communication apparatus may directly learn of the identifier of the first resource based on the indication information #1, to determine the first resource. In this way, a computation amount of the first communication apparatus can be reduced.

Example 2: The first communication apparatus receives the indication information #1 from the network device, where the indication information #1 indicates identifiers of a plurality of resources, and the identifiers of the plurality of resources include the identifier of the first resource. For example, the indication information #1 includes identifiers of a plurality of resources.

The first communication apparatus may determine the identifier of the first resource in the identifiers of the plurality of resources.

In an example, that the first communication apparatus determines the identifier of the first resource based on the identifiers of the plurality of resources includes: The first communication apparatus determines the identifier of the first resource based on the identifiers of the plurality of resources and at least one of the following: a time domain resource used for transmission of an SL reference signal, a time domain resource used for transmission of SL feedback information, and a time domain resource used for transmission of a PSSCH. The SL reference signal indicates a reference signal other than the SL-PRS. For example, the SL reference signal includes but is not limited to a phase-tracking reference signal (phase-tracking reference signal, PT-RS), a channel state information-reference signal (channel state information-reference signal, CSI-RS), a beam management reference signal (beam management reference signal, BM-RS), a DMRS, or the like.

For example, one slot is used as an example. The first communication apparatus determines a plurality of time domain resources (for example, a plurality of symbols) based on the identifiers of the plurality of resources, and then may exclude, from the plurality of time domain resources, the time domain resource (for example, a symbol) used for transmission of the SL reference signal, the time domain resource (for example, a symbol) used for transmission of the SL feedback information, and the time domain resource (for example, a symbol) used for transmission of the PSSCH, where a remaining time domain resource may be used as the first resource used for transmission of the SL-PRS.

For another example, it is assumed that the first resource is a continuous resource. One slot is used as an example. The first communication apparatus determines a plurality of time domain resources (for example, a plurality of symbols) based on the identifiers of the plurality of resources, and then may exclude the following resources: the time domain resource (for example, a symbol) used for transmission of the SL reference signal, the time domain resource (for example, a symbol) used for transmission of the SL feedback information, the time domain resource (for example, a symbol) used for transmission of the PSSCH, and inconsecutive time domain resources in the plurality of time domain resources, where a remaining time domain resource may be used as the first resource used for transmission of the SL-PRS.

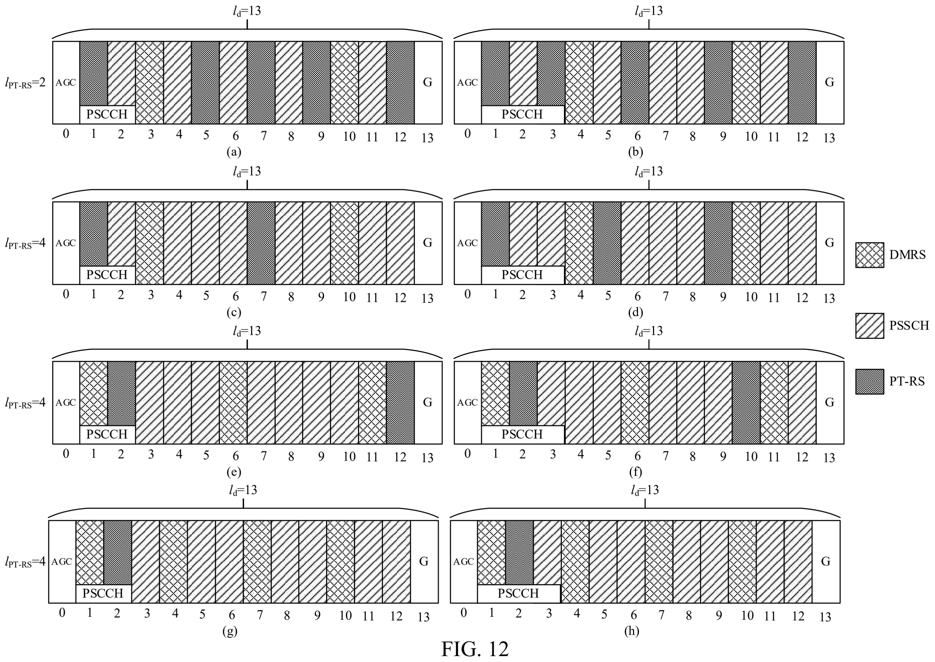

For another example, it is assumed that the identifiers of the plurality of resources include identifiers of k candidate resources, where k is an integer greater than 1. The first communication apparatus may determine the k candidate resources based on the identifiers of the k candidate resources. The first communication apparatus determines the first resource based on the k candidate resources and the time domain resource used for transmission of the SL reference signal (for example, a time domain resource used for transmission of a PT-RS), and may further determine the identifier of the first resource. The SL-PRS is used as an example. The candidate resource is a resource used for transmission of the SL-PRS. Specifically, the network device configures k candidate resources for the SL-PRS and notifies the first communication apparatus of the k candidate resources (for example, notifies the first communication apparatus by using the indication information #1); and the first communication apparatus selects, based on the k candidate resources, a candidate resource that does not overlap a time domain resource used for transmission of a PT-RS for transmission of the SL-PRS. This solution is described in detail below with reference to FIG. 12.

Based on this manner, the network device may determine a plurality of resource identifiers, and the first communication apparatus selects an appropriate resource identifier based on an actual communication situation. This can reduce a computation amount of the first communication apparatus, and this is also flexible.

It may be understood that the foregoing descriptions are example descriptions. This is not limited. For example, the indication information #1 may alternatively be other information, and there is an association relationship between the other information and the identifier of the first resource. In this way, the first communication apparatus may determine the identifier of the first resource based on the other information and the association relationship.

The following uses the SL-PRS as an example to describe a manner of determining the identifier of the first resource.

The identifier of the first resource is determined based on at least one of the following: a length of a time domain resource available for transmission of the SL-PRS, a start position of the time domain resource used for transmission of the SL-PRS, and a length of the time domain resource used for transmission of the SL-PRS. The following describes several solutions by using an example in which the first communication apparatus determines the identifier of the first resource. It may be understood that, for a manner of determining the identifier of the first resource by another apparatus, for example, the network device, refer to the following solutions. Details are not described herein.

Solution A: The identifier of the first resource is determined based on the length of the time domain resource available for transmission of the SL-PRS.

The following first describes the length of the time domain resource available for transmission of the SL-PRS.

In embodiments of this application, unless otherwise specified, a length of a time domain resource used for transmission of a signal may be a length of a time domain resource used for transmission of the signal in one time domain unit (for example, one slot), for example, a total quantity of symbols (briefly referred to as a quantity of symbols) used for transmission of the signal in one slot. For example, the length of the time domain resource used for transmission of the SL-PRS may be a quantity of symbols used for transmission of the SL-PRS in one slot. For another example, the length of the time domain resource used for transmission of the PSSCH may be a quantity of symbols used for transmission of the PSSCH in one slot. For another example, a length of a time domain resource used for transmission of a PSFCH may be a quantity of symbols used for transmission of the PSFCH in one slot. For another example, a length of a time domain resource used for transmission of a DMRS may be a quantity of symbols used for transmission of the DMRS in one slot. Others are similar, and details are not described again below.

The length of the time domain resource available for transmission of the SL-PRS indicates a length of a time domain resource that can be used for transmission of the SL-PRS, for example, a quantity of symbols that can be used for transmission of the SL-PRS in one slot. In other words, a length of a time domain resource actually used for transmission of the SL-PRS is less than or equal to the length of the time domain resource available for transmission of the SL-PRS; in other words, the time domain resource actually used for transmission of the SL-PRS is selected from the time domain resource available for transmission of the SL-PRS.

The length of the time domain resource available for transmission of the SL-PRS is determined based on a length of a time domain resource available for transmission of another signal or other information.

For example, a time domain resource available for transmission of an SL-PRS in one slot is a time domain resource other than a time domain resource used for transmission of another signal, another channel, or other information in time domain resources used for transmission of a PSSCH in the slot. The another signal or another channel may include but is not limited to at least one of the following: a PSFCH, a PSCCH, another reference signal, and the like. The another reference signal includes but is not limited to a PT-RS, a CSI-RS, a BM-RS, or a DMRS.

For another example, a time domain resource available for transmission of an SL-PRS in one slot is a time domain resource other than a time domain resource used for transmission of another signal, another channel, or other information in time domain resources used for sidelink transmission in the slot. The another signal or other information may include but is not limited to at least one of the following: AGC, a GAP, a PSFCH, a PSCCH, another reference signal, and the like. The another reference signal includes but is not limited to a PT-RS, a CSI-RS, a BM-RS, or a DMRS.

In a possible implementation, the length of the time domain resource available for transmission of the SL-PRS is determined based on at least one of the following: a length of a time domain resource used for transmission of a PSSCH, a length of a time domain resource used for transmission of a PSCCH, a length of a time domain resource used for transmission of a PSFCH, a length of a time domain resource used for transmission of a DMRS, a length of a time domain resource used for transmission of AGC, a length of a time domain resource used for transmission of a GAP, and a length of a time domain resource used for transmission of another reference signal. For example, a time domain resource available for transmission of an SL-PRS in one slot does not include at least one of the following: a time domain resource used for transmission of a PSSCH in the slot, a time domain resource used for transmission of a PSCCH in the slot, a time domain resource used for transmission of a PSFCH in the slot, a time domain resource used for transmission of a DMRS in the slot, a time domain resource used for transmission of AGC in the slot, a time domain resource used for transmission of a GAP in the slot, and a time domain resource used for transmission of another reference signal in the slot. The another reference signal includes but is not limited to a PT-RS, a CSI-RS, a BM-RS, or a DMRS. In addition, a person skilled in the art may know that the time domain resource used for transmission of the DMRS is related to a DMRS pattern (pattern). Therefore, the length of the time domain resource available for transmission of the SL-PRS is also related to the DMRS pattern. In addition, as shown in step 701, the identifier of the first resource is determined based on at least one of the following: the length of the time domain resource available for transmission of the reference signal, the start position of the time domain resource used for transmission of the reference signal, and the length of the time domain resource used for transmission of the reference signal. Therefore, in an example, the identifier of the first resource is determined based on at least one of the following: the time domain resource used for transmission of the PSSCH, the time domain resource used for transmission of the PSCCH, the DMRS pattern, and the length of the time domain resource used for transmission of the SL-PRS. Details are described below.

For brevity, the length of the time domain resource available for transmission of the SL-PRS is briefly referred to as Ma. The following provides descriptions with reference to some formulas.

In the following formulas, meanings of parameters are as follows:

(1) Ma represents a length of a time domain resource available for transmission of an SL-PRS. One slot is used as an example. Ma represents a quantity of symbols available for transmission of the SL-PRS in one slot.

(2) $l_d$ represents a length of a time domain resource used for transmission of a PSSCH. One slot is as an example. $l_d$ represents a quantity of symbols used for transmission of the PSSCH in one slot. Optionally, $l_d = l_{SL} - l_{PSFCH}$. $l_{SL}$ represents a length of a time domain resource used for sidelink transmission, and $l_{PSFCH}$ represents a length of a time domain resource used for transmission of a PSFCH. Based on this, it may be learned that $l_d$ represents the quantity of symbols used for transmission of the PSSCH in one slot other than symbols of the PSFCH.

(3) $l_d'$ represents a sidelink symbol length (for example, a symbol length indicated by a parameter sl-LengthSymbols-r16) minus 1. $l_d'$ may be configured (for example, configured by the network device), or may be pre-defined or pre-configured. This is not limited.

One slot is used as an example. If the slot includes symbols of a PSFCH, $l_d$ does not include a quantity of symbols of the PSFCH, and $l_d'$ includes the quantity of symbols of the PSFCH. FIG. 6 is used as an example. There are 14 symbols in the slot, and three of the 14 symbols are used for transmission of the PSFCH. In this case, $l_d$=10, and $l_d'$=13.

(4) $l_{PSCCH}$ represents a length of a time domain resource used for transmission of a PSCCH. One slot is as an example. $l_{PSCCH}$ represents a quantity of symbols used for transmission of the PSCCH in one slot. $l_{PSCCH}$ may be configured (for example, configured by the network device), or may be pre-defined or pre-configured. This is not limited. In addition, in an example, $l_{PSCCH}$ may be indicated by another communication apparatus (for example, the network device or another terminal device).

(5) $l_{PSFCH}$ represents the length of the time domain resource used for transmission of the PSFCH. One slot is as an example. $l_{PSFCH}$ represents a quantity of symbols used for transmission of the PSFCH in one slot. In an example, a value of $l_{PSFCH}$ is any one of the following: 0, 1, 2, or 3.

(6) $l_{DMRS}$ represents a length of a time domain resource used for transmission of a DMRS. One slot is as an example. $l_{DMRS}$ represents a quantity of symbols used for transmission of the DMRS in one slot.

Solution 1: Ma is determined based on the following: the length of the time domain resource used for transmission of the PSSCH, the length of the time domain resource used for transmission of the PSCCH, and the length of the time domain resource used for transmission of the PSFCH.

According to this solution, in a possible implementation, Ma satisfies a formula 1 or a formula 2.

$$Ma=l_d-l_{PSCCH}-X1$$

Formula 1

$$Ma=l_d{}'-l_{PSCCH}-l_{PSFCH}-X1$$

Formula 2

X1 is a constant or a configured parameter.

Optionally, a resource of X1 is related to a type of a resource pool. Types of the resource pool include a shared resource pool and a dedicated resource pool. In this application, the shared resource pool is a resource pool that can be used for transmission of both an SL-PRS and a PSSCH, and the dedicated resource pool is a resource pool that can be used for transmission of a PSSCH but cannot be used for transmission of an SL-PRS.

For example, for the shared resource pool, a value of X1 is 1. For another example, for the dedicated resource pool, a value of X1 is 2.

Based on the foregoing implementation, when a time domain resource (for example, a quantity of symbols) available for transmission of the SL-PRS in one slot is determined, a time domain resource used for transmission of the PSCCH and a time domain resource used for transmission of the PSFCH in the slot may be removed, and a time domain resource used for transmission of another signal (for example, AGC and a DMRS) may be removed by using a design of the constant X1.

The value of X1 may be, for example, any one of the following: 0, 1, 2, or 3. In an example, different values of $l_d$ (or $l_d$ in different value ranges) may correspond to different values of X1.

Example 1: The value of X1 is 2 or 3.

For example, if $9 \leq l_d \leq 13$, X1=3, in other words, Ma=$l_d$-$l_{PSCCH}$-3 or Ma=$l_d$'-$l_{PSCCH}$-$l_{PSFCH}$-3.

For another example, if $6 \leq l_d \leq 8$, X1=2, in other words, Ma=$l_d$-$l_{PSSCH}$-2 or Ma=$l_d$'-$l_{PSCCH}$-$l_{PSFCH}$-2.

In the foregoing example, a time domain resource used for transmission of another signal (for example, AGC or a DMRS) may be removed by using a design of the constant X1. In this manner, Ma may be determined more accurately, and signaling overheads caused by notifying Ma are reduced.

Example 2: The value of X1 is 0 or 1.

In the foregoing example, the time domain resource used for transmission of the another signal (for example, the AGC) may be removed by using the design of the constant X1. In this manner, Ma is determined in a unified manner without distinguishing between different scenarios, so that a computation amount is reduced.

$$l_{PSFCH} \geq 0.$$

For example, if no symbol in the slot is used for transmission of the PSFCH, $l_{PSFCH}$=0.

For another example, if there is a symbol, in the slot, used for transmission of the PSFCH, $l_{PSFCH}$>0. In an example, $l_{PSFCH}$=2 or 3.

(1) in FIG. 5 is as an example, where $l_d$=13. Assuming that X1=3, based on the formula 1, Ma=$l_d$-$l_{PSCCH}$-X1=13-2-3=8.

For another example, (2) in FIG. 5 is used as an example, where $l_d$=6. Assuming that X1=2, based on the formula 1, Ma=$l_d$-$l_{PSCCH}$-X1=6-2-2=2.

It may be understood that the foregoing formula 1 and formula 2 are examples for description, and variation formulas of the foregoing formula 1 and formula 2 are both applicable to this application. For example, the foregoing formula 1 may be replaced with $Ma=l_d-l_{PSCCH}-X1-X1a$, or the foregoing formula 2 may be replaced with $Ma=l_d'-l_{PSCCH}-l_{PSFCH}-X1a$. A value of X1a may be determined by a transmit end (for example, the first communication apparatus), may be determined by another apparatus, may be indicated by configuration information, or may be pre-defined. This is not limited. X1a may be designed to limit, in a resource pool (for example, a shared resource pool), a quantity of symbols for sending the PSSCH or symbols reserved based on a minimum quantity of symbols. In this way, a quantity of available symbols of the SL-PRS may be accurately determined in a slot in which transmission of the PSSCH exists, to further reduce signaling indication overheads.

Solution 2: Ma is determined based on the following: the length of the time domain resource used for transmission of the PSSCH, the length of the time domain resource used for transmission of the PSCCH, the length of the time domain resource used for transmission of the PSFCH, and the length of the time domain resource used for transmission of the DMRS.

In a possible implementation, Ma satisfies a formula 3 or a formula 4.

$$Ma=l_d-l_{PSCCH}-l_{DMRS}-X2$$

<div align="right">Formula 3</div>

$$Ma=l_d'-l_{PSCCH}-l_{DMRS}-l_{PSFCH}-X2$$

<div align="right">Formula 4</div>

X2 is a constant.

Based on the foregoing implementation, when a time domain resource (for example, a quantity of symbols) available for transmission of the SL-PRS in one slot is determined, a time domain resource used for transmission of the PSCCH, a time domain resource used for transmission of the PSFCH, and a time domain resource used for transmission of the DMRS in the slot may be removed, and a time domain resource used for transmission of another signal (for example, AGC) may be removed by using a design of the constant X2. In this manner, Ma may be determined more accurately, and signaling overheads caused by notifying Ma are reduced.

In an example, X2=0 or 1.

In an example, $l_{PSFCH2}\geq0$.

For example, if no symbol in the slot is used for transmission of the PSFCH, $l_{PSFCH}=0$.

For another example, if there is a symbol, in the slot, used for transmission of the PSFCH, $l_{PSFCH}>0$. In an example, $l_{PSFCH}=2$ or 3.

In an example, $l_{DMRS}\geq0$.

For example, if no symbol in the slot is used for transmission of the DMRS, $l_{DMRS}=0$.

For another example, if there is a symbol, in the slot, used for transmission of the DMRS, $l_{DMRS}>0$. In an example, $l_{PSFCH}=2$, 3, or 4.

(1) in FIG. 5 is used as an example, where $l_d=13$. Assuming that X2=1, based on the formula 3, $Ma=l_d-l_{PSCCH}-l_{DMRS}-X3=13-2-2-1=8$.

It may be understood that the foregoing formula 3 and formula 4 are examples for description, and variation formulas of the foregoing formula 3 and formula 4 are both applicable to this application. For example, the foregoing formula 3 may be replaced with $Ma=l_d-l_{PSCCH}-l_{DMRS}-X2-X2a$, or the formula 4 may be replaced with $Ma=l_d'-l_{PSCCH}-l_{DMRS}-l_{PSFCH}-X2-X2a$. A value of X2a may be determined by a transmit end (for example, the first communication apparatus), may be determined by another apparatus, may be indicated by configuration information, or may be pre-defined. This is not limited. X2a may be designed to limit, in a resource pool (for example, a shared resource pool), a quantity of symbols for sending the PSSCH or symbols reserved based on a minimum quantity of symbols. In this way, a quantity of available symbols of the SL-PRS may be accurately determined in a slot in which transmission of the PSSCH exists, to further reduce signaling indication overheads.

Solution 3: Ma is determined based on the following: the length of the time domain resource used for transmission of the PSSCH.

In a possible implementation, Ma satisfies a formula 5 or a formula 6.

$$Ma=l_d-X3$$

<div align="right">Formula 5</div>

$$Ma = l_d' - l_{PSFCH} - X3$$

<div align="right">Formula 6</div>

X3 is a constant.

In an example, X3=0 or 1.

Based on the foregoing implementation, a time domain resource (for example, a quantity of symbols) available for transmission of the SL-PRS in one slot may be a time domain resource used for transmission of the PSSCH. In this manner, Ma is determined in a unified manner without distinguishing between different scenarios, so that a computation amount is reduced.

It may be understood that the foregoing formula 5 and formula 6 are examples for description, and variation formulas of the foregoing formula 5 and formula 6 are both applicable to this application. For example, the foregoing formula 5 may be replaced with $Ma = l_d - X3 - X3a$, or the foregoing formula 6 may be replaced with $Ma = l_d' - l_{PSFCH} - X3 - X3a$. A value of X3a may be determined by a transmit end (for example, the first communication apparatus), may be determined by another apparatus, may be indicated by configuration information, or may be pre-defined. This is not limited. X3a may be designed to limit, in a resource pool (for example, a shared resource pool), a quantity of symbols for sending the PSSCH or symbols reserved based on a minimum quantity of symbols. In this way, a quantity of available symbols of the SL-PRS may be accurately determined in a slot in which transmission of the PSSCH exists, to further reduce signaling indication overheads.

It may be understood that the foregoing three solutions are merely examples for description, and variations of the foregoing three solutions are all applicable to embodiments of this application. For example, a time domain resource (for example, a quantity of symbols) of another reference signal is subtracted in the foregoing formula 1 to formula 6.

It may be further understood that the foregoing three solutions may be applied to a dedicated resource pool, or may be applied to a shared resource pool.

The foregoing describes a related solution of the length of the time domain resource available for transmission of the SL-PRS, and the following describes the solution A.

It may be learned from the solution A that the identifier of the first resource is determined based on the length of the time domain resource available for transmission of the SL-PRS.

Optionally, the identifier of the first resource is obtained by encoding the length of the time domain resource available for transmission of the SL-PRS. In this manner, some unnecessary identifiers (or states) can be avoided from being indicated, and signaling overheads can be reduced.

Optionally, the identifier of the first resource is obtained by encoding the length of the time domain resource available for transmission of the SL-PRS, where only one frequency domain offset value (or subcarrier offset value) exists on each symbol. In this manner, some unnecessary identifiers (or states) can be avoided from being indicated, and signaling overheads can be reduced.

For example, assuming that there are Ma symbols that can be used for transmission of the SL-PRS in one slot, encoding may be performed based on an SL-PRS symbol length that can be supported.

Optionally, the identifier of the first resource satisfies any one of the following:

$$n_{id} = S_{start};$$

$$n_{id} = S_{start} + Ma;$$

or

$$n_{id} = S_{start} + 2Ma - 1.$$

$n_{id}$ represents the identifier of the first resource, $S_{start}$ represents the start position of the time domain resource used for transmission of the SL-PRS, and Ma represents the length of the time domain resource available for transmission of the SL-PRS. In an example, a value of $n_{id}$ expressed in the foregoing three manners may indicate at least two SL-PRS symbol lengths. For example, different SL-PRS symbol lengths correspond to different values of $n_{id}$.

One example is used below. Based on a specific example, two implementations are listed.

It is assumed that there are three SL-PRS symbol lengths that can be supported, denoted as $M_1$, $M_2$, and $M_3$, and $M_1 < M_2 < M_3$. In an example, $M_1=1$, $M_2=2$, and $M_3=4$.

In a first possible implementation, the identifier of the first resource satisfies a formula 7.

$$\text{If } 0 \leq n_{id} \leq Ma - M_1, \ n_{id} = S_{start}, \text{ and } M = M_1.$$

$$\text{If } Ma - M_1 + 1 \leq n_{id} \leq 2Ma - M_1 - M_2 + 1, \ n_{id} = S_{start} + Ma, \text{ and } M = M_2.$$

$$\text{If } 2Ma - M_1 - M_2 + 2 \leq n_{id} \leq 3Ma - M_1 - M_2 - M_3 + 2, \ n_{id} = S_{start} + 2Ma - 1, \text{ and } M = M_3.$$

Formula 7

$n_{id}$ represents a symbol index of the first resource in one slot. $S_{start}$ represents a start symbol of the SL-PRS in one slot. M represents a symbol length of the SL-PRS in one slot.

A slot structure shown in (1) in FIG. 5 is used as an example below for description.

It is assumed that $Ma = l_d - l_{PSCCH} - X1$, and $X1 = 3$.

As shown in (1) in FIG. 5, $l_d = 13$, and $Ma = l_d - l_{PSCCH} - X1 = 13 - 2 - 3 = 8$. Based on the foregoing implementation, it is assumed that the SL-PRS symbol lengths that can be supported are respectively $M_1 = 1$, $M_2 = 2$, and $M_3 = 4$. Therefore, when Ma symbols (that is, 8 symbols) are encoded, there are 20 (8+7+5=20) possible identifier values in total. "8" indicates that when a quantity of symbols of the first resource is $M_1$ (that is, M=1), there are eight values of the identifier; "7" indicates that when a quantity of symbols of the first resource is $M_2$ (that is, M=2), there are seven values of the identifier; and "5" indicates that when a quantity of symbols of the first resource is $M_3$ (that is, M=4), there are five values of the identifier. If the identifier of the first resource is indicated by using a binary bit, a used state (namely, an identifier) may be indicated by using five bits, to reduce signaling overheads.

Specifically, it may be learned from (1) in FIG. 5 that the eight symbols are respectively a symbol 4, a symbol 5, a symbol 6, a symbol 7, a symbol 8, a symbol 9, a symbol 11, and a symbol 12. Assuming that the value of the identifier of the first resource is numbered from 0, the value of the identifier of the first resource may be {0, 1, 2, 3, 4, 5, 6, 7, 8, 9, 10, 11, 12, 13, 14, 15, 16, 17, 18, 19}.

If $M = M_1 = 1$, the value of the identifier of the first resource may be {0, 1, 2, 3, 4, 5, 6, 7}. The identifier "0" corresponds to the symbol 4, the identifier "1" corresponds to the symbol 5, the identifier "2" corresponds to the symbol 6, the identifier "3" corresponds to the symbol 7, the identifier "4" corresponds to the symbol 8, the identifier "5" corresponds to the symbol 9, the identifier "6" corresponds to the symbol 11, and the identifier "7" corresponds to the symbol 12.

If $M = M_2 = 2$, the value of the identifier of the first resource may be {8, 9, 10, 11, 12, 13, 14}. The identifier "8" corresponds to the symbol 4 and the symbol 5, the identifier "9" corresponds to the symbol 5 and the symbol 6, the identifier "10" corresponds to the symbol 6 and the symbol 7, the identifier "11" corresponds to the symbol 7 and the symbol 8, the identifier "12" corresponds to the symbol 8 and the symbol 9, the identifier "13" corresponds to the symbol 9 and the symbol 11, and the identifier "14" corresponds to the symbol 11 and the symbol 12.

If $M = M_3 = 4$, the value of the identifier of the first resource may be {15, 16, 17, 18, 19}. The identifier "15" corresponds to the symbol 4, the symbol 5, the symbol 6, and the symbol 7; the identifier "16" corresponds to the symbol 5, the symbol 6, the symbol 7, and the symbol 8; the identifier "17" corresponds to the symbol 6, the symbol 7, the symbol 8, and the symbol 9; the identifier "18" corresponds to the symbol 7, the symbol 8, the symbol 9, and the symbol 11; and the identifier "19" corresponds to the symbol 8, the symbol 9, the symbol 11, and the symbol 12.

For example, if the identifier that is of the first resource and that is indicated by the first communication apparatus is "4", and M is 1, it may be learned, based on the foregoing correspondence, that a time domain resource on which the SL-PRS is located is the symbol 8. For another example, if the identifier that is of the first resource and that is indicated by the first communication apparatus is "10", and M is 2, it may be learned, based on the foregoing correspondence, that a time domain resource on which the SL-PRS is located is the symbol 6 and the symbol 7. For another example, if the identifier that is of the first resource and that is indicated by the first communication apparatus is "13", and M is 2, it may be learned, based on the foregoing correspondence, that a time domain resource on which the SL-PRS is located is the symbol 9 and the symbol 11. Assuming that consecutive time domain resources are used for transmission of the SL-PRS, it may be considered that the symbol 9 and the symbol 11 that are indicated by the identifier "13" of the first resource are of invalid values, because the symbol 9 and the symbol 11 are inconsecutive. For another example, if the identifier that is of the first resource and that is indicated by the first communication apparatus is "17", and M is 4, it may be learned, based on the foregoing correspondence, that a time domain resource on which the SL-PRS is located is the symbol 6, the symbol 7, the symbol 8, and the symbol 9.

In a second possible implementation, the identifier of the first resource satisfies a formula 8.

$$\text{If } 0 \leq n_{id} \leq Ma - M_1 - M_{1e}, \ n_{id} = S_{start}, \text{ and } M = M_1.$$

$$\text{If } Ma - M_1 - M_{1e} + 1 \leq n_{id} \leq 2Ma - M_1 - M_2 - M_{1e} - M_{2e} + 1, \ n_{id} = S_{start} + Ma, \text{ and } M = M_2.$$

$$\text{If } 2Ma - M_1 - M_2 - M_{1e} - M_{2e} + 2 \leq n_{id} \leq 3Ma - M_1 - M_2 - M_3 - M_{1e} - M_{2e} - M_{3e} + 2, \ n_{id} = S_{start} + 2Ma - 1, \text{ and }$$

$$M = M_3.$$

<div align="right">Formula 8</div>

$M_{1e}$, $M_{2e}$, and $M_{3e}$ respectively represent identifier values that need to be excluded when the SL-PRS symbol lengths are $M_1$, $M_2$, and $M_3$. The identifier value that needs to be excluded may be an identifier of a resource occupied by the DMRS. Specifically, when the identifier of the first resource is determined, an invalid identifier value may be directly excluded based on a DMRS pattern used when the first communication apparatus sends the DMRS.

The slot structure shown in (1) in FIG. 5 is used as an example below, and examples are listed for description.

It is assumed that $Ma = l_d - l_{PSCCH} - l_{DMRS} - X2$, and $X2 = 1$.

As shown in (1) in FIG. 5, $l_d = 13$, and $Ma = l_d - l_{PSCCH} - l_{DMRS} - X3 = 13 - 2 - 2 - 1 = 8$. Based on the foregoing implementation, it is assumed that the SL-PRS symbol lengths that can be supported are respectively $M_1 = 1$, $M_2 = 2$, and $M_3 = 4$. Therefore, when Ma symbols (that is, 8 symbols) are encoded, there are 17 (8+6+3=17) possible identifier values in total. "8" indicates that when a quantity of symbols of the first resource is $M_1$ (that is, M=1), there are eight values of the identifier; "6" indicates that when a quantity of symbols of the first resource is $M_2$ (that is, M=2), there are six values of the identifier; and "3" indicates that when a quantity of symbols of the first resource is $M_3$ (that is, M=4), there are three values of the identifier. If the identifier of the first resource is indicated by using a binary bit, a used state (namely, an identifier) may be indicated by using five bits, to reduce signaling overheads.

Specifically, it may be learned from (1) in FIG. 5 that the eight symbols are respectively a symbol 4, a symbol 5, a symbol 6, a symbol 7, a symbol 8, a symbol 9, a symbol 11, and a symbol 12. Assuming that the value of the identifier of the first resource is numbered from 0, the value of the identifier of the first resource may be {0, 1, 2, 3, 4, 5, 6, 7, 8, 9, 10, 11, 12, 13, 14, 15, 16}.

If $M = M_1 = 1$, the value of the identifier of the first resource may be {0, 1, 2, 3, 4, 5, 6, 7}. The identifier "0" corresponds to the symbol 4, the identifier "1" corresponds to the symbol 5, the identifier "2" corresponds to the symbol 6, the identifier "3" corresponds to the symbol 7, the identifier "4" corresponds to the symbol 8, the identifier "5" corresponds to the symbol 9, the identifier "6" corresponds to the symbol 11, and the identifier "7" corresponds to the symbol 12.

If $M = M_2 = 2$, the value of the identifier of the first resource may be {8, 9, 10, 11, 12, 13}. The identifier "8" corresponds to the symbol 4 and the symbol 5, the identifier "9" corresponds to the symbol 5 and the symbol 6, the identifier "10" corresponds to the symbol 6 and the symbol 7, the identifier "11" corresponds to the symbol 7 and the symbol 8, the identifier "12" corresponds to the symbol 8 and the symbol 9, and the identifier "13" corresponds to the symbol 11 and the symbol 12.

If $M = M_3 = 4$, the value of the identifier of the first resource may be {14, 15, 16}. The identifier "14" corresponds to the symbol 4, the symbol 5, the symbol 6, and the symbol 7; the identifier "15" corresponds to the symbol 5, the symbol 6, the symbol 7, and the symbol 8; and the identifier "16" corresponds to the symbol 6, the symbol 7, the symbol 8, and the symbol 9.

For example, if the identifier that is of the first resource and that is indicated by the first communication apparatus is "4", and M is 1, it may be learned, based on the foregoing correspondence, that a time domain resource on which the SL-PRS is located is the symbol 8. For another example, if the identifier that is of the first resource and that is indicated by the first communication apparatus is "10", and M is 2, it may be learned, based on the foregoing correspondence, that a time domain resource on which the SL-PRS is located is the symbol 6 and the symbol 7. For another example, if the identifier that is of the first resource and that is indicated by the first communication apparatus is "13", and M is 2, it may be learned, based on the foregoing correspondence, that a time domain resource on which the SL-PRS is located is the symbol 11 and the symbol 12. For another example, if the identifier that is of the first resource and that is indicated by the first communication apparatus is "16", and M is 4, it may be learned, based on the foregoing correspondence, that a time domain resource on which the SL-PRS is located is the symbol 6, the symbol 7, the symbol 8, and the symbol 9.

Optionally, the first resource is further determined based on at least one of the following: a time domain resource used for transmission of a sidelink reference signal, a time domain resource used for transmission of sidelink feedback information, and a time domain resource used for transmission of a PSSCH.

In a possible implementation, that the first communication apparatus obtains the identifier of the first resource in step 701 includes: The first communication apparatus obtains identifiers of N resources by encoding the length of the time domain resource available for transmission of the SL-PRS, where N is an integer greater than 1; the first communication apparatus determines the identifier of the first resource based on the identifiers of the N resources and a preset rule, where the preset rule indicates that the first resource is a continuous resource, and/or the first resource does not include at least one of the following: the time domain resource used for transmission of the sidelink reference signal, the time domain resource used for transmission of the sidelink feedback information, and the time domain resource used for transmission of the PSSCH.

Specifically, after the first resource is determined according to the foregoing solution A, an invalid ID value (or an invalid state) may be excluded.

The invalid ID value may include but is not limited to a resource that conflicts with another signal and/or inconsecutive resources.

Specifically, after determining SL-PRS IDs corresponding to combinations of start positions and lengths of time domain resources of all SL-PRSs, the first communication apparatus may determine, based on an actual situation, time domain resources that are of specific PSSCHs and that are occupied by another signal. When determining a resource used for the SL-PRS, the first communication apparatus needs to ensure that the time domain resource of the SL-PRS does not overlap the time domain resources occupied by the another signal, in other words, the first communication apparatus selects an appropriate SL-PRS ID to avoid overlapping between the time domain resource of the SL-PRS and the time domain resources occupied by the another signal.

The another signal includes but is not limited to a sidelink reference signal and sidelink feedback information. The sidelink reference signal indicates a reference signal other than the SL-PRS, and may include but is not limited to a PT-RS, a CSI-RS, a BM-RS, or a DMRS. The sidelink feedback information includes, for example, a PSFCH.

In another possible implementation, the first resource overlaps a third resource, the third resource is used for transmission of a sidelink reference signal, and the method 700 further includes: sending the sidelink reference signal on a resource that is in the third resource and that does not overlap the first resource. For example, after the first communication apparatus determines the first resource, if a part of the first resource overlaps the third resource, in other words, the part of the resource is further used for transmission of the sidelink reference signal (for example, a PT-RS), only the SL-PRS is sent and the PT-RS is not sent at an overlapping position. This solution is described in detail below with reference to FIG. 12.

For example, the first communication apparatus (or the network device) determines the first resource based on the length (for example, $l_d$) of the time domain resource available for transmission of the SL-PRS, the time domain resource used for transmission of the DMRS, and the length of the time domain resource used for transmission of the SL-PRS; and if a resource in the first resource overlaps the third resource, the first communication apparatus sends only the SL-PRS but does not send the PT-RS at an overlapping position.

Solution B: The identifier of the first resource is determined based on the start position and the length of the time domain resource used for transmission of the SL-PRS.

The following first describes the start position and the length of the time domain resource used for transmission of the SL-PRS.

The start position of the time domain resource used for transmission of the SL-PRS may indicate a start symbol used for transmission of the SL-PRS in one slot.

The length of the time domain resource used for transmission of the SL-PRS may indicate a quantity of symbols used for transmission of the SL-PRS in one slot.

Optionally, the first communication apparatus may obtain, based on the following manners, the start position and the length of the time domain resource used for transmission of the SL-PRS.

In a first possible implementation, the first communication apparatus determines the start position and the length of the time domain resource used for transmission of the SL-PRS.

Based on this, the first communication apparatus may determine, based on an actual communication situation, the start position and the length of the time domain resource used for transmission of the SL-PRS in one slot.

In a second possible implementation, another apparatus (for example, the network device) sends indication information #2 to the first communication apparatus, where the indication information #2 indicates the start position of the time domain resource used for transmission of the SL-PRS and/or the length of the time domain resource used for transmission of the SL-PRS.

In an example, the indication information #2 is carried in SCI.

In an example, the indication information #2 indicates the start position of the time domain resource used for transmission of the SL-PRS and the length of the time domain resource used for transmission of the SL-PRS. Based on this, the another apparatus may indicate, to the first communication apparatus, the start position and the length of the time domain resource used for transmission of the SL-PRS.

In another example, the indication information #2 indicates the start position of the time domain resource used for transmission of the SL-PRS, and the first communication apparatus determines the length of the time domain resource used for transmission of the SL-PRS. Based on this, the another apparatus may indicate, to the first communication apparatus, the start position of the time domain resource used for transmission of the SL-PRS, and the first communication apparatus may determine an appropriate length based on an actual communication situation and the start position indicated by the another apparatus.

In another example, the indication information #2 indicates the length of the time domain resource used for transmission of the SL-PRS, and the first communication apparatus determines the start position of the time domain resource used for transmission of the SL-PRS. Based on this, the another apparatus may indicate, to the first communication apparatus, the length of the time domain resource used for transmission of the SL-PRS, and the first communication apparatus may determine an appropriate start position based on an actual communication situation and the length indicated by the another apparatus.

Optionally, the identifier of the first resource is obtained by encoding the start position and the length of the time domain resource used for transmission of the SL-PRS. This manner avoids complex calculation when the SL-PRS resource is indicated, and the resource indication is flexible.

For example, the value of the identifier of the first resource is N bits, and the N bits include a first bit and a second bit. The first bit of the identifier of the first resource is related to the start position of the time domain resource used for transmission of the SL-PRS, and the second bit of the identifier of the first resource is related to the length of the time domain resource used for transmission of the SL-PRS; the second bit of the identifier of the first resource is related to the start position of the time domain resource used for transmission of the SL-PRS, and the first bit of the identifier of the first resource is related the length of the time domain resource used for transmission of the SL-PRS; or the identifier of the first resource is obtained by jointly encoding the length of the time domain resource used for transmission of the SL-PRS and the start position of the time domain resource used for transmission of the SL-PRS.

In an example, the first bit is a most significant bit of the identifier of the first resource, and the second bit is a least significant bit of the identifier of the first resource. The following describes several implementations by using an example in which the first bit is a most significant bit of the identifier of the first resource, and the second bit is a least significant bit of the identifier of the first resource.

In a first possible implementation, the most significant bit MSB of the identifier of the first resource is related to a position of the start symbol of the SL-PRS, and the least significant bit LSB of the identifier of the first resource is related to the quantity of symbols of the SL-PRS.

In an example, the most significant bit MSB of the identifier of the first resource is set as the start symbol of the SL-PRS, and the least significant bit LSB of the identifier of the first resource is set as the quantity of symbols of the SL-PRS. For example, the identifier of the first resource is [start, duration]. "start" indicates a start symbol occupied by the first resource, and "duration" indicates a quantity of symbols occupied by the first resource.

(1) in FIG. 5 is used as an example. There are nine cases of the start symbol of the SL-PRS (in other words, the start symbol of the SL-PRS is a symbol in 4 to 12), and the start symbol is indicated by using 4 bits. There are three SL-PRS symbol lengths (for example, 1, 2, and 4), and the symbol length occupies two bits. Based on the foregoing manner, an identifier of an SL-PRS resource may be indicated by using five bits.

In a second possible implementation, the most significant bit MSB of the identifier of the first resource is related to the quantity of symbols of the SL-PRS, and the least significant bit LSB of the identifier of the first resource is related to the start symbol of the SL-PRS.

In an example, the most significant bit MSB of the identifier of the first resource is set as the quantity of symbols of the SL-PRS, and the least significant bit LSB of the identifier of the first resource is set as the start symbol of the SL-PRS. For example, the identifier of the first resource is [duration, start].

The second possible implementation is similar to the first possible implementation. Details are not described herein again.

In a third possible implementation, the start symbol of the SL-PRS and the quantity of symbols of the SL-PRS are jointly encoded. For example, a total quantity of encoded IDs is a product of a quantity of SL-PRS symbols and a quantity of all SL-PRS lengths.

(1) in FIG. 5 is used as an example. There are nine cases of the start symbol of the SL-PRS (in other words, the start symbol of the SL-PRS is a symbol in 4 to 12), and there are three SL-PRS symbol lengths (for example, 1, 2, and 4). Therefore, based on the foregoing manner, during joint encoding, there are totally 3*9=27 types of the value of the identifier of the first resource, and an identifier of an SL-PRS resource may be indicated by using five bits.

It may be understood that the foregoing separately describes the solutions of determining the identifier of the first resource based on the length (namely, Ma) of the time domain resource available for transmission of the SL-PRS, and determining the identifier of the first resource based on the start position and the length of the time domain resource used for transmission of the SL-PRS. This is not limited in this embodiment of this application. In an example, the identifier of the first resource may alternatively be determined based on Ma and the start position of the time domain resource used for transmission of the SL-PRS. For example, the length of the time domain resource used for transmission of the SL-PRS in the foregoing solution B is replaced with Ma. In another example, the identifier of the first resource may alternatively be determined based on Ma and the start position and the length of the time domain resource used for transmission of the SL-PRS. For example, the start position and the length of the time domain resource used for transmission of the SL-PRS in the foregoing solution B may be determined based on Ma. For example, the first communication apparatus determines Ma, and determines, in Ma, the start position and the length of the time domain resource used for transmission of the SL-PRS, so that the identifier of the first resource may be determined according to the foregoing solution B.

It may be further understood that the foregoing provides example descriptions by mainly using the example in which the first communication apparatus determines the identifier of the first resource. This is not limited. For example, alternatively, the network device may determine the identifier of the first resource according to the foregoing solution A or solution B, and then indicate the identifier of the first resource to the first communication apparatus. For another example, alternatively, the network device may determine identifiers of a plurality of resources according to the foregoing solution A or solution B, and then indicate the identifiers of the plurality of resources to the first communication apparatus. The first communication apparatus determines the identifier of the first resource in the identifiers of the plurality of resources.

The foregoing describes the related solution of the identifier of the first resource. It may be understood that the foregoing descriptions are example descriptions, and any variation solution that belongs to the foregoing solution is applicable to embodiments of this application. For example, in the foregoing solution A, Ma may alternatively be replaced with the length of the time domain resource used for transmission of the SL-PRS.

Optionally, the method 700 further includes: The second communication apparatus obtains the identifier of the first resource or the first resource. Based on this, the second communication apparatus may learn of the position of the first resource, and then receive the reference signal on the first resource. Further, optionally, the second communication apparatus may perform a related operation based on the received reference signal. For example, if the reference signal is an SL-PRS, the second communication apparatus may perform positioning based on the SL-PRS to obtain positioning-related information.

In a possible implementation, the second communication apparatus receives indication information #3, where the indication information #3 indicates the first resource or the identifier of the first resource. For example, the second communication apparatus receives the indication information #3 from the first communication apparatus. For another example, the second communication apparatus receives the indication information #3 from a network device.

The indication information #3 may be, for example, carried in SCI. Specifically, the first communication apparatus sends SCI to the second communication apparatus, where the SCI includes the indication information #3.

In an example, the indication information #3 indicates the first resource.

For example, the indication information #3 includes at least one of the following: a start position of the first resource in time domain, a length of the first resource in time domain, an end position of the first resource in time domain, an offset of the first resource in frequency domain, and a comb size of the first resource in frequency domain.

In another example, the indication information #3 indicates the identifier of the first resource.

The identifier of the first resource indicates the first resource. Therefore, the second communication apparatus may learn of the position of the first resource based on the identifier of the first resource, and may further receive the SL-PRS at the position.

For example, if there is an association relationship between the identifier of the first resource and a start position and a length of the first resource, for example, the identifier of the first resource is generated according to the foregoing solution B, the second communication apparatus may learn of the start position of the first resource based on the identifier of the first resource, a length that is of the first resource and that is determined in a current slot, and the association relationship.

The positioning-related information may include, for example, but is not limited to, a measurement result that is of a positioning measurement quantity and that is obtained based on the SL-PRS, and location information that is of a communication apparatus (for example, the second communication apparatus and/or the first communication apparatus) and that is obtained based on the SL-PRS.

In an example, the positioning measurement quantity may include one or more of the following: an angle, time, a power, and the like.

The angle may be, for example, an angle of arrival (angle of arrival, AOA).

The time may include, for example, one or more of the following: a transmit and receive timing difference, reference signal sending time, reference signal arrival time, an arrival time difference, and the like.

The power may include, for example, one or more of the following: a reference signal received power (reference signal received power, RSRP) and a reference signal received power per path (reference signal received power per path, RSRPP).

Further, optionally, the second communication apparatus determines the SL-PRS resource based on the identifier of the first resource and at least one of the following: the length of the time domain resource of the PSCCH, the DMRS pattern, and the length of the time domain resource of the PSFCH.

For example, the length of the time domain resource of the PSCCH, for example, a quantity of symbols occupied by the PSCCH, may be indicated by the configuration information.

For example, the DMRS pattern may be indicated by the first communication apparatus.

For example, the length of the time domain resource of the PSFCH may be a quantity of symbols occupied by the PSFCH in a current time domain unit (for example, a current slot). For example, the second communication apparatus may determine the first resource based on the identifier of the first resource and whether a PSFCH resource exists in a current time domain unit.

In this manner, after receiving the identifier of the first resource, the second communication apparatus further determines, based on at least one of the following information, a physical resource actually occupied by the SL-PRS corresponding to the identifier of the first resource: the quantity of symbols occupied by the PSCCH, the DMRS pattern, and whether a PSFCH resource exists in a current receiving slot. After the second communication apparatus obtains the foregoing information, the second communication apparatus has the same understanding as the first communication apparatus on a quantity and positions of symbols that can be used for transmission of the SL-PRS in the current slot. Then, the second communication apparatus may uniquely determine, based on the received indication information of the identifier of the SL-PRS resource, a position (for example, positions of a start symbol and an end symbol) corresponding to the SL-PRS resource in the slot. Therefore, under a condition that indication signaling of the SCI is reduced, the second communication apparatus and the first communication apparatus accurately indicate the SL-PRS resource, to avoid a resource indication error.

Optionally, the method 700 further includes: The first communication apparatus sends reservation information in a first slot in which the first resource is located, where the reservation information indicates at least one second slot, the second slot is a slot in which a data packet is retransmitted, and the first slot and/or the second slot further include/includes a second resource used for transmission of the SL-PRS.

The reservation information may indicate resource reservation information between retransmission. In an example, the reservation information may be carried in SCI.

The first slot is located before the second slot. The first slot may be a slot in which a data packet is initially transmitted, or the first slot may be a slot in which a data packet is retransmitted.

For a manner of determining an identifier of the second resource, refer to the manner of determining the identifier of the first resource. Details are not described herein again.

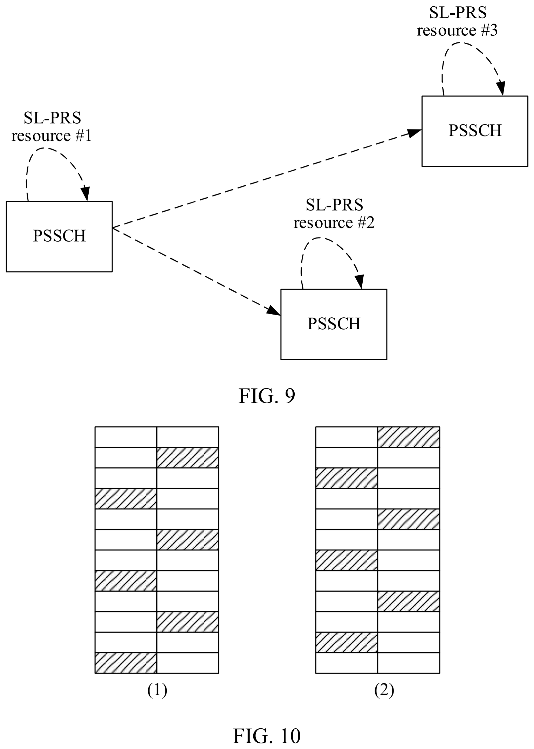

FIG. 9 is a diagram of PSSCH and SL-PRS transmission applicable to an embodiment of this application. As shown in FIG. 9, it is assumed that a PSSCH and an SL-PRS are transmitted for three times (or a maximum quantity of reservations is 3), to be specific, one initial transmission and two retransmissions. It is assumed that slots in which the three transmissions exist are a slot #1, a slot #2, and a slot #3 respectively. In the slot #1, the first communication apparatus may indicate a resource used for transmission of the SL-PRS in the slot #1, for example, an SL-PRS resource #1. In the slot #2, the first communication apparatus may indicate a resource used for transmission of the SL-PRS in the slot #2, for example, an SL-PRS resource #2. In the slot #3, the first communication apparatus may indicate a resource used for transmission of the SL-PRS in the slot #3, for example, an SL-PRS resource #3. Optionally, the three SL-PRS transmissions may be associated as a plurality of retransmissions of the same SL-PRS (or reservation between initial transmission and retransmission) based on indication information indicating reservation for retransmission of the PSSCH. Optionally, the three SL-PRS transmissions may alternatively be determined by a receiving apparatus, based on a same value of a source identifier and a destination identifier indicating the SL-PRS, as three transmissions of the same SL-PRS. Based on this, it may be learned that scheduling signaling of the SL-PRS may indicate a resource in a current slot, and does not indicate retransmission reservation. This can reduce overheads of SL-PRS indication signaling.

In some cases, a configured time domain resource length of the first resource may be greater than a time domain resource length actually supported or allowed by the first communication apparatus. For example, a network device configures a time domain resource length of the first resource as four symbols, and a time domain resource length actually supported or allowed by a UE is 1 or 2. In view of this, this application provides some solutions to resolve the foregoing problem. It may be understood that the following embodiments and the foregoing embodiments may be used separately, or may be used in combination. This is not limited.

Optionally, the first communication apparatus receives indication information #4, where the indication information #4 indicates the second resource. That the first communication apparatus obtains the identifier of the first resource in step 701 includes: The first communication apparatus determines the first resource based on the second resource and a resource that can be used by the first communication apparatus, where a length of the first resource on a time domain resource is less than a length of the second resource on a time domain resource. The first communication apparatus may receive the indication information #4 from a network device. It may be learned from this solution that if the configured time domain resource length of the first resource is greater than the time domain resource length actually supported or allowed by the first communication apparatus, the first communication apparatus may transmit the SL-PRS on a time domain resource with a small length.

Further, that the first communication apparatus sends the SL-PRS on the determined first resource may include the following several manners.

Manner A: The first communication apparatus transmits the SL-PRS in a fully staggered (full stagger) manner based on the length of the first resource on the time domain resource.

One slot is used as an example. Based on the manner A, if the configured time domain resource length (a quantity of symbols) of the first resource is greater than the time domain resource length (a quantity of symbols) actually supported or allowed by the first communication apparatus, the first communication apparatus may send the SL-PRS in a fully staggered manner based on a small quantity of symbols in an allowed quantity of symbols.

For example, it is assumed that the second resource indicated by the indication information #4 is four symbols in one slot. If in one slot, a quantity of symbols that can be used by the first communication apparatus to send the SL-PRS is greater than or equal to 4, the first communication apparatus may send the SL-PRS on four symbols, for example, send the SL-PRS in the Comb-4 form in FIG. 3. If in one slot, a quantity of symbols that can be used by the first communication apparatus to send the SL-PRS is less than 4, for example, a maximum of two symbols can be used to send the SL-PRS, the first communication apparatus may send the SL-PRS on two symbols in a fully staggered manner, for example, sending the SL-PRS in the Comb-2 form in FIG. 3.

Manner B: The first communication apparatus transmits the SL-PRS on the first resource in a partially staggered (partial stagger) manner based on the length of the second resource on the time domain resource.

One slot is used as an example. Based on the manner B, if the configured time domain resource length (a quantity of symbols) of the first resource is greater than the time domain resource length (a quantity of symbols) actually supported or allowed by the first communication apparatus, the first communication apparatus may send the SL-PRS in a partially staggered manner based on the configured quantity of symbols and a corresponding Comb size value.

For example, it is assumed that the second resource indicated by the indication information #4 is four symbols in one slot. If in one slot, a quantity of symbols that can be used by the first communication apparatus to send the SL-PRS is greater than or equal to 4, the first communication apparatus may send the SL-PRS on four symbols, for example, send the SL-PRS in the Comb-4 form in FIG. 3. If in one slot, a quantity of symbols that can be used by the first communication apparatus to send the SL-PRS is less than 4, for example, a maximum of two symbols can be used to send the SL-PRS, the first communication apparatus may send the SL-PRS in a partially staggered manner in the Comb-4 form, for example, send the SL-PRS in the form shown in (1) or (2) in FIG. 10.

FIG. 10 is a diagram of sending an SL-PRS in a partially staggered manner applicable to an embodiment of this application. For understanding, (1) and (2) in FIG. 10 may be considered as a part, of the SL-PRS, with a comb size of 4 (namely, Comb-4).

The foregoing describes two manners. This is not limited.

Further, optionally, the first communication apparatus may determine, in the following manners, whether to use the manner A or the manner B.

In a first possible implementation, the first communication apparatus determines whether to use the manner A or the manner B.

Based on this manner, when a quantity of symbols that can be actually used for transmission of the SL-PRS is less than a configured quantity of symbols of the SL-PRS, the first communication apparatus may determine whether to use the manner A or the manner B.

For example, when the quantity of symbols that can be actually used for transmission of the SL-PRS is less than the configured quantity of symbols of the SL-PRS, the first communication apparatus may select any one manner.

For another example, when the quantity of symbols that can be actually used for transmission of the SL-PRS is less than the configured quantity of symbols of the SL-PRS, if the quantity of symbols that can be actually used for transmission of the SL-PRS satisfies a first preset range, the first communication apparatus uses the manner A; or if the quantity of symbols that can be actually used for transmission of the SL-PRS satisfies a second preset range, the first communication apparatus uses the manner B. The first preset range and the second preset range may be pre-defined.

In a second possible implementation, another apparatus (for example, a network device) may indicate, to the first communication apparatus, whether to use the manner A or the manner B.

For example, another apparatus (for example, a network device) may send indication information #5 to the first communication apparatus, where the indication information #5 indicates the first communication apparatus to transmit the SL-PRS in the fully staggered manner or the partially staggered manner. If the indication information #5 indicates the first communication apparatus to transmit the SL-PRS in the fully staggered manner, when a quantity of symbols that can be actually used for transmission of the SL-PRS is less than a configured quantity of symbols of the SL-PRS, the first communication apparatus uses the manner A. If the indication information #5 indicates the first communication apparatus to transmit the SL-PRS in the partially staggered manner, when a quantity of symbols that can be actually used for transmission of the SL-PRS is less than a configured quantity of symbols of the SL-PRS, the first communication apparatus uses the manner B.

A trigger condition for sending the indication information #5 by the another apparatus (for example, the network device) to the first communication apparatus is not limited in embodiments of this application.

For example, the another apparatus (for example, the network device) may actively send the indication information #5 to the first communication apparatus. In an example, the indication information #5 and the configured quantity of symbols of the SL-PRS may be carried in same signaling, or may be carried in different signaling. This is not limited.

For another example, the another apparatus (for example, the network device) may send the indication information #5 to the first communication apparatus when determining that the quantity of symbols that can be actually used by the first communication apparatus for transmission of the SL-PRS is less than the configured quantity of symbols of the SL-PRS. A manner in which the another apparatus (for example, the network device) determines that the quantity of symbols that can be actually used by the first communication apparatus for transmission of the SL-PRS is less than the configured quantity of symbols of the SL-PRS may be as follows: The first communication apparatus sends notification information to the another apparatus, to notify the first communication apparatus that the quantity of symbols that can be actually used for transmission of the SL-PRS is less than the configured quantity of symbols of the SL-PRS.

In a third possible implementation, whether the manner A or the manner B is used is pre-defined, for example, pre-defined in a protocol.

Based on this manner, it may be pre-defined as follows: When a quantity of symbols that can be actually used for transmission of the SL-PRS is less than a configured quantity of symbols of the SL-PRS, the manner A or the manner B is used.

For example, it is pre-defined as follows: When the quantity of symbols that can be actually used for transmission of the SL-PRS is less than the configured quantity of symbols of the SL-PRS, the manner A or the manner B is used.

For another example, it is pre-defined as follows: When the quantity of symbols that can be actually used for transmission of the SL-PRS is less than the configured quantity of symbols of the SL-PRS, if the quantity of symbols that can be actually used for transmission of the SL-PRS satisfies a first preset range, the manner A is used; or if the quantity of symbols that can be actually used for transmission of the SL-PRS satisfies a second preset range, the manner B is used.

The foregoing three implementations are examples for description, belong to variations of the foregoing three manners, and are also applicable to embodiments of this application.

Further, optionally, the first communication apparatus receives indication information #6, where the indication information #6 indicates a minimum length of the time domain resource used for transmission of the SL-PRS. For example, the indication information #6 indicates a minimum quantity (denoted as G for brevity) of symbols used for transmission of the SL-PRS in one slot.

In a possible case, in one slot, a quantity of symbols actually used by the first communication apparatus for transmission of the SL-PRS is less than G. In this case, the first communication apparatus does not send the SL-PRS in the slot.

In another possible case, in one slot, a quantity of symbols actually used by the first communication apparatus for transmission of the SL-PRS is greater than or equal to G. In this case, the first communication apparatus sends the SL-PRS in the slot.

Based on this manner, a minimum quantity of symbols for transmission of the SL-PRS may be limited. In this way, when a quantity of symbols actually used by the first communication apparatus for transmission of the SL-PRS is less than the minimum quantity of symbols, the first communication apparatus does not send the SL-PRS in a current slot. In this manner, transmission performance of the SL-PRS can be ensured.

In some cases, there may be transmission opportunities for a plurality of reference signals (for example, SL-PRSs) in one slot. For this case, this application provides some solutions to implement an SL-PRS resource indication. It may be understood that the following embodiments and the foregoing embodiments may be used separately, or may be used in combination. This is not limited.

Optionally, the first resource includes T transmission resources, at least two of the T transmission resources are inconsecutive in time domain, and T is an integer greater than 1. The first communication apparatus sends indication information #7, where the indication information #7 indicates at least one transmission resource in the first resource, and the at least one transmission resource in the first resource is used for transmission of a reference signal (for example, an SL-PRS). Based on this manner, the transmission resource of the SL-PRS may be flexibly indicated, for example, related information of a plurality of transmission resources of the SL-PRS in one slot is indicated, to improve indication flexibility. Optionally, the solution may be used for a dedicated resource pool. Optionally, a value of T is a maximum quantity of reservations or a maximum quantity of retransmissions.

In an example, the indication information #7 may be carried in SCI.

It may be understood that the first communication apparatus may send the SL-PRS on the T transmission resources, or may send the SL-PRS on some of the T transmission resources. This is not limited.

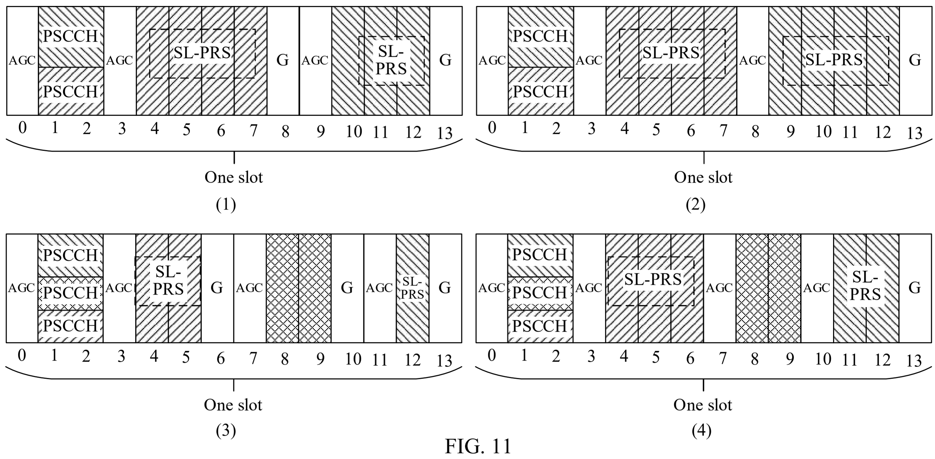

FIG. 11 is a diagram of SL-PRS transmission applicable to an embodiment of this application. As shown in (1) in FIG. 11, the first resource includes two transmission resources in one slot. One transmission resource includes a symbol 4, a symbol 5, a symbol 6, and a symbol 7, and the other transmission resource includes a symbol 10, a symbol 11, and a symbol 12. As shown in (3) in FIG. 11, the first resource includes three transmission resources in one slot. One transmission resource includes a symbol 4, a symbol 5, a symbol 6, and a symbol 7, another transmission resource includes a symbol 9, a symbol 10, a symbol 11, and a symbol 12, and a remaining transmission resource includes a symbol 13. As shown in (3) in FIG. 11, the first resource includes three transmission resources in one slot. One transmission resource includes a symbol 4 and a symbol 5, another transmission resource includes a symbol 8 and a symbol 9, and a remaining transmission resource includes a symbol 12. As shown in (4) in FIG. 11, the first resource includes three transmission resources in one slot. One transmission resource includes a symbol 4, a symbol 5, and a symbol 6, another transmission resource includes a symbol 8 and a symbol 9, and a remaining transmission resource includes a symbol 11 and a symbol 12.

The indication information #7 may indicate related information of the transmission resource. In an example, the related information of the transmission resource includes but is not limited to at least one of the following: a position of the transmission resource in time domain, and an offset (RE offset) or a comb size of the transmission resource in frequency domain.

It is assumed that the T transmission resources include a first transmission resource and a second transmission resource. For example, the indication information #7 indicates at least one of the following: related information of the first transmission resource and/or related information of the second transmission resource. The following describes several examples.

Example 1: The indication information #7 indicates related information of the first transmission resource and related information of the second transmission resource.

Based on this example, the first communication apparatus may indicate related information of each transmission resource.

Example 2: The indication information #7 indicates related information of the first transmission resource.

Based on this example, the first communication apparatus may indicate related information of one or more transmission resources, and the receive end (namely, the second communication apparatus) may learn of the related information of the one or more transmission resources and related information of another transmission resource based on the related information of the one or more transmission resources. In this way, signaling overheads caused by indicating the transmission resource can be reduced.

The first transmission resource and the second transmission resource are used as an example. There is an association relationship between the related information of the first transmission resource and the related information of the second transmission resource. In this way, the receive end may learn of the related information of the first transmission resource based on the indication information #7, and determine the related information of the second transmission resource based on the related information of the first transmission resource and the association relationship between the related information of the first transmission resource and the related information of the second transmission resource.

It may be understood that the foregoing descriptions are example descriptions. This is not limited. Any variation of the foregoing solution is applicable to embodiments of this application. For example, the first communication apparatus may indicate partial information of the first transmission resource and partial information of the second transmission resource, and the receive end may determine other information of the first transmission resource and other information of the second transmission resource based on the partial information of the first transmission resource and the partial information of the second transmission resource.

Optionally, when the first resource includes the T transmission resources, the identifier of the first resource satisfies any one of the following:

$$n_{ID}=n_{RE}+m_s*N_{1,\,comb};$$

$$n_{ID}=n_{RE}+N_{1,\,comb}+(m_s-1)*N_{2,\,comb};$$

or

$$n_{ID}=n_{RE}+N_{1,\,comb}+N_{2,\,comb}+(m_s-2)*N_{3,\,comb}.$$

$n_{ID}$ represents the identifier of the first resource; $N_{i,\,comb}$ represents a comb size for transmitting a reference signal for an $i^{th}$ time; $n_{RE}$ represents an offset of the reference signal in frequency domain; and $m_s=i-1$, representing indication information for transmission of the reference signal on an $i^{th}$ transmission resource, where i=1, 2, or 3.

In an example, when $m_s=0$, a value of $n_{RE}$ is 0 to $N_{1,\,comb}$; when $m_s=1$, a value of $n_{RE}$ is 0 to $N_{2,\,comb}$; or when $m_s=2$, a value of $n_{RE}$ is 0 to $N_{3,\,comb}$.

The following provides descriptions with reference to three scenarios.

Scenario 1: T=2.

In this case, there are transmission resources of two SL-PRSs in one slot, as shown in (1) in FIG. 11. It is assumed that on the transmission resources of the two SL-PRSs, quantities of symbols and comb sizes of the SL-PRSs are {$M_1$, $N_{1,\,comb}$} and {$M_2$, $N_{2,\,comb}$} respectively.

A manner of determining a resource identifier of the SL-PRS is as follows:

$$n_{ID}=n_{RE}+m_s*N_{1,\,comb}.$$

$m_s$=0 or 1. $m_s$=0 indicates that the SL-PRS is sent on a 1st transmission resource, and $m_s$=1 indicates that the SL-PRS is sent on a 2nd transmission resource.

Scenario 2: T=3.

In this case, there are transmission resources of three SL-PRSs in one slot, as shown in (2) in FIG. 11. It is assumed that on the transmission resources of the three SL-PRSs, quantities of symbols and comb sizes of the SL-PRSs are $\{M_1, N_{1,\,comb}\}$, $\{M_2, N_{2,\,comb}\}$, and $\{M_3, N_{3,\,comb}\}$ respectively.

If $m_s\le1$, a manner of determining a resource identifier of the SL-PRS is as follows:

$$n_{ID}=n_{RE}+m_s*N_{1,\,comb}.$$

If $m_s$=2, a manner of determining a resource identifier of the SL-PRS is as follows:

$$n_{ID}=n_{RE}+N_{1,\,comb}+(m_s-1)*N_{2,\,comb}.$$

Scenario 3: T=4.

In this case, there are transmission resources of four SL-PRSs in one slot. It is assumed that on the transmission resources of the four SL-PRSs, quantities of symbols and comb sizes of the SL-PRSs are $\{M_1, N_{1,\,comb}\}$, $\{M_2, N_{2,\,comb}\}$, $\{M_3, N_{3,\,comb}\}$, and $\{M_4, N_{4,\,comb}\}$ respectively.

If $m_s\le1$, a manner of determining a resource identifier of the SL-PRS is as follows:

$$n_{ID}=n_{RE}+m_s*N_{1,\,comb}.$$

If $m_s$=2, a manner of determining a resource identifier of the SL-PRS is as follows:

$$n_{ID}=n_{RE}+N_{1,\,comb}+(m_s-1)*N_{2,\,comb}.$$

If $m_s$=3, a manner of determining a resource identifier of the SL-PRS is as follows:

$$n_{ID}=n_{RE}+N_{1,\,comb}+N_{2,\,comb}+(m_s-2)*N_{3,\,comb}.$$

It may be understood that the foregoing three scenarios are examples for description, and embodiments of this application are not limited thereto.

The first resource (namely, the SL-PRS resource) mentioned above may be determined based on the time domain resource used for transmission of the sidelink reference signal. The following describes the solution in detail with reference to FIG. 12 by using an example in which a sidelink reference signal is a PT-RS and a sidelink positioning reference signal is an SL-PRS. The following embodiments and the foregoing embodiments may be used in combination, or may be used separately. This is not limited.

FIG. 12 is a diagram of slot structures of a DMRS, a PSCCH, and a PT-RS when $l_d$=13. $l_{PT-RS}$ represents a density (or referred to as a resource density o a periodicity) of the PT-RS. In an example, $l_{PT-RS}$ is a quantity of resources (for example, a quantity of symbols) in an interval between two adjacent PT-RS resources plus 1, and recounting is performed for a resource of another signal (for example, a PSCCH or a DMRS). For example, as shown in (a) and (b) in FIG. 12, $l_{PT-RS}$=2. For another example, as shown in (c) and (d) in FIG. 12, $l_{PT-RS}$=4. It may be learned from FIG. 12 that the PT-RS may occupy a plurality of symbols in one slot, and therefore, a PT-RS resource may overlap an SL-PRS resource (in other words, the PT-RS conflicts with an SL-PRS). Therefore, embodiments of this application provide four manners to resolve the problem.

In a first possible implementation, when a PT-RS resource and an SL-PRS resource overlap at a resource position, the first communication apparatus sends an SL-PRS at the position.

For example, it is assumed that an SL-PRS resource is a continuous resource. One slot is used as an example. A time domain resource of an SL-PRS is M consecutive symbols in the slot. If a PT-RS and the SL-PRS conflict on m symbols in the M consecutive symbols, in other words, a time domain resource of the PT-RS includes the m symbols, the PT-RS is not sent and the SL-PRS is sent on the m symbols. m is an integer greater than 1 or equal to 1 and less than M or equal to M.

In an example, the M consecutive symbols may be last M consecutive symbols in the slot. For example, (a) in FIG. 12 is used as an example. For example, if M=1, the M consecutive symbols are a symbol 12. For another example, if M=2, the M consecutive symbols are a symbol 12 and a symbol 11. For another example, if M=4, the M consecutive symbols are a symbol 9, a symbol 8, a symbol 7, and a symbol 6.

(a) in FIG. 12 is used as an example. It is assumed that a time domain resource of an SL-PRS is the symbol 12. It may be learned from (a) in FIG. 12 that a PT-RS conflicts with the SL-PRS on the symbol 12, in other words, a time domain resource of the PT-RS includes the symbol 12. Based on this implementation, the PT-RS is not sent and the SL-PRS is sent at a position of the symbol 12. Further, it is assumed that a time domain resource of an SL-PRS is a symbol 6 to a symbol 9. It may be learned from (a) in FIG. 12 that a PT-RS conflicts with the SL-PRS conflict on the symbol 7 and the symbol 9, in other words, a time domain resource of the PT-RS includes the symbol 7 and the symbol 9. Based on this implementation, the PT-RS is not sent and the SL-PRS is sent at positions of the symbol 7 and the symbol 9.

In a second possible implementation, k candidate resources are configured for an SL-PRS, and a candidate resource that does not overlap a PT-RS resource is selected from the k candidate resources to send the SL-PRS, where k is an integer greater than 1.

In an example, when a candidate resource overlaps the PT-RS resource, a candidate resource adjacent to the candidate resource (namely, a next candidate resource of the candidate resource) is selected to send the SL-PRS.

For example, a time domain resource of an SL-PRS is M consecutive symbols, a network device may configure k candidate resources (or referred to as k groups of candidate resources), and a length of each group of candidate resources is M.

For example, (e) in FIG. 12 is used as an example. It is assumed that M=1, and a time domain resource of an SL-PRS includes two groups of candidate resources, which are respectively a symbol 12 and a symbol 10. It may be learned from (e) in FIG. 12 that a time domain resource of a PT-RS includes one group of candidate resources (namely, the symbol 10) of the SL-PRS. Therefore, the first communication apparatus does not use the group of candidate resources (namely, the symbol 10) to send the SL-PRS, but uses the other group of candidate resources (namely, the symbol 12) to send the SL-PRS.

For another example, (f) in FIG. 12 is used as an example. It is assumed that M=2, a time domain resource of an SL-PRS includes two groups of candidate resources, one group of candidate resources includes a symbol 10 and a symbol 9, and the other group of candidate resources includes a symbol 8 and a symbol 7. It may be learned from (f) in FIG. 12 that a time domain resource of a PT-RS includes a resource (namely, the symbol 10) in one group of candidate resources of the SL-PRS. Therefore, the first communication apparatus does not use the group of candidate resources (namely, the symbol 10 and the symbol 9) to send the SL-PRS, but uses the other group of candidate resources (namely, the symbol 8 and the symbol 7) to send the SL-PRS.

As described above, an identifier of the SL-PRS resource may be determined by the first communication apparatus, or may be determined and indicated by the network device to the first communication apparatus (for example, indicated by using the indication information #1). The following briefly describes the two manners.

In an example, the network device configures k groups of candidate resources for an SL-PRS, and configures a PT-RS resource for a PT-RS. Then, the network device selects a candidate resource that does not overlap (for example, partially or completely overlap) the PT-RS resource, and sends indication information #1 to the first communication apparatus, where the indication information #1 indicates the candidate resource (for example, the indication information #1 indicates an identifier of the candidate resource).

(a) in FIG. 12 is used as an example. It is assumed that $l_d$=13, a time domain resource of a DMRS is two symbols, a time domain resource of a PSCCH is two symbols, and k=2. In this case, if M is 1, two groups of candidate resources of an SL-PRS are {symbol 12} and {symbol 11}; if M is 2, two groups of candidate resources of an SL-PRS are {symbol 12, symbol 11} and {symbol 9, symbol 8}; or if M is 4, two groups of candidate resources of an SL-PRS are {symbol 6 to symbol 9} and {symbol 5 to symbol 8}. Assuming that a value of an identifier of an SL-PRS resource is numbered from 0, the value of the identifier of the SL-PRS resource may be {0, 1, 2, 3, 4, 5}. The identifier "0" corresponds to the symbol 12, the identifier "1" corresponds to the symbol 11, the identifier "2" corresponds to the symbol 12 and the symbol 11, the identifier "3" corresponds to the symbol 9 and the symbol 8, the identifier "4" corresponds to the symbol 6 to the symbol 9, and the identifier "5" corresponds to the symbol 5 to the symbol 8. The correspondence between the identifier and the symbol may be pre-defined, pre-configured, or pre-agreed on. This is not limited.

For example, assuming that a length M of a time domain resource of the SL-PRS is 1, it may be learned from the foregoing descriptions that the two groups of candidate resources of the SL-PRS are {symbol 12} and {symbol 11}. As shown in (a) in FIG. 12, a PT-RS conflicts with the SL-PRS on the symbol 12, in other words, a time domain resource of the PT-RS includes the symbol 12. Therefore, the network device selects the symbol 11 as the time domain resource of the SL-PRS. Specifically, the network device sends indication information #1 to the first communication apparatus, where the indication information #1 indicates that an identifier of the time domain resource of the SL-PRS is the identifier "0" corresponding to the symbol 11. After receiving the indication information #1, the first communication apparatus learns that the identifier of the time domain resource of the SL-PRS is the identifier "0", and the first communication apparatus determines, based on the correspondence between the identifier and the symbol, that the time domain resource of the SL-PRS is the symbol 11. Further, the first communication apparatus may indicate, to the second communication apparatus, the identifier "0" corresponding to the symbol 11 (for example, indicating the symbol 11 by using SCI), and the second communication apparatus may learn, based on the identifier "0" corresponding to the symbol 11, that the time domain resource of the SL-PRS is the symbol 11.

In another example, the network device configures k groups of candidate resources for an SL-PRS, and configures a PT-RS resource for a PT-RS. Then, the network device sends indication information #1 to the first communication apparatus, where the indication information #1 indicates identifiers of a plurality of resources (for example, identifiers of the k groups of candidate resources), and the first communication apparatus selects a candidate resource that does not overlap (for example, partially or completely overlap) the PT-RS resource to transmit the SL-PRS. Further, optionally, the network device further sends information about the PT-RS resource to the first communication apparatus. Further, optionally, the network device may indicate k to the first communication apparatus, for example, by using the indication information #1, or by using other indication information. This is not limited.

The foregoing example is still used. For example, assuming that the length M of the time domain resource of the SL-PRS is 1, it may be learned from the foregoing descriptions that the two groups of candidate resources of the SL-PRS are {symbol 12} and {symbol 11}. Therefore, the network device sends indication information #1 to the first communication apparatus, where the indication information #1 indicates the identifier "0" corresponding to the symbol 12 and the identifier "1" corresponding to the symbol 11. The first communication apparatus may learn, based on the indication information #1, that the candidate resource of the SL-PRS configured by the network device includes the symbol 12 and the symbol 11. The first communication apparatus may learn, based on the information about the PT-RS resource, that the PT-RS conflicts with the SL-PRS on the symbol 12, in other words, the time domain resource of the PT-RS includes the symbol 12. Therefore, the first communication apparatus selects the symbol 11 to send the SL-PRS. Further, the first communication apparatus may indicate, to the second communication apparatus, the identifier "0" corresponding to the symbol 11 (for example, indicating the symbol 11 by using SCI), and the second communication apparatus may learn, based on the identifier "0" corresponding to the symbol 11, that the time domain resource of the SL-PRS is the symbol 11.

In a third possible implementation, when a PT-RS resource and an SL-PRS resource overlap at a resource position, the first communication apparatus selects a resource position associated with the SL-PRS resource to send the SL-PRS.

The resource position associated with the SL-PRS resource may be an available resource position adjacent to the SL-PRS resource, or may be an available resource position separated from the SL-PRS resource by w resources.

w is an integer greater than 1 or equal to 1, and w may be pre-defined, may be pre-configured, or may be indicated by a network side. This is not limited. The available resource position indicates, for example, positions of M consecutive symbols, that can satisfy a length M of the SL-PRS resource.

For example, a time domain resource of an SL-PRS is M consecutive symbols, the network device may configure one SL-PRS resource, and a length of the SL-PRS resource is M, in other words, the SL-PRS resource is M consecutive symbols.

For example, (f) in FIG. 12 is used as an example. It is assumed that M=2, and a time domain resource that is of an SL-PRS and that is configured by the network device is a symbol 10 and a symbol 9. It may be learned from (f) in FIG. 12 that a time domain resource of a PT-RS includes the symbol 10. Therefore, the first communication apparatus does not use the group of resources (namely, the symbol 10 and the symbol 9) to send the SL-PRS. In an example, the first communication apparatus sends the SL-PRS, by default (for example, as agreed on in a protocol, pre-agreed on, or pre-configured), on a group of resources, namely, a symbol 8 and a symbol 7, adjacent to the group of resources. In another example, the first communication apparatus sends, based on an indication from a network side, the SL-PRS on a group of resources, namely, a symbol 8 and a symbol 7, adjacent to the group of resources. Correspondingly, the second communication apparatus receives the SL-PRS on the symbol 8 and the symbol 7. The second communication apparatus receives an SL-PRS on the symbol 8 and the symbol 7 in the following several manners.

In a manner, the first communication apparatus indicates positions of the symbol 8 and the symbol 7 to the second communication apparatus.

In another manner, the network device or the first communication apparatus indicates the configured SL-PRS resource (namely, the symbol 10 and the symbol 9) to the second communication apparatus, and indicates, to the second communication apparatus, whether to receive the SL-PRS on the configured SL-PRS resource or on the group of resources (namely, the symbol 8 and the symbol 7) adjacent to the resource. For example, the first communication apparatus sends indication information #9 to the second communication apparatus, where the indication information #9 indicates whether to receive the SL-PRS on the configured SL-PRS resource or receive the SL-PRS on the group of resources (namely, the symbol 8 and the symbol 7) adjacent to the resource. The indication information #9 may be implemented by using at least one bit. It is assumed that the indication information #1 is implemented by using one bit. If a value of the bit is "0", it indicates that the indication information #9 indicates to receive the SL-PRS on the configured SL-PRS resource, in other words, an SL-PRS resource is the configured SL-PRS resource (namely, the symbol 10 and the symbol 9); or if a value of the bit is "1", it indicates that the indication information #9 indicates to receive the SL-PRS on the group of resources (namely, the symbol 8 and the symbol 7) adjacent to the resource, in other words, an SL-PRS resource is the group of resources (namely, the symbol 8 and the symbol 7) adjacent to the resource.

It may be understood that the foregoing descriptions are provided by using an example of adjacency. This is not limited. For example, if the configured SL-PRS resource (namely, the M configured symbols) is unavailable (for example, the configured SL-PRS resource overlaps a PT-RS resource), M available consecutive symbols of w resource units (for example, w symbols) may be moved forward, M available consecutive symbols of w resource units (for example, w symbols) may be moved backward, M available symbols that are located before the M configured symbols in a slot in which the M configured symbols are located may be used, or M available symbols that are located after the M configured symbols in a slot in which the M configured symbols are located may be used.

It may be further understood that the M configured symbols and the M available symbols are symbols in one slot. This is not limited. For example, the M configured symbols and the M available symbols may alternatively be symbols in adjacent slots.

In a fourth possible implementation, when an SL-PRS resource is configured, a PT-RS resource is referenced, to avoid a conflict between the SL-PRS resource and the PT-RS resource.

As described above, the SL-PRS resource may be determined by the first communication apparatus, may be determined by the network device, or may be determined by another apparatus. This is not limited. The following provides example descriptions with reference to an example in which the first communication apparatus determines an SL-PRS resource and an example in which the network device determines an SL-PRS resource.

In an example, the network device determines an SL-PRS resource, and indicates the SL-PRS resource to the first communication apparatus, for example, indicates an identifier of the SL-PRS resource by using indication information #1. As described above, the network device may further indicate the SL-PRS resource to the second communication apparatus, or the first communication apparatus may indicate the SL-PRS resource to the second communication apparatus. This is not limited.

Optionally, the network device determines a time domain resource of an SL-PRS based on a length M of the time domain resource of the SL-PRS, information about a PT-RS resource, and the following conditions: the time domain resource of the SL-PRS is last several consecutive symbols that satisfy the length of M in one slot, and the SL-PRS resource does not conflict with the PT-RS resource.

(g) in FIG. 12 is used as an example. A PT-RS density is 4. In this case, when a quantity of symbols of a PSCCH is 2 and $l_d=13$, the network device may determine positions of symbols of a PT-RS, a DMRS, and the PSCCH.

For example, if M=1, based on the foregoing condition, the network device may determine that the time domain resource of the SL-PRS is a symbol 12. Further, the network device may send an identifier of the symbol 12 to the first communication apparatus, and the first communication apparatus may learn, based on the identifier, that the time domain resource of the SL-PRS is the symbol 12.

For another example, if M=2, based on the time domain resource of the SL-PRS being the last several consecutive symbols that satisfy the length of M in one slot, the network device may determine that the time domain resource of the SL-PRS is a symbol 10 and a symbol 9. It may be learned from (g) in FIG. 12 that the PT-RS conflicts with the SL-PRS on the symbol 10, in other words, a time domain resource of a PT-RS includes the symbol 10. Therefore, in a possible manner, the network device determines to send the SL-PRS and not to send the PT-RS on the symbol 10, in other words, the time domain resource of the SL-PRS includes the symbol 10 and the symbol 9. Further, the network device may send identifiers of the symbol 10 and the symbol 9 to the first communication apparatus, and the first communication apparatus may learn, based on the identifiers, that the time domain resource of the SL-PRS is the symbol 10 and the symbol 9. In another possible manner, the network device re-determines a time domain resource that is of the SL-PRS and that satisfies the foregoing condition, for example, a symbol 9 and a symbol 8. Further, the network device may send identifiers of the symbol 9 and the symbol 8 to the first communication apparatus, and the first communication apparatus may learn, based on the identifiers, that the time domain resource of the SL-PRS is the symbol 9 and the symbol 8.

For another example, if M=4, based on the time domain resource of the SL-PRS being the last several consecutive symbols that satisfy the length of M in one slot, the network device may determine that the time domain resource of the SL-PRS may be a symbol 7 to a symbol 10. It may be learned from (g) in FIG. 12 that the PT-RS conflicts with the SL-PRS on the symbol 10, in other words, the time domain resource of the PT-RS includes the symbol 10. Therefore, in a possible manner, the SL-PRS is sent and the PT-RS is not sent on the symbol 10, in other words, the time domain resource of the SL-PRS includes the symbol 7 to the symbol 10. Further, the network device may send identifiers of the symbol 7 to the symbol 10 to the first communication apparatus, and the first communication apparatus may learn, based on the identifiers, that the time domain resource of the SL-PRS is the symbol 7 to the symbol 10. In another possible manner, the network device re-determines a time domain resource that is of the SL-PRS and that satisfies the foregoing condition. It may be learned from (g) in FIG. 12 that a symbol 2 to a symbol 5 satisfy the length M of the time domain resource of the SL-PRS, but the PT-RS also conflicts with the SL-PRS on the symbol 2. Therefore, in this case, the former possible manner may be used.

In another example, the first communication apparatus determines an SL-PRS resource.

Optionally, the first communication apparatus determines a time domain resource of an SL-PRS based on a length M of the time domain resource of the SL-PRS and the following conditions: the time domain resource of the SL-PRS is last several consecutive symbols that satisfy the length of M in one slot, and the SL-PRS resource does not conflict with a PT-RS resource. Further, optionally, the first communication apparatus obtains information about the PT-RS resource. For example, the network device sends the information about the PT-RS resource to the first communication apparatus.

(g) in FIG. 12 is used as an example. A PT-RS density is 4. In this case, when a quantity of symbols of a PSCCH is 2 and $l_d$=13, the first communication apparatus may determine positions of symbols of a PT-RS, a DMRS, and the PSCCH.

For example, if M=1, based on the foregoing condition, the first communication apparatus may determine that the time domain resource of the SL-PRS is a symbol 12.

For another example, if M=2, based on the time domain resource of the SL-PRS being the last several consecutive symbols that satisfy the length of M in one slot, the first communication apparatus may determine that the time domain resource of the SL-PRS is a symbol 10 and a symbol 9. It may be learned from (g) in FIG. 12 that the PT-RS conflicts with the SL-PRS on the symbol 10, in other words, the time domain resource of the PT-RS includes the symbol 10. Therefore, in a possible manner, the SL-PRS is sent and the PT-RS is not sent on the symbol 10, in other words, the time domain resource of the SL-PRS includes the symbol 10 and the symbol 9. In another possible manner, a time domain resource that is of the SL-PRS and that satisfies the foregoing condition is re-determined, for example, the symbol 9 and a symbol 8.

For another example, if M=4, based on the time domain resource of the SL-PRS being the last several consecutive symbols that satisfy the length of M in one slot, the first communication apparatus may determine that the time domain resource of the SL-PRS may be a symbol 7 and a symbol 10. It may be learned from (g) in FIG. 12 that the PT-RS conflicts with the SL-PRS on the symbol 10, in other words, the time domain resource of the PT-RS includes the symbol 10. Therefore, in a possible manner, the SL-PRS is sent and the PT-RS is not sent on the symbol 10, in other words, the time domain resource of the SL-PRS includes the symbol 7 to the symbol 10. In another possible manner, a time domain resource that is of the SL-PRS and that satisfies the foregoing condition is re-determined. It may be learned from (g) in FIG. 12 that a symbol 2 to a symbol 5 satisfy the length M of the time domain resource of the SL-PRS, but the PT-RS also conflicts with the SL-PRS on the symbol 2. Therefore, in this case, the former possible manner may be used.

The foregoing describes related solutions for avoiding the conflict between the SL-PRS and the PT-RS, and the following describes a solution for configuring a quantity of SL-PRS resources.

As described above, the identifier of the SL-PRS resource (or the SL-PRS resource) is determined based on at least one of the following: the length of the time domain resource available for transmission of the SL-PRS (namely, Ma), the start position of the time domain resource used for transmission of the SL-PRS, and the length of the time domain resource used for transmission of the SL-PRS (namely, M), and Ma may be determined based on at least one of the following: the length of the time domain resource used for transmission of the PSSCH (namely, $l_d$), the length of the time domain resource used for transmission of the PSCCH (namely, $l_{PSCCH}$), the length of the time domain resource used for transmission of the PSFCH, and the length of the time domain resource used for transmission of the DMRS. Therefore, the SL-PRS resource may be determined based on at least one of the following: $l_d$, $l_{PSCCH}$, and the DMRS pattern (DMRS pattern). As example descriptions, the following lists some examples.

For example, $l_d$=13, DMRS pattern=2 (that is, a quantity of DMRS patterns is 2), and $l_{PSCCH}$=2: {configuration 1}.

For another example, $l_d$=13, DMRS pattern=3, and $l_{PSCCH}$=2: {configuration 2}.

For another example, $l_d$=13, DMRS pattern=4, and $l_{PSCCH}$=2: {configuration 3}.

For another example, $l_d$=13, DMRS pattern=2, and $l_{PSCCH}$=3: {configuration 4}.

For another example, $l_d$=13, DMRS pattern=3, and $l_{PSCCH}$=3: {configuration 5}.

For another example, $l_d$=13, DMRS pattern=4, and $l_{PSCCH}$=3: {configuration 6}.

For another example, $l_d$=12, DMRS pattern=2, and $l_{PSCCH}$=2: {configuration 7}.

For another example, $l_d$=12, DMRS pattern=3, and $l_{PSCCH}$=2: {configuration 8}.

For another example, $l_d$=12, DMRS pattern=4, and $l_{PSCCH}$=2: {configuration 9}.

For another example, $l_d$=12, DMRS pattern=2, and $l_{PSCCH}$=3: {configuration 10}.

For another example, $l_d$=12, DMRS pattern=3, and $l_{PSCCH}$=3: {configuration 11}.

For another example, $l_d$=12, DMRS pattern=4, and $l_{PSCCH}$=3: {configuration 12}.

For another example, $l_d$=6, DMRS pattern=2, and $l_{PSCCH}$=2: {configuration 13}.

For another example, $l_d$=6, DMRS pattern=3, and $l_{PSCCH}$=2: {configuration 14}.

For another example, $l_d$=6, DMRS pattern=4, and $l_{PSCCH}$=2: {configuration 15}.

For another example, $l_d$=6, DMRS pattern=2, and $l_{PSCCH}$=3: {configuration 16}.

For another example, $l_d$=6, DMRS pattern=3, and $l_{PSCCH}$=3: {configuration 17}.

For another example, $l_d$=6, DMRS pattern=4, and $l_{PSCCH}$=3: {configuration 18}.

It may be understood that some examples are simply listed above, and embodiments of this application are not limited thereto.

In a possible implementation, the network device sends indication information #8 (namely, an example of eighth indication information) to the first communication apparatus, where the indication information #8 indicates at least one of the following: the length of the time domain resource used for transmission of the PSSCH (namely, $I_d$), the length of the time domain resource used for transmission of the PSCCH (namely, $I_{PSCCH}$), and the DMRS pattern.

For example, the indication information #8 includes at least one of the following: the length of the time domain resource used for transmission of the PSSCH (namely, $I_d$), the length of the time domain resource used for transmission of the PSCCH (namely, $I_{PSCCH}$), and the DMRS pattern. Therefore, the first communication apparatus may learn of at least one of the foregoing based on the indication information #8, and determine, based on the at least one of the foregoing and the foregoing correspondence, a configuration corresponding to the SL-PRS resource.

For another example, the indication information #8 includes a configuration (for example, a configuration i) corresponding to the SL-PRS resource. Therefore, the first communication apparatus may determine, based on the indication information #8, the configuration corresponding to the SL-PRS resource. In addition, the first communication apparatus may further determine, based on the indication information #8 and the foregoing correspondence, the length of the time domain resource used for transmission of the PSSCH (namely, $I_d$), the length of the time domain resource used for transmission of the PSCCH (namely, $I_{PSCCH}$), and the DMRS pattern.

The configuration i (i=1 to 18) indicates a relationship between a physical resource of the SL-PRS in a slot and the identifier of the SL-PRS resource. Therefore, the first communication apparatus may learn, based on the indication information #8, of the configuration of the SL-PRS resource, may further learn of the identifier of the SL-PRS resource corresponding to the configuration, and may further learn, based on the identifier, of the physical resource of the SL-PRS in the slot. The following uses the configuration i as an example for description with reference to several cases.

In a first possible case, the configuration i includes one N and one RE offset, and the identifier of the SL-PRS resource corresponds to a quantity M of symbols of the configuration i.

N represents a comb size of the SL-PRS resource in frequency domain. In an example, a value of N may be, for example, 1, 2, or 4. The RE offset represents an offset of the SL-PRS resource in frequency domain. Details are not described below again.

In an example, the identifier of the SL-PRS resource={0, 1, 2} $\Leftrightarrow$ {M, N}={M={1, 2, 4}, N=N0}. N0 represents a comb size of the SL-PRS resource in frequency domain, and a value of N0 may be, for example, 1, 2, or 4.

Specifically, if the identifier of the SL-PRS resource is 0, the corresponding length M of the time domain resource of the SL-PRS is 1; if the identifier of the SL-PRS resource is 1, the corresponding length M of the time domain resource of the SL-PRS is 2; or if the identifier of the SL-PRS resource is 2, the corresponding length M of the time domain resource of the SL-PRS is 4.

Based on this case, regardless of a specific identifier of the SL-PRS resource, the comb size N of the SL-PRS resource in frequency domain is N0, and the offset of the SL-PRS resource in frequency domain is the RE offset.

In a second possible case, the configuration i includes a plurality of Ns and one RE offset, and the identifier of the SL-PRS resource corresponds to a quantity M of symbols and a comb size N of the configuration i.

In an example:

the identifier of the SL-PRS resource={0, 1, 2} $\Leftrightarrow$ {M, N}={M={1, 2, 4}, N=N0}; or

the identifier of the SL-PRS resource={3, 4, 5} $\Leftrightarrow$ {M, N}={M={1, 2, 4}, N=N1}.

A value of N0 is different from a value of N1.

Specifically, if the identifier of the SL-PRS resource is 0, the corresponding length M of the time domain resource of the SL-PRS is 1, and the comb size N of the SL-PRS resource in frequency domain is N0; if the identifier of the SL-PRS resource is 1, the corresponding length M of the time domain resource of the SL-PRS is 2, and the comb size N of the SL-PRS resource in frequency domain is N0; if the identifier of the SL-PRS resource is 2, the corresponding length M of the time domain resource of the SL-PRS is 4, and the comb size N of the SL-PRS resource in frequency domain is N0; if the identifier of the SL-PRS resource is 3, the corresponding length M of the time domain resource of the SL-PRS is 1, and the comb size N of the SL-PRS resource in frequency domain is N1; if the identifier of the SL-PRS resource is 4, the corresponding length M of the time domain resource of the SL-PRS is 2, and the comb size N of the SL-PRS resource in frequency domain is N1; or if the identifier of the SL-PRS resource is 5, the corresponding length M of the time domain resource of the SL-PRS is 4, and the comb size N of the SL-PRS resource in frequency domain is N1.

Based on this case, regardless of a specific identifier of the SL-PRS resource, the offset of the SL-PRS resource in frequency domain is the RE offset.

In a third possible case, the configuration i includes a plurality of Ns and a plurality of RE offsets, and the identifier of the SL-PRS resource corresponds to a quantity M of symbols, a comb size N, and an offset, that is, an RE offset, of the configuration i.

In an example:

the identifier of the SL-PRS resource={0, 1, 2} ⇔ {M, N}={M={1, 2, 4}, N=N0}, RE offset 0;

the identifier of the SL-PRS resource={3, 4, 5} ⇔ {M, N}={M={1, 2, 4}, N=N1}, RE offset 0;

the identifier of the SL-PRS resource={6, 7, 8} ⇔ {M, N}={M={1, 2, 4}, N=N0}, RE offset 1; or

the identifier of the SL-PRS resource={9, 10, 11} ⇔ {M, N}={M={1, 2, 4}, N=N1}, RE offset 1.

A value of N0 is different from a value of N1, and a value of the RE offset 0 is different from a value of the RE offset 1.

Specifically, if the identifier of the SL-PRS resource is 0, the corresponding length M of the time domain resource of the SL-PRS is 1, the comb size N of the SL-PRS resource in frequency domain is N0, and the offset of the SL-PRS resource in frequency domain is the RE offset 0; if the identifier of the SL-PRS resource is 1, the corresponding length M of the time domain resource of the SL-PRS is 2, the comb size N of the SL-PRS resource in frequency domain is N0, and the offset of the SL-PRS resource in frequency domain is the RE offset 0; if the identifier of the SL-PRS resource is 2, the corresponding length M of the time domain resource of the SL-PRS is 4, the comb size N of the SL-PRS resource in frequency domain is N=N0, and the offset of the SL-PRS resource in frequency domain is the RE offset 0; if the identifier of the SL-PRS resource is 3, the corresponding length M of the time domain resource of the SL-PRS is 1, the comb size N of the SL-PRS resource in frequency domain is N1, and the offset of the SL-PRS resource in frequency domain is the RE offset 0; the identifier of the SL-PRS resource is 4, the corresponding length M of the time domain resource of the SL-PRS is 2, the comb size N of the SL-PRS resource in frequency domain is N1, and the offset of the SL-PRS resource in frequency domain is the RE offset 0; if the identifier of the SL-PRS resource is 5, the corresponding length M of the time domain resource of the SL-PRS is 4, the comb size N of the SL-PRS resource in frequency domain is N1, and the offset of the SL-PRS resource in frequency domain is the RE offset 0; if the identifier of the SL-PRS resource is 6, the corresponding length M of the time domain resource of the SL-PRS is 1, the comb size N of the SL-PRS resource in frequency domain is N0, and the offset of the SL-PRS resource in frequency domain is the RE offset 1; if the identifier of the SL-PRS resource is 7, the corresponding length M of the time domain resource of the SL-PRS is 2, the comb size N of the SL-PRS resource in frequency domain is N0, and the offset of the SL-PRS resource in frequency domain is the RE offset 1; if the identifier of the SL-PRS resource is 8, the corresponding length M of the time domain resource of the SL-PRS is 4, the comb size N of the SL-PRS resource in frequency domain is N0, and the offset of the SL-PRS resource in frequency domain is the RE offset 1; if the identifier of the SL-PRS resource is 9, the corresponding length M of the time domain resource of the SL-PRS is 1, the comb size N of the SL-PRS resource in frequency domain is N1, and the offset of the SL-PRS resource in frequency domain is the RE offset 1; if the identifier of the SL-PRS resource is 10, the corresponding length M of the time domain resource of the SL-PRS is 2, the comb size N of the SL-PRS resource in frequency domain is N1, and the offset of the SL-PRS resource in frequency domain is the RE offset 1; or if the identifier of the SL-PRS resource is 11, the corresponding length M of the time domain resource of the SL-PRS is 4, the comb size N of the SL-PRS resource in frequency domain is N1, and the offset of the SL-PRS resource in frequency domain is the RE offset 1.

It may be understood that the foregoing descriptions are example descriptions, and this application is not limited thereto.

As described above, the SL-PRS resource may be determined by the first communication apparatus, or may be determined and indicated by the network device to the first communication apparatus (for example, indicated by using the indication information #1). The following uses an example in which the network device determines the SL-PRS resource for brief description.

Specifically, if the network device determines the identifier of the SL-PRS resource, the network device may send indication information #1 to the first communication apparatus, where the indication information #1 indicates the identifier of the SL-PRS resource. Further, the network device or the first communication apparatus may send indication information #3 to the second communication apparatus, where the indication information #3 indicates the identifier of the SL-PRS resource.

For example, the first possible case is used as an example. The first communication apparatus may determine the length M of the time domain resource of the SL-PRS based on the identifier of the SL-PRS resource and the foregoing correspondence. As described above, the network device may send indication information #7 to the first communication apparatus, where the indication information #7 indicates N and the RE offset. Therefore, the first communication apparatus may learn of related information of the SL-PRS resource, and may further send the SL-PRS to the second communication apparatus on the SL-PRS resource.

For example, the first communication apparatus indicates the identifier of the SL-PRS resource to the second communication apparatus. The second communication apparatus may also determine the length M of the time domain resource of the SL-PRS based on the identifier of the SL-PRS resource and the foregoing correspondence. The network device may further indicate N and the RE offset to the second communication apparatus. Therefore, the second communication apparatus may learn of related information of the SL-PRS resource, and may further receive the SL-PRS on the SL-PRS resource. The network device indicates the identifier of the SL-PRS resource to the second communication apparatus in a similar way as that the first communication apparatus indicates the identifier of the SL-PRS resource to the second communication apparatus. Details are not described herein again.

For another example, the second possible case is used as an example. The first communication apparatus may determine the length M and the comb size N of the time domain resource of the SL-PRS based on the identifier of the SL-PRS resource and the foregoing correspondence. As described above, the network device may send indication information #7 to the first communication apparatus, where the indication information #7 indicates the RE offset. Therefore, the first communication apparatus may learn of related information of the SL-PRS resource, and may further send the SL-PRS to the second communication apparatus on the SL-PRS resource.

For example, the first communication apparatus indicates the identifier of the SL-PRS resource to the second communication apparatus. The second communication apparatus may also determine the length M and the comb size N of the time domain resource of the SL-PRS based on the identifier of the SL-PRS resource and the foregoing correspondence. The network device may further indicate the RE offset to the second communication apparatus. Therefore, the second communication apparatus may learn of related information of the SL-PRS resource, and may further receive the SL-PRS on the SL-PRS resource. The network device indicates the identifier of the SL-PRS resource to the second communication apparatus in a similar way. Details are not described herein again.

For another example, the third possible case is used as an example. The first communication apparatus may determine the length M, the comb size N, and the offset, that is, the RE offset, of the time domain resource of the SL-PRS based on the identifier of the SL-PRS resource and the foregoing correspondence. Therefore, the first communication apparatus may learn of related information of the SL-PRS resource, and may further send the SL-PRS to the second communication apparatus on the SL-PRS resource.

For example, the first communication apparatus indicates the identifier of the SL-PRS resource to the second communication apparatus. The second communication apparatus may also determine the length M, the comb size N, and the offset, that is, the RE offset, of the time domain resource of the SL-PRS based on the identifier of the SL-PRS resource and the foregoing correspondence. Therefore, the second communication apparatus may learn of related information of the SL-PRS resource, and may further receive the SL-PRS on the SL-PRS resource. The network device indicates the identifier of the SL-PRS resource to the second communication apparatus in a similar way. Details are not described herein again.

It may be understood that, in the foregoing embodiment, the SL-PRS resource is mentioned for a plurality of times, and represents a resource used for transmission of the SL-PRS.

It may also be understood that, in the foregoing embodiments, the SL-PRS is mainly used as an example for description. It may be understood that the SL-PRS may be replaced with another reference signal.

It may be further understood that, in the foregoing embodiments, the quantity of transmissions and the maximum quantity of reservations (or briefly referred to as the quantity of reservations) are mentioned for a plurality of times. The maximum quantity of reservations may also be referred to as a quantity of retransmissions. An SL-PRS is as an example, it is assumed that a quantity of transmissions of the SL-PRS is S, where S is an integer greater than 1 or equal to 1, and indicates that a sum of a quantity of initial transmissions and a quantity of retransmissions of the SL-PRS is S. Specifically, if S is 1, it indicates that the SL-PRS is transmitted once; or if S is greater than 1, it indicates that the SL-PRS is initially transmitted once and retransmitted for (S-1) times, in other words, a maximum quantity of reservations is (S-1). In an example, a communication apparatus (for example, the first communication apparatus and/or the second communication apparatus) may receive configuration information in a time domain unit (for example, a slot) in which initial transmission is performed, and the configuration information includes a maximum quantity of reservations. It may be understood that, during actual transmission, the maximum quantity of reservations indicated in the configuration information may be different from an actual quantity of retransmissions. For example, the actual quantity of retransmissions is less than the maximum quantity of reservations. This is not limited.

It may be further understood that the formulas used in embodiments of this application are merely examples for description and do not constitute a limitation on the protection scope of embodiments of this application. In a process of calculating the foregoing related parameters, calculation may be performed based on the foregoing formulas, calculation may be performed based on variations of the foregoing formulas, or calculation may be performed in another manner, to satisfy calculation results of the formulas.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that, in the foregoing method embodiments, the method and the operation implemented by the communication device may also be implemented by a component (for example, a chip or a circuit) of the communication device.

Corresponding to the methods provided in the foregoing method embodiments, embodiments of this application further provide a corresponding apparatus. The apparatus includes corresponding modules for performing the foregoing method embodiments. The module may be software, hardware, or a combination of software and hardware. It may be understood that the technical features described in the method embodiments are also applicable to the following apparatus embodiments.

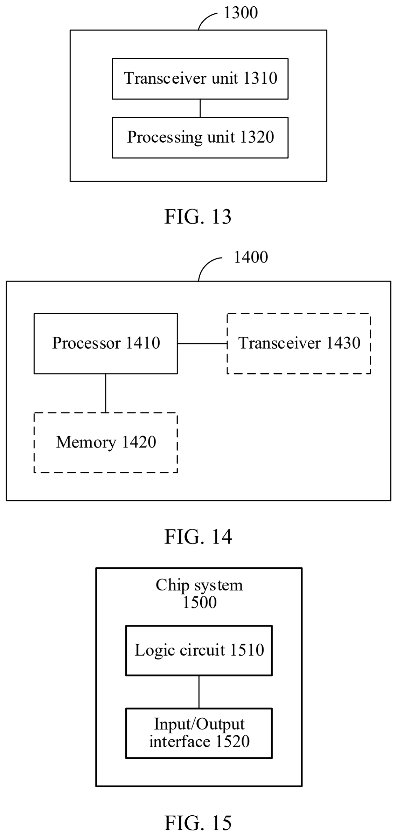

The following describes apparatuses in this application in detail with reference to FIG. 13 to FIG. 15. It should be understood that descriptions of apparatus embodiments correspond to descriptions of the method embodiments. Therefore, for content not described in detail, refer to the foregoing method embodiments. For brevity, details are not described herein again.

FIG. 13 is a block diagram of a communication apparatus 1300 according to an embodiment of this application. The apparatus 1300 includes a transceiver unit 1310 and a processing unit 1320. The transceiver unit 1310 may be configured to implement a corresponding communication function. The transceiver unit 1310 may also be referred to as a communication interface or a communication unit. The processing unit 1320 may be configured to perform data processing, for example, generate an identifier of a resource.

Optionally, the apparatus 1300 further includes a storage unit. The storage unit may be configured to store instructions and/or data. The processing unit 1320 may read the instructions and/or the data in the storage unit, to cause the apparatus to implement actions performed by the terminal apparatus in the foregoing method embodiments.

In a possible design, the apparatus 1300 may be the first communication apparatus in the foregoing embodiments, or may be a component (for example, a chip) of the first communication apparatus. The apparatus 1300 may implement the steps or procedures performed by the first communication apparatus in the foregoing method embodiments. The transceiver unit 1310 may be configured to perform receiving/sending-related operations of the first communication apparatus in the foregoing method embodiments. The processing unit 1320 may be configured to perform processing-related operations of the first communication apparatus in the foregoing method embodiments.

In a possible implementation, the processing unit 1320 is configured to obtain an identifier of a first resource, where the first resource is used for transmission of a sidelink positioning reference signal, and the identifier of the first resource is determined based on at least one of the following: a length of a time domain resource available for transmission of the sidelink positioning reference signal, a start position of a time domain resource used for transmission of the sidelink positioning reference signal, and a length of the time domain resource used for transmission of the sidelink positioning reference signal; and the transceiver unit 1310 is configured to send the sidelink positioning reference signal on the first resource.

In another possible implementation, the processing unit 1320 is configured to obtain a first resource, where the first resource is used for transmission of a sidelink positioning reference signal, the first resource includes T transmission resources, at least two of the T transmission resources are inconsecutive in time domain, and T is an integer greater than 1; and the transceiver unit 1310 is configured to send indication information, where the indication information indicates at least one transmission resource in the first resource, and the at least one transmission resource in the first resource is used for transmission of the sidelink positioning reference signal.

The apparatus 1300 may implement the steps or procedures performed by the first communication apparatus in the method embodiments according to embodiments of this application. The apparatus 1300 may include units configured to perform the methods performed by the first communication apparatus in embodiments shown in FIG. 7 to FIG. 12.

In another design, the apparatus 1300 may be the second communication apparatus in the foregoing embodiments, or may be a component (for example, a chip) of the second communication apparatus. The apparatus 1300 may implement the steps or procedures performed by the second communication apparatus in the foregoing method embodiments. The transceiver unit 1310 may be configured to perform receiving/sending-related operations of the second communication apparatus in the foregoing method embodiments. The processing unit 1320 may be configured to perform processing-related operations of the second communication apparatus in the foregoing method embodiments.

In a possible implementation, the transceiver unit 1310 is configured to receive a first resource or an identifier of the first resource; and the transceiver unit 1310 is further configured to receive a sidelink positioning reference signal on the first resource, where the identifier of the first resource is determined based on at least one of the following: a length of a time domain resource available for transmission of the sidelink positioning reference signal, a start position of a time domain resource used for transmission of the sidelink positioning reference signal, and a length of the time domain resource used for transmission of the sidelink positioning reference signal.

In another possible implementation, the transceiver unit 1310 is configured to receive indication information, where the indication information indicates at least one transmission resource in a first resource, the first resource is used for transmission of a sidelink positioning reference signal, the first resource includes T transmission resources, at least two of the T transmission resources are inconsecutive in time domain, and T is an integer greater than 1; and the transceiver unit 1310 is further configured to receive the sidelink positioning reference signal.

The apparatus 1300 may implement the steps or procedures performed by the second communication apparatus in the method embodiments according to embodiments of this application. The apparatus 1300 may include units configured to perform the methods performed by the second communication apparatus in embodiments shown in FIG. 7 to FIG. 12.

For more detailed descriptions of the apparatus 1300, refer to the related descriptions in the foregoing method embodiments. Details are not described herein again.

It should be understood that specific processes of performing the corresponding steps by the units are detailed in the foregoing method embodiments. For brevity, details are not described herein again.

It should be understood that the apparatus 1300 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1300 may be specifically the communication apparatus (for example, the first communication apparatus or the second communication apparatus) in the foregoing embodiments, and may be configured to perform the procedures and/or steps corresponding to the communication apparatus in the foregoing method embodiments. To avoid repetition, details are not described herein again.

The apparatus 1300 in each of the foregoing solutions has a function of implementing corresponding steps performed by the communication apparatus (for example, the first communication apparatus or the second communication apparatus) in the foregoing method. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving/sending operations and a related processing operation in the method embodiments.

In addition, the transceiver unit 1310 may alternatively be a transceiver circuit (for example, may include a receiver circuit and a transmitter circuit), and the processing unit may be a processing circuit.

It should be noted that the apparatus in FIG. 13 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

FIG. 14 is a block diagram of a communication apparatus 1400 according to an embodiment of this application. The apparatus 1400 includes a processor 1410, and the processor 1410 is coupled to a memory 1440. Optionally, the apparatus further includes the memory 1440, configured to store a computer program or instructions and/or data. The processor 1410 is configured to execute the computer program or the instructions stored in the memory 1440, or read the data stored in the memory 1440, to perform the methods in the foregoing method embodiments.

Optionally, there are one or more processors 1410.

Optionally, there are one or more memories 1440.

Optionally, the memory 1440 and the processor 1410 are integrated together or disposed separately.

Optionally, as shown in FIG. 14, the apparatus 1400 further includes a transceiver 1430. The transceiver 1430 is configured to receive a signal and/or send a signal. For example, the processor 1410 is configured to control the transceiver 1430 to receive a signal and/or send a signal.

In a solution, the apparatus 1400 is configured to implement the operations performed by the communication apparatus in the foregoing method embodiments.

For example, the processor 1410 is configured to execute the computer program or the instructions stored in the memory 1440, to implement related operations of the first communication apparatus or the second communication apparatus in the foregoing method embodiments.

In an implementation process, the steps of the foregoing methods may be implemented by using an integrated logic circuit of hardware in the processor 1410, or instructions in a form of software. The method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1440, and the processor 1410 reads information in the memory 1440 and completes the steps of the foregoing methods in combination with hardware of the processor. To avoid repetition, details are not described herein again.

It should be understood that, in embodiments of this application, the processor may be one or more integrated circuits, configured to execute a related program, to perform the method embodiments of this application.

The processor (for example, the processor 1410) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a special-purpose processor. For example, the processor 1410 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information about a device type.

The program in this application represents software in a broad sense. A non-limiting example of the software includes program code, a program, a subprogram, instructions, an instruction set, code, a code segment, a software module, an application, a software application, or the like. The program may be run in a processor and/or a computer. In this way, the apparatus can perform various functions and/or processes described in this application.

The memory (for example, the memory 1440) may store data required by the processor (for example, the processor 1410) during software execution. The memory may be implemented by using any suitable storage technology. For example, the memory may be any available storage medium that can be accessed by the processor and/or the computer. A non-limiting example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any memory of another appropriate type.

The memory (for example, the memory 1440) and the processor (for example, the processor 1410) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in a UE or another network node).

FIG. 15 is a block diagram of a chip system 1500 according to an embodiment of this application. The chip system 1500 (or may be referred to as a processing system) includes a logic circuit 1510 and an input/output interface (input/output interface) 1520.

The logic circuit 1510 may be a processing circuit in the chip system 1500. The logic circuit 1510 may be coupled and connected to a storage unit, and invoke instructions in the storage unit, so that the chip system 1500 can implement the methods and functions in embodiments of this application. The input/output interface 1520 may be an input/output circuit in the chip system 1500, and outputs information processed by the chip system 1500, or inputs to-be-processed data or signaling information to the chip system 1500 for processing.

In a solution, the chip system 1500 is configured to implement the operations performed by the communication apparatus in the foregoing method embodiments.

For example, the logic circuit 1510 is configured to implement processing-related operations performed by the first communication apparatus in the foregoing method embodiments, for example, processing-related operations performed by the first communication apparatus in the embodiment shown in FIG. 7. The input/output interface 1520 is configured to implement sending and/or receiving-related operations performed by the first communication apparatus in the foregoing method embodiments, for example, sending and/or receiving-related operations performed by the first communication apparatus in the embodiment shown in FIG. 7.

For example, the logic circuit 1510 is configured to implement processing-related operations performed by the second communication apparatus in the foregoing method embodiments, for example, processing-related operations performed by the second communication apparatus in the embodiment shown in FIG. 7. The input/output interface 1420 is configured to implement sending and/or receiving-related operations performed by the second communication apparatus in the foregoing method embodiments, for example, sending and/or receiving-related operations performed by the second communication apparatus in the embodiment shown in FIG. 7.

An embodiment of this application further provides a computer-readable storage medium. The computer-readable storage medium stores computer instructions used to implement the method performed by the communication apparatus (for example, the first communication apparatus or the second communication apparatus) in the foregoing method embodiments.

An embodiment of this application further provides a computer program product, including instructions. When the instructions are executed by a computer, the method performed by the communication apparatus (for example, the first communication apparatus or the second communication apparatus) in the foregoing method embodiments is implemented.

An embodiment of this application further provides a communication system. The communication system includes the first communication apparatus and the second communication apparatus in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiments are only examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    obtaining an identifier of a first resource, wherein the first resource is used for transmission of a sidelink positioning reference signal, and the identifier of the first resource is determined based on at least one of the following: a length of a time domain resource available for transmission of the sidelink positioning reference signal, a start position of a time domain resource used for transmission of the sidelink positioning reference signal, and a length of the time domain resource used for transmission of the sidelink positioning reference signal; and
    sending the sidelink positioning reference signal on the first resource.

2. The method according to claim 1, wherein obtaining the identifier of the first resource comprises:

   receiving first indication information, wherein the first indication information indicates the identifier of the first resource; or
   determining the identifier of the first resource.

3. The method according to claim 1 or 2, wherein the length of the time domain resource available for transmission of the sidelink positioning reference signal is determined based on at least one of the following:
a length of a time domain resource used for transmission of a physical sidelink shared channel PSSCH, a length of a time domain resource used for transmission of a physical sidelink control channel PSCCH, a length of a time domain resource used for transmission of a physical sidelink feedback channel PSFCH, and a length of a time domain resource used for transmission of a demodulation reference signal DMRS.

4. The method according to any one of claims 1 to 3, wherein the length of the time domain resource available for transmission of the sidelink positioning reference signal satisfies any one of the following:

$$Ma = l_d - l_{PSCCH} - X1;$$

$$Ma = l_d - l_{PSCCH} - l_{DMRS} - X2;$$

or

$$Ma = l_d - X3,$$

wherein
Ma represents the length of the time domain resource available for transmission of the sidelink positioning reference signal, $l_d$ represents the length of the time domain resource used for transmission of the PSSCH, $l_{PSCCH}$ represents the length of the time domain resource used for transmission of the PSCCH, $l_{DMRS}$ represents the length of the time domain resource used for transmission of the demodulation reference signal DMRS, and X1, X2, and X3 are constants.

5. The method according to claim 4, wherein

   a value of X1 is any one of the following: 0, 1, 2, or 3;
   a value of X2 is 0 or 1; and/or
   a value of X3 is 0 or 1.

6. The method according to any one of claims 1 to 5, wherein the method further comprises:

   receiving second indication information, wherein the second indication information indicates at least one of the following: the start position of the time domain resource used for transmission of the sidelink positioning reference signal and the length of the time domain resource used for transmission of the sidelink positioning reference signal;
   or
   determining at least one of the following: the start position of the time domain resource used for transmission of the sidelink positioning reference signal and the length of the time domain resource used for transmission of the sidelink positioning reference signal.

7. The method according to any one of claims 1 to 6, wherein the identifier of the first resource is obtained by encoding the length of the time domain resource available for transmission of the sidelink positioning reference signal.

8. The method according to claim 7, wherein the identifier of the first resource satisfies any one of the following:

$$n_{id} = S_{start};$$

$$n_{id} = S_{start} + Ma;$$

or

$$n_{id} = S_{start} + 2Ma - 1,$$

wherein

$n_{id}$ represents the identifier of the first resource, $S_{start}$ represents the start position of the time domain resource used for transmission of the sidelink positioning reference signal, and Ma represents the length of the time domain resource available for transmission of the sidelink positioning reference signal.

9. The method according to claim 7 or 8, wherein the first resource is further determined based on at least one of the following: a time domain resource used for transmission of a sidelink reference signal, a time domain resource used for transmission of sidelink feedback information, and a time domain resource used for transmission of a PSSCH.

10. The method according to claim 9, wherein obtaining the identifier of the first resource comprises:

obtaining identifiers of N resources by encoding the length of the time domain resource available for transmission of the sidelink positioning reference signal, wherein N is an integer greater than 1; and
determining the identifier of the first resource based on the identifiers of the N resources and a preset rule, wherein the preset rule indicates that the first resource is a continuous resource, and/or the first resource does not comprise at least one of the following: the time domain resource used for transmission of the sidelink reference signal, the time domain resource used for transmission of the sidelink feedback information, and the time domain resource used for transmission of the PSSCH.

11. The method according to any one of claims 1 to 6, wherein a value of the identifier of the first resource is W bits, the W bits comprise a first bit and a second bit, W is an integer greater than 1, and the identifier of the first resource satisfies any one of the following:

the first bit of the identifier of the first resource is related to the start position of the time domain resource used for transmission of the sidelink positioning reference signal, and the second bit of the identifier of the first resource is related to the length of the time domain resource used for transmission of the sidelink positioning reference signal;
the second bit of the identifier of the first resource is related to the start position of the time domain resource used for transmission of the sidelink positioning reference signal, and the first bit of the identifier of the first resource is related to the length of the time domain resource used for transmission of the sidelink positioning reference signal; or
the identifier of the first resource is obtained by jointly encoding the length of the time domain resource used for transmission of the sidelink positioning reference signal and the start position of the time domain resource used for transmission of the sidelink positioning reference signal.

12. The method according to any one of claims 1 to 11, wherein the method further comprises:
sending third indication information, wherein the third indication information indicates the first resource or the identifier of the first resource.

13. The method according to claim 12, wherein the third indication information comprises at least one of the following: the identifier of the first resource, a start position of the first resource in time domain, a length of the first resource in time domain, an end position of the first resource in time domain, an offset of the first resource in frequency domain, and a comb size of the first resource in frequency domain.

14. The method according to claim 13, wherein the first resource comprises a first transmission resource and a second transmission resource, the first transmission resource and the second transmission resource are inconsecutive in time domain, and the third indication information comprises the offset of the first resource in frequency domain, wherein
the offset of the first resource in frequency domain comprises an offset of the first transmission resource in frequency domain and/or an offset of the second transmission resource in frequency domain.

15. The method according to any one of claims 1 to 14, wherein the method further comprises:

receiving fourth indication information, wherein the fourth indication information indicates a second resource; and obtaining the identifier of the first resource comprises:

determining the first resource based on the second resource and an available resource, wherein a length of the first resource on a time domain resource is less than a length of the second resource on a time domain resource.

16. The method according to claim 15, wherein sending the sidelink positioning reference signal on the first resource comprises:

transmitting the sidelink positioning reference signal in a fully staggered manner based on the length of the first resource on the time domain resource; or

transmitting the sidelink positioning reference signal on the first resource in a partially staggered manner based on the length of the second resource on the time domain resource.

17. The method according to any one of claims 1 to 16, wherein the method further comprises:
sending reservation information in a first slot in which the first resource is located, wherein the reservation information indicates at least one second slot, the second slot is a slot in which a data packet is retransmitted, and the first slot and/or the second slot further comprise/comprises the second resource used for transmission of the sidelink positioning reference signal.

18. The method according to any one of claims 1 to 17, wherein the first resource overlaps a third resource, the third resource is used for transmission of a sidelink reference signal, and the method further comprises:
sending the sidelink reference signal on a resource that is in the third resource and that does not overlap the first resource.

19. The method according to any one of claims 1 to 17, wherein the first resource is a candidate resource in k candidate resources, k is an integer greater than 1, the first resource does not overlap a third resource, and the third resource is used for transmission of a sidelink reference signal.

20. The method according to claim 19, wherein obtaining the identifier of the first resource comprises:

receiving configuration information of the third resource and configuration information of the k candidate resources; and

determining the identifier of the first resource based on the configuration information of the third resource and the configuration information of the k candidate resources.

21. A communication method, comprising:

receiving, by a second communication apparatus, a first resource or an identifier of the first resource, wherein the identifier of the first resource is determined based on at least one of the following: a length of a time domain resource available for transmission of a sidelink positioning reference signal, a start position of a time domain resource used for transmission of the sidelink positioning reference signal, and a length of the time domain resource used for transmission of the sidelink positioning reference signal; and

receiving, by the second communication apparatus, the sidelink positioning reference signal on the first resource.

22. The method according to claim 21, wherein the method further comprises:
obtaining, by the second communication apparatus, positioning-related information based on the sidelink positioning reference signal.

23. The method according to claim 21 or 22, wherein the length of the time domain resource available for transmission of the sidelink positioning reference signal is determined based on at least one of the following:
a length of a time domain resource used for transmission of a physical sidelink shared channel PSSCH, a length of a time domain resource used for transmission of a physical sidelink control channel PSCCH, a length of a time domain resource used for transmission of a physical sidelink feedback channel PSFCH, and a length of a time domain resource used for transmission of a demodulation reference signal DMRS.

24. The method according to any one of claims 21 to 23, wherein the length of the time domain resource available for transmission of the sidelink positioning reference signal satisfies any one of the following:

$$Ma = l_d - l_{PSCCH} - X1;$$

$$Ma = l_d - l_{PSCCH} - l_{DMRS} - X2;$$

or

$$Ma = l_d - X3,$$

wherein
Ma represents the length of the time domain resource available for transmission of the sidelink positioning reference signal, $l_d$ represents the length of the time domain resource used for transmission of the PSSCH, $l_{PSCCH}$ represents the length of the time domain resource used for transmission of the PSCCH, $l_{DMRS}$ represents the length of the time domain resource used for transmission of the demodulation reference signal DMRS, and X1, X2, and X3 are constants.

25. The method according to claim 24, wherein

a value of X1 is any one of the following: 0, 1, 2, or 3;
a value of X2 is 0 or 1; and/or
a value of X3 is 0 or 1.

26. The method according to any one of claims 21 to 25, wherein the method further comprises:
receiving, by the second communication apparatus, second indication information, wherein the second indication information indicates at least one of the following: the start position of the time domain resource used for transmission of the sidelink positioning reference signal and the length of the time domain resource used for transmission of the sidelink positioning reference signal.

27. The method according to any one of claims 21 to 26, wherein the identifier of the first resource is obtained by encoding the length of the time domain resource available for transmission of the sidelink positioning reference signal.

28. The method according to claim 27, wherein the identifier of the first resource satisfies any one of the following:

$$n_{id} = S_{start};$$

$$n_{id} = S_{start} + Ma;$$

or

$$n_{id} = S_{start} + 2Ma - 1,$$

wherein
$n_{id}$ represents the identifier of the first resource, $S_{start}$ represents the start position of the time domain resource used for transmission of the sidelink positioning reference signal, and Ma represents the length of the time domain resource available for transmission of the sidelink positioning reference signal.

29. The method according to any one of claims 21 to 26, wherein a value of the identifier of the first resource is W bits, the W bits comprise a first bit and a second bit, W is an integer greater than 1, and the identifier of the first resource satisfies any one of the following:

the first bit of the identifier of the first resource is related to the start position of the time domain resource used for transmission of the sidelink positioning reference signal, and the second bit of the identifier of the first resource is related to the length of the time domain resource used for transmission of the sidelink positioning reference signal;
the second bit of the identifier of the first resource is related to the start position of the time domain resource used for transmission of the sidelink positioning reference signal, and the first bit of the identifier of the first resource is related to the length of the time domain resource used for transmission of the sidelink positioning reference signal;

or

the identifier of the first resource is obtained by jointly encoding the length of the time domain resource used for transmission of the sidelink positioning reference signal and the start position of the time domain resource used for transmission of the sidelink positioning reference signal.

30. The method according to any one of claims 21 to 29, wherein receiving, by the second communication apparatus, the identifier of the first resource comprises:

receiving, by the second communication apparatus, third indication information, wherein the third indication information indicates the identifier of the first resource.

31. The method according to claim 30, wherein the third indication information comprises at least one of the following: the identifier of the first resource, a start position of the first resource in time domain, a length of the first resource in time domain, an end position of the first resource in time domain, an offset of the first resource in frequency domain, and a comb size of the first resource in frequency domain.

32. The method according to claim 31, wherein the first resource comprises a first transmission resource and a second transmission resource, the first transmission resource and the second transmission resource are inconsecutive in time domain, and the third indication information comprises the offset of the first resource in frequency domain, wherein

the offset of the first resource in frequency domain comprises an offset of the first transmission resource in frequency domain and/or an offset of the second transmission resource in frequency domain.

33. The method according to any one of claims 21 to 32, wherein the first resource overlaps a third resource, the third resource is used for transmission of a sidelink reference signal, and the method further comprises:

receiving the sidelink reference signal on a resource that is in the third resource and that does not overlap the first resource.

34. The method according to any one of claims 21 to 32, wherein the first resource is a candidate resource in k candidate resources, k is an integer greater than 1, the first resource does not overlap the third resource, and the third resource is used for transmission of a sidelink reference signal.

35. A communication apparatus, comprising a module or unit configured to perform the method according to any one of claims 1 to 34.

36. A communication apparatus, comprising a processor, wherein the processor is configured to execute a computer program or instructions stored in a memory, to cause the apparatus to perform the method according to any one of claims 1 to 34.

37. The apparatus according to claim 36, wherein the apparatus further comprises the memory and/or a communication interface, and the communication interface is coupled to the processor; and

the communication interface is configured to: input and/or output information.

38. The apparatus according to claim 36 or 37, wherein the apparatus is a chip.

39. A computer-readable storage medium, wherein the computer-readable storage medium stores a computer program or instructions; and when the computer program is run or the instructions are run on a communication apparatus, the communication apparatus is caused to perform the method according to any one of claims 1 to 34.

40. A computer program product, wherein the computer program product comprises a computer program or instructions for performing the method according to any one of claims 1 to 34.

100

110    120    130

FIG. 1

200

210    220    230

FIG. 2

Comb-2

Comb-4

Comb-6

Comb-12

FIG. 3

FIG. 4

FIG. 5

One slot, and $l_d$=13

(1)

One slot, and $l_d$=13

(3)

Half slot, and $l_d$=6

(2)

Half slot, and $l_d$=6

(4)

AGC  PSCCH  G

DMRS

PSSCH

$l_d = 10$

| AGC | | | | | | | | | | G |

PSCCH

0　1　2　3　4　5　6　7　8　9　10

FIG. 6

700

First communication apparatus

Second communication apparatus

701: Obtain an identifier of a first resource, where the first resource is used for transmission of a reference signal, and the identifier of the first resource is determined based on at least one of the following: a length of a time domain resource available for transmission of the reference signal, a start position of a time domain resource used for transmission of the reference signal, and a length of a time domain resource used for transmission of the reference signal

702: Send the reference signal on the first resource

FIG. 7

FIG. 8

FIG. 9

(1)      (2)

FIG. 10

FIG. 11

FIG. 12

1300

Transceiver unit 1310

Processing unit 1320

FIG. 13

1400

Processor 1410

Transceiver 1430

Memory 1420

FIG. 14

Chip system
1500

Logic circuit 1510

Input/Output
interface 1520

FIG. 15

## INTERNATIONAL SEARCH REPORT

| International application No. |
|---|
| **PCT/CN2024/103501** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT: ENTXTC; WPABS, WPABSC, IEEE, 3GPP, CJFD: 侧链, 侧行, 直连, 定位, 参考信号, 资源, 长度, 起始位置, sidelink, location, reference signal, resource, length, starting point, LS

**C. DOCUMENTS CONSIDERED TO BE RELEVANT**

| Category* | Citation of document, with indication, where appropriate, of the relevant passages | Relevant to claim No. |
|---|---|---|
| X | CN 115706627 A (CICT CONNECTED AND INTELLIGENT TECHNOLOGIES CO., LTD.) 17 February 2023 (2023-02-17) description, paragraphs [0005]-[0260] | 1-40 |
| X | CN 115866741 A (VIVO MOBILE COMMUNICATION CO., LTD.) 28 March 2023 (2023-03-28) description, paragraphs [0026]-[0180] | 1-40 |
| A | CN 114339987 A (SPREADTRUM COMMUNICATIONS (SHANGHAI) CO., LTD.) 12 April 2022 (2022-04-12) entire document | 1-40 |
| A | CN 116097798 A (BEIJING XIAOMI MOBILE SOFTWARE CO., LTD.) 09 May 2023 (2023-05-09) entire document | 1-40 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 October 2024** | **24 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/103501** |

| Patent document cited in search report | | | Publication date (day/month/year) | Patent family member(s) | | | Publication date (day/month/year) |
| --- | --- | --- | --- | --- | --- | --- | --- |
| CN | 115706627 | A | 17 February 2023 | WO | 2023011347 | A1 | 09 February 2023 |
| | | | | KR | 20240032066 | A | 08 March 2024 |
| | | | | EP | 4358455 | A1 | 24 April 2024 |
| | | | | US | 2024179667 | A1 | 30 May 2024 |
| | | | | JP | 2024525971 | W | 12 July 2024 |
| CN | 115866741 | A | 28 March 2023 | WO | 2023046053 | A1 | 30 March 2023 |
| | | | | US | 2024235764 | A1 | 11 July 2024 |
| | | | | EP | 4408098 | A1 | 31 July 2024 |
| CN | 114339987 | A | 12 April 2022 | WO | 2022068836 | A1 | 07 April 2022 |
| | | | | CN | 114339987 | B | 24 October 2023 |
| CN | 116097798 | A | 09 May 2023 | WO | 2024098431 | A1 | 16 May 2024 |

Form PCT/ISA/210 (patent family annex) (July 2022)

**REFERENCES CITED IN THE DESCRIPTION**

**Patent documents cited in the description**

- CN 202310816526
- CN 202310986421

- CN 202311258445